# EUROPEAN PATENT APPLICATION

(11) **EP 4 848 061 A1**
(43) Date of publication of application: **02.12.2026**
(21) Application number: 25914918.5
(22) Date of filing: 11.11.2025
(51) Int. Cl.: G06F 3/0489

(54) **KEY INTERACTION METHOD AND ELECTRONIC DEVICE**

(30) Priority: 30.12.2024 CN 202411987936
(71) Applicant: Huawei Technologies Co., Ltd., Shenzhen, Guangdong 518129 (CN)
(72) Inventor: HUANG, Yadong, Shenzhen, Guangdong 518129 (CN); JIN, Junye, Shenzhen, Guangdong 518129 (CN); LIU, Wen, Shenzhen, Guangdong 518129 (CN)
(74) Representative: Goddar, Heinz J.
(86) International application number: PCT/CN2025/134169
(87) International publication number: WO 2026/144564

(57) **Abstract**

This application provides a button interaction method and an electronic device. The electronic device may include a button module including a non-array sensor. The non-array sensor may determine, by detecting a first signal, whether an operation performed by a user on the button module is a swipe operation. Based on this method for detecting a swipe operation, the non-array sensor occupies small space in the button module, which helps implement miniaturization of the button module. In addition, the button module can also detect and identify a tap operation, and the like of the user, and the electronic device can make different types of responses based on a result of identifying an operation type of the user by the button module, thereby enriching user experience.

## Description

This application claims priority to Chinese Patent Application No. 202411987936.8, filed with the China National Intellectual Property Administration on December 30, 2024 and entitled "BUTTON INTERACTION METHOD AND ELECTRONIC DEVICE", which is incorporated herein by reference in its entirety.

### TECHNICAL FIELD

This application relates to the field of terminal device software, and specifically, to a button interaction method and an electronic device.

### BACKGROUND

An electronic device like a mobile phone, a tablet computer, a mobile phone, or a headset may include a touch button, a mechanical button, and the like. When a user presses or swipes these buttons, the electronic device may make a corresponding response.

When more functions are integrated into a button, it is necessary to provide a button interaction manner, to support miniaturization of the button and miniaturization of an electronic device including the button while ensuring ease of operation.

### SUMMARY

This application provides a button interaction method and an electronic device. A button module of the electronic device may detect a first signal through an internal non-array sensor. The first signal can be used to determine whether an operation of a user is a swipe operation. When it is determined that the operation is a swipe operation, the electronic device may make a response corresponding to the swipe operation. In comparison with an array sensor, the button interaction method provided in this application helps reduce footprint of the button module, and contributes to controling an overall size of the electronic device.

According to a first aspect, a button interaction method is provided, applied to an electronic device, where the electronic device includes a button module, the button module includes a first sensor including one first sensing element, and the method includes: accepting a first operation performed on the button module; detecting a first signal through the first sensing element; determining, based on the first signal, that the first operation is a swipe operation; and performing a response operation, where the response operation corresponds to the swipe operation.

In some scenarios, the first sensor including one first sensing element may be considered as a non-array sensor. The array sensor may include a plurality of sensing elements inside. These sensing elements may be arranged in an array. The array sensor may detect signals at a plurality of different positions through these sensing elements. The first sensor may detect a signal at a same position through one sensing element included in the first sensor.

In a possible implementation, the first sensor may be an active sensor or a passive sensor. When the first sensor is an active sensor, the first signal may be a signal that is transmitted by the first sensor and reflected by a measured object. When the first sensor is a passive sensor, the first signal may be a signal that is sent by the measured object or a signal caused by the measured object.

It may be understood that the electronic device may also identify, based on a signal detected through the first sensor, an operation of tapping the button module by the user.

For example, the first signal herein may be a signal Sg2 or a signal Sg3 described below, or the first signal may be a signal Sga or a signal Sgc described below. This example is also applicable to the following solutions related to the first signal.

In an array sensor including a plurality of sensing elements, a spacing is provided between the sensing elements. This type of sensor occupies a large area in a plane in which the sensing elements are arranged. The first sensor in the foregoing solution includes one first sensing element, and does not involve a plurality of sensing elements or a spacing between the sensing elements. A structure of this type of sensor is compact. The button module including this type of sensor has a smaller volume, which helps implement miniaturization of the electronic device.

With reference to the first aspect, in some implementations of the first aspect, determining, based on the first signal, that the first operation is the swipe operation includes: determining, based on reference strength of the first signal, measured strength of the first signal, and a change in the measured strength of the first signal, that the first operation is the swipe operation, where the reference strength is strength of the first signal when a user does not operate the button module.

In a possible implementation, the change in the measured strength of the first signal may be understood as a change in the measured strength of the first signal with time, or a relationship between the measured strength of the first signal and time.

In a possible implementation, the first sensor may be an active sensor. In this case, the reference strength of the first signal may be strength of the signal (for example, an electromagnetic wave or a sound wave) transmitted by the first sensor. Alternatively, the first sensor may be a passive sensor. In this case, the reference strength of the first signal may be strength of the signal when no signal from the measured object is received.

In a possible implementation, the reference strength of the first signal may be a measured value of the first signal when the user does not operate the button module, or the reference strength of the first signal may be a default value, where the default value may be included in hardware information of the device when the electronic device is delivered from a factory.

In a possible implementation, the measured strength of the first signal may be strength that is of the first signal at a determined position and that is detected by the first sensing element, and a change in the measured strength of the first signal may include a change of the strength of the first signal at the determined position in a swipe operation process.

In a possible implementation, the swipe operation includes a swipe operation in a first direction and a swipe operation in a second direction. Correspondingly, the change in the measured strength of the first signal includes a first change and a second change. In other words, the electronic device may identify, based on the reference strength of the first signal, the measured strength of the first signal, and the first change, a swipe operation of the user in the first direction, and the electronic device may also identify, based on the reference strength of the first signal, the measured strength of the first signal, and the second change, a swipe operation of the user in the second direction.

In comparison with a manner of identifying a swipe operation of a user by detecting signal distribution through an array sensor, in this technical solution, a swipe operation of a user is identified by detecting a strength change of a signal at a same position through a non-array sensor. This reduces, to a specific extent, a quantity of signals that need to be collected and processed by the electronic device in a process of identifying a user operation, shortens, to a specific extent, time for processing the signal by the electronic device, improves efficiency of identifying the user operation by the electronic device, and shortens time for the device to respond to the user operation.

With reference to the first aspect, in some implementations of the first aspect, the first sensing element includes a sending module and a receiving module, the sending module and the receiving module are disposed separately, the sending module is configured to send a reference signal, the receiving module is configured to receive the first signal, and the reference signal corresponds to the first signal.

In some scenarios, the first sensor may be considered as an active sensor.

In some examples, the sending module and the receiving module of the first sensing element may be far away from each other.

In a possible implementation, a size of a contact surface of the button module in a third direction is long, and a size of the contact surface of the button module in a fourth direction is short. The sending module and the receiving module of the first sensing element may be disposed in the third direction, and are close to a periphery of the contact surface of the button module.

In a possible implementation, the first sensor may be a PPG sensor, the sending module may be a light source (for example, a light-emitting diode or a vertical-cavity surface-emitting laser) of the PPG sensor, and the receiving module may be a photodiode of the PPG sensor.

In a possible implementation, the first signal may be a signal received by the receiving module after the reference signal is reflected by the measured object.

In this technical solution, the sending module and the receiving module of the first sensor are separately disposed. In one aspect, this helps efficiently use internal space of the button module. In another aspect, based on the sending module and the receiving module that are separately disposed, for a swipe operation of swiping from a position close to the sending module to a position close to the receiving module and a swipe operation of swiping from a position close to the receiving module to a position close to the sending module, strength changes of the first signal detected by the first sensor in the two swipe operations may be different. In other words, this manner of disposing the sending module and the receiving module separately helps the electronic device identify swipe operations in different directions.

With reference to the first aspect, in some implementations of the first aspect, determining, based on the first signal, that the first operation is the swipe operation includes: determining, based on a position of the sending module, a position of the receiving module, and the first signal, that the first operation is the swipe operation.

In a possible implementation, the electronic device may determine, based on the position of the sending module, the position of the receiving module, the reference strength of the first signal, the measured strength of the first signal, and the strength change in the measured strength of the first signal, that the first operation is a swipe operation.

In a possible implementation, the electronic device may determine, based on the position of the sending module, the position of the receiving module, and the first signal, that the first operation is an operation of swiping in the first direction or an operation of swiping in the second direction, where the first direction and the second direction may be two opposite directions.

In this technical solution, the swipe operation is identified based on the position of the sending module, the position of the receiving module, and the first signal. The position of the sending module and the position of the receiving module may be considered as static information (information that does not change with time), and the first signal may be considered as dynamic information (information that may change with time). In comparison with a manner in which the array sensor identifies a swipe operation based on signals at a plurality of different positions, and the signals at different positions are all dynamic information, in this technical solution, less dynamic information needs to be processed in identifying the swipe operation, and this helps improve efficiency of identifying the swipe operation by the electronic device.

With reference to the first aspect, in some implementations of the first aspect, the button module further includes a second sensor, and determining, based on the first signal, that the first operation is the swipe operation includes: determining, based on the second signal and the first signal, that the first operation is the swipe operation, where the second signal is detected through the second sensor, and the second signal and the first signal are signals of different types.

In a possible implementation, the first signal is one of the following: a pressure signal, an optical signal, a capacitance signal, an elastic wave signal, an ultrasonic signal, a millimeter wave signal, electromagnetic wave signals (such as a Bluetooth signal, a SparkLink signal, an ultra-wideband signal, and a near field communication signal) in different frequency bands, and the like, and the second signal is another signal of these signals that is different from the first signal.

In a possible implementation, the second sensor may include one second sensing element.

In some scenarios, the second sensor including one second sensing element may be considered as a non-array sensor. The second sensor has a small volume, and occupies small space in the button module.

In another possible implementation, the second sensor may be an array sensor.

In a possible implementation, the second sensor and the first sensor may be stacked, or the first sensor and the second sensor may be stacked in a direction perpendicular to the contact surface of the button module.

In a possible implementation, the first sensor may be a non-array PPG sensor, and the second sensor may be a non-array pressure sensor. Alternatively, the first sensor may be a non-array pressure sensor, and the second sensor may be a non-array PPG sensor.

For example, the second signal herein may be a signal Sg2 or a signal Sg3 described below, or the second signal may be a signal Sga or a signal Sgc described below. This example is also applicable to the following solutions related to the second signal.

For example, the first signal described above may be a signal Sg2 described below, and the second signal may be a signal Sg3 described below. Alternatively, the first signal may be a signal Sg3 described below, and the second signal may be a signal Sg2 described below.

For example, the first signal described above may be a signal Sga described below, and the second signal may be a signal Sgc described below. Alternatively, the first signal may be a signal Sgc described below, and the second signal may be a signal Sga described below.

The foregoing examples are also applicable to the following solutions related to the first signal and the second signal.

In this technical solution, swipe operations of the user are identified based on two different types of signals. In comparison with a method of identifying a swipe operation based on only one type of signal, a dimension is added to identify a user operation. In addition, there is a low probability that different types of signals interfere with each other. Implementation of this technical solution helps improve accuracy and efficiency of identifying the swipe operation of the user by the electronic device. In addition, different types of signals correspond to different types of sensors. Compared with a plurality of sensors of a same type, different types of sensors are more likely to cooperate with each other. This helps properly arrange different electronic components in the button module, helps compactly arrange the foregoing different electronic components, and helps implement miniaturization of the button module.

With reference to the first aspect, in some implementations of the first aspect, determining, based on the second signal and the first signal, that the first operation is the swipe operation includes: when the measured strength of the first signal first increases and then decreases and measured strength of the second signal first increases and then decreases within first duration, determining that the first operation is the swipe operation.

In a possible implementation, the first duration herein may be a period of time or all time during which the user operates the button module.

In a possible implementation, the first duration is greater than or equal to a first duration threshold, and is less than or equal to a second duration threshold.

In a possible implementation, within the first duration, the measured strength of the first signal first increases and then decreases in a first change manner, and the strength of the second signal first increases and then decreases in a second change manner. In this case, the electronic device may determine that the first operation is the swipe operation in the first direction. Alternatively, the measured strength of the first signal first increases and then decreases in a third change manner, and the strength of the second signal first increases and then decreases in a fourth change manner. In this case, the electronic device may determine that the first operation is the swipe operation in the second direction, where the first direction and the second direction are two opposite directions.

This technical solution specifically provides a method for identifying a swipe operation based on the change in the measured strength of the first signal and the change in the measured strength of the second signal, which facilitates implementation of this technical solution. In addition, a value range of the first duration affects accuracy of identifying a user operation. When the first duration is excessively short, the sensor collects an excessively small quantity of signals, and the accuracy of identifying a user operation is low. When the first duration is excessively long, the sensor collects an excessively large quantity of signals, and a quantity of signals that need to be processed is large, which is not conducive to improving efficiency of identifying a user operation by the device.

With reference to the first aspect, in some implementations of the first aspect, the button module further includes a third sensor, the third sensor includes a plurality of electrodes, one electrode of the third sensor is located on a contact surface of the button module, and the method further includes: detecting an electrocardiosignal and/or a bioimpedance signal through the third sensor; and when the electrocardiosignal meets a first preset requirement and/or the bioimpedance signal meets a second preset requirement, determining that the first operation is detected.

In some scenarios, determining that the first operation is detected in this technical solution may also be understood as detecting that the button module is not mis-operated.

In a possible implementation, the third sensor may be an electrocardiography sensor and/or a bioimpedance sensor.

In a possible implementation, the third sensor may be further configured to detect a physiological signal like an electrocardiosignal of the user.

In a possible implementation, the first preset requirement may be that a heart rate of the user can be identified, and the second preset requirement may be that bioimpedance is greater than or equal to an impedance threshold.

In a possible implementation, before the first signal is detected, the electronic device may detect an electrocardiosignal and/or a bioimpedance signal through the third sensor, to identify whether there is a real user operation, or identify whether the button module is accidentally touched. When it is determined, based on a detection result of the third sensor, that there is a real user operation, the electronic device may identify the user operation through the first sensor.

In this technical solution, an electrode of the third sensor configured to identify a real operation of the user is disposed on the contact surface of the button module. On the basis that functions of the button module are enriched, the contact surface of the button module is properly used, and a volume occupied by the third sensor in the button module is reduced. In addition, before a user operation type is identified, whether the button module is accidentally touched is first identified. This can reduce, to a specific extent, power consumption waste caused by a process (including signal collection, signal processing, and the like) of frequently identifying a user operation type by the button module, and also help reduce a probability that the button module is accidentally touched.

With reference to the first aspect, in some implementations of the first aspect, the button module includes a first function mode and a second function mode, the first function mode is used to detect the swipe operation, the second function mode is used to detect a user operation different from the swipe operation, and the method further includes: accepting a first switching operation; and switching the button module from the first function mode to the second function mode; and/or accepting a second switching operation; and switching the button module from the second function mode to the first function mode.

In some scenarios, the first function mode may be referred to as a crown mode, and the second function mode may be referred to as a single-button mode.

In a possible implementation, the electronic device may identify the first switching operation and the second switching operation through a screen component, or in other words, the first switching operation and the second switching operation may be operations performed on the screen component, for example, an operation of selecting a function option through the screen component.

In a possible implementation, the electronic device may identify the first switching operation and the second switching operation through a motion sensor, or in other words, the first switching operation and the second switching operation may be operations performed on the motion sensor, for example, a gesture operation.

In a possible implementation, the electronic device may identify the first switching operation and the second switching operation through the button module, or in other words, the first switching operation and the second switching operation may be operations performed on the button module, for example, an operation of double-tapping the button module.

With reference to the first aspect, in some implementations of the first aspect, the first function mode is further used to detect a first-type tap operation, the second function mode is used to detect a second-type tap operation, and the first-type tap operation is different from the second-type tap operation.

In a possible implementation, the first-type tap operation may be a light tap operation, for example, a light short tap operation or a light touch and hold operation; and the second-type tap operation may be a heavy tap operation, for example, a heavy short tap operation or a heavy touch and hold operation.

In a possible implementation, the first-type tap operation may be a short tap operation, for example, a light short tap operation or a heavy short tap operation; and the second-type tap operation may be a touch and hold operation, for example, a light touch and hold operation or a heavy touch and hold operation.

The button module may have a plurality of function modes, and in different function modes, the button module may implement different interaction functions. This technical solution provides a method for switching a function mode of the button module, to help simplify an operation method of the button module, help improve efficiency of inputting information by the user to the electronic device through the button module, and enhance user experience.

With reference to the first aspect, in some implementations of the first aspect, the electronic device further includes a knob and/or a first button, the first button is different from the button module, and the method further includes: when the button module is swiped to implement a first function, setting rotation of the knob to implement a second function; and/or when the button module is swiped to implement the first function, setting swiping of the first button to implement the second function, where the first function is different from the second function.

The first button may be a button that can identify a swipe operation.

In a possible implementation, a structure of the first button may be the same as that of the button module. In other words, the electronic device may include a first button module and a second button module. The first button module may be the button module in the foregoing technical solution, and the second button module may be the first button in the foregoing technical solution.

In a possible implementation, a structure of the first button may be different from that of the button module. For example, the first button may include an array sensor (like a pressure sensor array, a capacitive sensor array, or a PPG sensor array).

In a possible implementation, the first function may be a left/right page flip function, and the second function may be an up/down page flip function. Alternatively, the first function may be an up/down page flip function, and the second function may be a left/right page flip function.

When the electronic device includes a plurality of buttons or knobs that can identify a swipe operation of the user, an operation of swiping the button and an operation of rotating the knob may be used to implement different functions. When the user sets one of the components to implement a function, the electronic device may set another component to implement another function. Implementation of the technical solution helps simplify an operation of setting functions of a plurality of components on the electronic device, and helps enhance user experience. In addition, the user may set a same component to implement different functions, to enrich personalized experience of the user.

With reference to the first aspect, in some implementations of the first aspect, the method further includes: accepting a second operation performed on the button module, where the second operation includes the swipe operation; and performing one or more of the following: displaying a target interface; playing a target audio; and vibrating a motor.

In this technical solution, the electronic device may respond to an operation performed by the user on the button module in one or more of a plurality of manners such as vision, hearing, and touch, to enhance interaction experience between the user and the electronic device.

With reference to the first aspect, in some implementations of the first aspect, the second operation includes a press action and a release action, and vibrating the motor includes: vibrating the motor in a first manner in response to the press action; and/or vibrating the motor in a second manner in response to the release action. The first manner may be the same as or different from the second manner.

In a possible implementation, the second operation may be a swipe operation.

With reference to the first aspect, in some implementations of the first aspect, the second operation further includes a first action, the first action is after the press action and before the release action, the first action is different from the press action or the release action, and vibrating the motor further includes: vibrating the motor in a third manner in response to the first action.

The third manner may be the same as or different from the first manner, and the third manner may be the same as or different from the second manner. This is not limited in this application.

It may be understood that, in a possible implementation, when the second operation is a swipe operation, the first action may be an action of swiping a finger on the button module. Therefore, in this solution, each action in an operation can be separately fed back, so that the user can clearly perceive a device response to the current action. It may be understood that when the first manner, the second manner, and the third manner are different from each other, user perception is more obvious.

With reference to the first aspect, in some implementations of the first aspect, the first manner includes at least one of the following: a first vibration waveform, first vibration duration, first vibration intensity, and a first vibration interval, and the second manner includes at least one of the following: a second vibration waveform, second vibration duration, second vibration intensity, and a second vibration interval.

In some scenarios, the vibration waveform may be understood as a relationship between vibration intensity and time, or the vibration waveform may be understood as a change manner of vibration intensity.

In this technical solution, the electronic device may simulate, through a motor, an actual operation performed by the user on the button module, and the user can receive more real tactile feedback when operating the button module, thereby improving user experience.

With reference to the first aspect, in some implementations of the first aspect, playing the target audio includes: playing the target audio in a fourth manner, where the fourth manner is determined based on at least one of an operation force, operation time, and an operation quantity of the second operation.

It may be understood that, in a possible implementation, playing the target audio may be similar to a solution of vibrating the motor, and instant response and playing are performed with each action of the second operation, to provide feedback to the user. In another possible implementation, playing the target audio is triggered based on the second operation after the second operation ends. In other words, in this implementation, playing the target audio is used as a trigger result of the second operation.

With reference to the first aspect, in some implementations of the first aspect, the fourth manner includes at least one of the following: first loudness, first play duration, and a first waveform, where the first loudness corresponds to the operation force, the first play duration corresponds to the operation time, and the first waveform corresponds to the operation quantity.

In a possible implementation, the second operation may be an operation of tapping the button module.

A tapping operation is used as an example. Operation feedback is provided for a part of operations performed on the button module through vibrating the motor, which is not conducive to user perception. In this case, playing an audio to provide feedback is beneficial to user perception, and can enhance user interaction experience. In addition, an audio is played by simulating an actual operation of the user, and the user can receive more real auditory feedback when operating the button module, which helps enhance user experience.

With reference to the first aspect, in some implementations of the first aspect, detecting the first signal through the first sensing element includes: detecting the first signal at a first frequency through the first sensing element; and when strength of the first signal is greater than or equal to a strength threshold, detecting the first signal at a second frequency through the first sensing element, where the second frequency is higher than the first frequency.

When the first signal is detected at the first frequency, a frequency at which the first sensor collects a signal is low, and power consumption of the first sensor is low. In some scenarios, this mode may be referred to as a low power consumption mode. When a second signal is detected at the second frequency, the first sensor collects a signal at a high frequency, and can quickly respond to an operation of the user. In some scenarios, this mode may be referred to as a high-performance mode.

In a possible implementation, the electronic device may detect the first signal at the first frequency when the user uses the electronic device at a low frequency, and detect the first signal at the second frequency when the user uses the electronic device at a high frequency.

In a possible implementation, the electronic device may detect the first signal at the first frequency when the electronic device is low in power, and detect the first signal at the second frequency when the electronic device is high in power.

The button module may detect an operation of the user at different frequencies, so that applicability of the button module in different application scenarios is improved, and user experience in different application scenarios is enhanced.

In a possible implementation, the first sensor further includes a reporting module, and the method further includes: sending first information through the reporting module, where the first information indicates one or more of the following: whether the measured strength of the first signal is greater than or equal to the strength threshold; duration in which the measured strength of the first signal is greater than or equal to the strength threshold; and a quantity of times that the measured strength of the first signal is greater than or equal to the strength threshold; and/or sending second information through the reporting module, where the second information includes the measured strength of the first signal.

In some scenarios, an interrupt event may be triggered when the measured strength of the first signal is greater than or equal to the strength threshold. Therefore, the foregoing technical solution may also be understood as that the first information may indicate whether an interrupt event occurs, duration of the interrupt event, and a quantity of occurrences of the interrupt event.

When the reporting module reports information related to the interrupt event, the reporting module performs the reporting operation for a smaller quantity of times, and power consumption caused by the reporting operation is lower. When the reporting module reports related information of the measured strength of the first signal, the reporting module performs the reporting operation more frequently, and the electronic device can identify an operation of the user in time and respond to the operation.

With reference to the first aspect, in some implementations of the first aspect, the method further includes: accepting a third operation performed on the button module; monitoring physiological data of the user, where the physiological data includes one or more of the following: blood pressure, blood glucose, a blood oxygen content, a heart rate, uric acid, emotional pressure, a body temperature, and a respiratory rate; and displaying a first interface, where the first interface includes a monitoring result of the physiological data.

In a possible implementation, the third operation may be an operation of continuously subtly tapping the contact surface of the button module.

In a possible implementation, when accepting the third operation performed on the button module for the first time, the electronic device may detect the physiological data of the user; and when accepting the third operation performed on the button module for the second time, the electronic device may display the first interface.

With reference to the first aspect, in some implementations of the first aspect, the method further includes: accepting a fourth operation performed on the button module; and displaying a second interface, where the second interface includes a screenshot of the electronic device.

In a possible implementation, the fourth operation may be an operation of double-tapping the button module.

In this technical solution, the electronic device may respond to a specific operation of the user, thereby helping enrich personalized experience of the user.

For detailed explanations and descriptions of beneficial effects in the following technical solutions, refer to related content in the first aspect. Details are not described below again.

According to a second aspect, a button interaction apparatus is provided, where the apparatus includes a button module, the button module includes a first sensor including one first sensing element, and the apparatus further includes an obtaining module and a processing module. The obtaining module is configured to: accept a first operation performed on the button module; and detect a first signal through the first sensing element. The processing module is configured to: determine, based on the first signal, that the first operation is a swipe operation; and perform a response operation, where the response operation corresponds to the swipe operation.

With reference to the second aspect, in some implementations of the second aspect, the processing module is specifically configured to determine, based on reference strength of the first signal, measured strength of the first signal, and a change in the measured strength of the first signal, that the first operation is the swipe operation, where the reference strength is strength of the first signal when a user does not operate the button module.

With reference to the second aspect, in some implementations of the second aspect, the first sensing element includes a sending module and a receiving module, the sending module and the receiving module are disposed separately, the sending module is configured to send a reference signal, the receiving module is configured to receive the first signal, and the reference signal corresponds to the first signal.

With reference to the second aspect, in some implementations of the second aspect, the processing module is specifically configured to determine, based on a position of the sending module, a position of the receiving module, and the first signal, that the first operation is the swipe operation.

With reference to the second aspect, in some implementations of the second aspect, the button module further includes a second sensor, and the processing module is specifically configured to determine, based on the first signal and the second signal, that the first operation is the swipe operation, where the second signal is detected through the second sensor, and the second signal and the first signal are signals of different types.

With reference to the second aspect, in some implementations of the second aspect, the processing module is specifically configured to: when the measured strength of the first signal first increases and then decreases and measured strength of the second signal first increases and then decreases within first duration, determine that the first operation is the swipe operation.

With reference to the second aspect, in some implementations of the second aspect, the button module further includes a third sensor, the third sensor includes a plurality of electrodes, and one electrode of the third sensor is located on a contact surface of the button module. The obtaining module is further configured to detect an electrocardiosignal and/or a bioimpedance signal through the third sensor. The processing module is further configured to: when the electrocardiosignal meets a first preset requirement and/or the bioimpedance signal meets a second preset requirement, determine that the first operation is detected.

With reference to the second aspect, in some implementations of the second aspect, the button module includes a first function mode and a second function mode, the first function mode is used to detect the swipe operation, and the second function mode is used to detect a user operation different from the swipe operation. The obtaining module is further configured to: accept a first switching operation. The processing module is further configured to: switch the button module from the first function mode to the second function mode. In addition/alternatively, the obtaining module is further configured to: accept a second switching operation; and switch the button module from the second function mode to the first function mode.

With reference to the second aspect, in some implementations of the second aspect, the first function mode is further used to detect a first-type tap operation, the second function mode is used to detect a second-type tap operation, and the first-type tap operation is different from the second-type tap operation.

With reference to the second aspect, in some implementations of the second aspect, the electronic device further includes a knob and/or a first button, and the first button is different from the button module. The processing module is further configured to: when the button module is swiped to implement a first function, set rotation of the knob to implement a second function; and/or when the button module is swiped to implement the first function, set swiping of the first button to implement the second function, where the first function is different from the second function.

With reference to the second aspect, in some implementations of the second aspect, the obtaining module is further configured to: accept a second operation performed on the button module, where the second operation includes the swipe operation. The processing module is further configured to perform one or more of the following: displaying a target interface; playing a target audio; and vibrating a motor.

With reference to the second aspect, in some implementations of the second aspect, the second operation includes a press action and a release action. The processing module is specifically configured to: vibrate the motor in a first manner in response to the press action; and/or vibrate the motor in a second manner in response to the release action.

With reference to the second aspect, in some implementations of the second aspect, the second operation further includes a first action, the first action is after the press action and before the release action, and the first action is different from the press action or the release action. The processing module is further configured to: vibrate the motor in a third manner in response to the first action.

With reference to the second aspect, in some implementations of the second aspect, the first manner includes at least one of the following: a first vibration waveform, first vibration duration, first vibration intensity, and a first vibration interval, and the second manner includes at least one of the following: a second vibration waveform, second vibration duration, second vibration intensity, and a second vibration interval.

With reference to the second aspect, in some implementations of the second aspect, the processing module is specifically configured to: play the target audio in a fourth manner, where the fourth manner is determined based on at least one of an operation force, operation time, and an operation quantity of the second operation.

With reference to the second aspect, in some implementations of the second aspect, the fourth manner includes at least one of the following: first loudness, first play duration, and a first waveform, where the first loudness corresponds to the operation force, the first play duration corresponds to the operation time, and the first waveform corresponds to the operation quantity.

With reference to the second aspect, in some implementations of the second aspect, the obtaining module is specifically configured to: detect the first signal at a first frequency through the first sensing element; and when strength of the first signal is greater than or equal to a strength threshold, detect the first signal at a second frequency through the first sensing element, where the second frequency is higher than the first frequency.

With reference to the second aspect, in some implementations of the second aspect, the obtaining module is further configured to: accept a third operation performed on the button module; and monitor physiological data of the user, where the physiological data includes one or more of the following: blood pressure, blood glucose, a blood oxygen content, a heart rate, uric acid, emotional pressure, a body temperature, and a respiratory rate. The processing module is further configured to display a first interface, where the first interface includes a monitoring result of the physiological data.

With reference to the second aspect, in some implementations of the second aspect, the obtaining module is further configured to: accept a fourth operation performed on the button module. The processing module is further configured to display a second interface, where the second interface includes a screenshot of the electronic device.

According to a third aspect, an electronic device is provided. The electronic device includes a processor and a memory. The memory stores program instructions. The electronic device further includes a button module. The button module includes a first sensor including one first sensing element. The processor is configured to: accept a first operation performed on the button module; detect a first signal through the first sensing element; determine, based on the first signal, that the first operation is a swipe operation; and perform a response operation, where the response operation corresponds to the swipe operation.

With reference to the third aspect, in some implementations of the third aspect, the processor is specifically configured to determine, based on reference strength of the first signal, measured strength of the first signal, and a change in the measured strength of the first signal, that the first operation is the swipe operation, where the reference strength is strength of the first signal when a user does not operate the button module.

With reference to the third aspect, in some implementations of the third aspect, the first sensing element includes a sending module and a receiving module, the sending module and the receiving module are disposed separately, the sending module is configured to send a reference signal, the receiving module is configured to receive the first signal, and the reference signal corresponds to the first signal.

With reference to the third aspect, in some implementations of the third aspect, the processor is specifically configured to determine, based on a position of the sending module, a position of the receiving module, and the first signal, that the first operation is the swipe operation.

With reference to the third aspect, in some implementations of the third aspect, the button module further includes a second sensor, and the processor is specifically configured to determine, based on the first signal and the second signal, that the first operation is the swipe operation, where the second signal is detected through the second sensor, and the second signal and the first signal are signals of different types.

With reference to the third aspect, in some implementations of the third aspect, the processor is specifically configured to: when the measured strength of the first signal first increases and then decreases and measured strength of the second signal first increases and then decreases within first duration, determine that the first operation is the swipe operation.

With reference to the third aspect, in some implementations of the third aspect, the button module further includes a third sensor, the third sensor includes a plurality of electrodes, and one electrode of the third sensor is located on a contact surface of the button module. The processor is further configured to: detect an electrocardiosignal and/or a bioimpedance signal through the third sensor; and when the electrocardiosignal meets a first preset requirement and/or the bioimpedance signal meets a second preset requirement, determine that the first operation is detected.

With reference to the third aspect, in some implementations of the third aspect, the button module includes a first function mode and a second function mode, the first function mode is used to detect the swipe operation, and the second function mode is used to detect a user operation different from the swipe operation. The processor is further configured to: accept a first switching operation; and switch the button module from the first function mode to the second function mode. In addition/alternatively, the processor is further configured to: accept a second switching operation; and switch the button module from the second function mode to the first function mode.

With reference to the third aspect, in some implementations of the third aspect, the first function mode is further used to detect a first-type tap operation, the second function mode is used to detect a second-type tap operation, and the first-type tap operation is different from the second-type tap operation.

With reference to the third aspect, in some implementations of the third aspect, the electronic device further includes a knob and/or a first button, and the first button is different from the button module. The processor is further configured to: when the button module is swiped to implement a first function, set the knob to be rotated to implement a second function; and/or when the button module is swiped to implement the first function, set the first button swipe to implement the second function, where the first function is different from the second function.

With reference to the third aspect, in some implementations of the third aspect, the processor is further configured to: accept a second operation performed on the button module, where the second operation includes the swipe operation; and perform one or more of the following: displaying a target interface; playing a target audio; and vibrating a motor.

With reference to the third aspect, in some implementations of the third aspect, the second operation includes a press action and a release action. The processor is specifically configured to: vibrate the motor in a first manner in response to the press action; and/or vibrate the motor in a second manner in response to the release action.

With reference to the third aspect, in some implementations of the third aspect, the second operation further includes a first action, the first action is after the press action and before the release action, and the first action is different from the press action or the release action. The processor is further configured to: vibrate the motor in a third manner in response to the first action.

With reference to the third aspect, in some implementations of the third aspect, the first manner includes at least one of the following: a first vibration waveform, first vibration duration, first vibration intensity, and a first vibration interval, and the second manner includes at least one of the following: a second vibration waveform, second vibration duration, second vibration intensity, and a second vibration interval.

With reference to the third aspect, in some implementations of the third aspect, the processor is specifically configured to: play the target audio in a fourth manner, where the fourth manner is determined based on at least one of an operation force, operation time, and an operation quantity of the second operation.

With reference to the third aspect, in some implementations of the third aspect, the fourth manner includes at least one of the following: first loudness, first play duration, and a first waveform, where the first loudness corresponds to the operation force, the first play duration corresponds to the operation time, and the first waveform corresponds to the operation quantity.

With reference to the third aspect, in some implementations of the third aspect, the processor is specifically configured to: detect the first signal at a first frequency through the first sensing element; and when strength of the first signal is greater than or equal to a strength threshold, detect the first signal at a second frequency through the first sensing element, where the second frequency is higher than the first frequency.

With reference to the third aspect, in some implementations of the third aspect, the processor is further configured to: accept a third operation performed on the button module; and monitor physiological data of the user, where the physiological data includes one or more of the following: blood pressure, blood glucose, a blood oxygen content, a heart rate, uric acid, emotional pressure, a body temperature, and a respiratory rate; and display a first interface, where the first interface includes a monitoring result of the physiological data.

With reference to the third aspect, in some implementations of the third aspect, the processor is further configured to: accept a fourth operation performed on the button module; and display a second interface, where the second interface includes a screenshot of the electronic device.

According to a fourth aspect, a computer program product is provided. The computer program product includes computer program code. When the computer program code is run on a computer, the method according to the first aspect and any possible implementation of the first aspect is performed.

According to a fifth aspect, a computer-readable storage medium is provided. The computer-readable storage medium stores computer program code. When the computer program code is run on a computer, the method according to the first aspect and any possible implementation of the first aspect is performed.

According to a sixth aspect, a chip is provided, including a processor configured to read instructions stored in a memory. When the processor executes the instructions, the chip is enabled to implement the method according to the first aspect or any possible implementation of the first aspect.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3 is a functional block diagram of a button module according to an embodiment of this application;
FIG. 4 shows a button interaction method according to an embodiment of this application;
FIG. 5 is a diagram of a relationship between pressure detected by a button module in a button event and time;
FIG. 6 is a diagram of a process of a swipe event;
FIG. 7 is a diagram of a relationship between light intensity detected by a button module in a swipe event process shown in FIG. 6 and time;
FIG. 8 is a diagram of a relationship between pressure detected by a button module in a swipe event process shown in FIG. 6 and time;
FIG. 9 is a diagram of a process of another swipe event;
FIG. 10 is a diagram of a relationship between light intensity detected by a button module in a swipe event process shown in FIG. 9 and time;
FIG. 11 is a diagram of a relationship between pressure detected by a button module in a swipe event process shown in FIG. 9 and time;
FIG. 12 is a diagram of a watch according to an embodiment of this application;
FIG. 13 is a diagram of a relationship between a waveform of motor vibration and time according to an embodiment of this application;
FIG. 14 is a diagram of a relationship between light intensity detected by a button module in a button event and time according to an embodiment of this application;
FIG. 15 is a diagram of a relationship between pressure detected by a button module in a button event and time according to an embodiment of this application;
FIG. 16 is a diagram of a relationship between a waveform of sound played by a speaker and time according to an embodiment of this application;
FIG. 17 to FIG. 23 are diagrams of graphical interfaces of a type of button interaction according to an embodiment of this application;
FIG. 24 to FIG. 26 are diagrams of graphical interfaces of another type of button interaction according to an embodiment of this application;
FIG. 27 shows another button interaction method according to an embodiment of this application;
FIG. 28 shows still another button interaction method according to an embodiment of this application;
FIG. 29 shows yet another button interaction method according to an embodiment of this application;
FIG. 30 shows a method for switching a button function mode according to an embodiment of this application;
FIG. 31 shows another method for switching a button function mode according to an embodiment of this application;
FIG. 32 shows still another method for switching a button function mode according to an embodiment of this application;
FIG. 33 shows still yet another button interaction method according to an embodiment of this application;
FIG. 34 to FIG. 38 are diagrams of graphical interfaces in a button interaction process according to an embodiment of this application;
FIG. 39 is a diagram of a structure of a button module according to an embodiment of this application;
FIG. 40 is a diagram of a structure of a headset according to an embodiment of this application;
FIG. 41 is a diagram of a structure of glasses according to an embodiment of this application;
FIG. 42 is a diagram of a structure of a ring according to an embodiment of this application;
FIG. 43 is a diagram of a button interaction apparatus according to an embodiment of this application; and
FIG. 44 is a diagram of an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The singular expression forms "one", "a", "the", "the foregoing", "this", and "the one" used in the specification and the appended claims of this application are intended to also include expression forms such as "one or more", unless explicitly indicated to the contrary in the context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A method provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

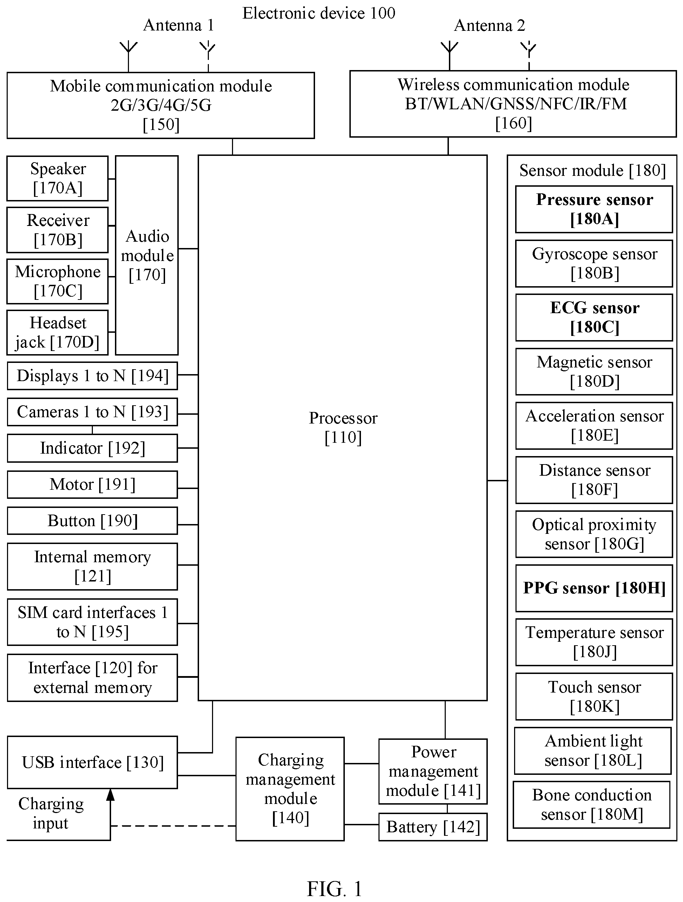

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, an electrocardiography (Electrocardiography, ECG) sensor 180C, a magnetic sensor 180D, an acceleration sensor 180E, a distance sensor 180F, an optical proximity sensor 180G, a photoplethysmogram (Photoplethysmogram, PPG) sensor 180H, a temperature sensor 180J, a touch sensor 180K, an ambient light sensor 180L, a bone conduction sensor 180M, and the like.

In some examples, the electronic device 100 may further include a capacitive sensor (a capacitive touch sensor).

In an implementation, the pressure sensor 180A may be a piezoresistive pressure sensor or a piezoelectric pressure sensor. The pressure sensor 180A may be configured to detect pressure data at one or more positions, or the pressure sensor 180A may be configured to detect pressure data at one position or one area.

In an implementation, the PPG sensor 180H may include one or more light-emitting elements as a light source. The light-emitting element may be a light-emitting diode (light-emitting diode, LED) or a vertical-cavity surface-emitting laser (vertical-cavity surface-emitting laser, VCSEL). The PPG sensor 180H may further include one or more photodiodes (photodiodes, PDs) as a light detection element. A plurality of light-emitting elements may be arranged in an array form to form a light-emitting element array, and a plurality of photodiodes may be arranged in an array form to form a photodiode array.

In some examples, a plurality of sensors in the electronic device 100 may cooperate to form a sensor module, and the sensor module can have functions of the plurality of sensors included in the sensor module.

As an example, the electronic device 100 may include a button module, and the button module may include the pressure sensor 180A, the ECG sensor 180C, and the PPG sensor 180H. An electrode of the ECG sensor 180C may be located on a surface of a contact surface of the button module. When a user operates the button, the ECG sensor may detect an electrocardiosignal of the user through the electrode, the pressure sensor 180A may detect a magnitude of pressure of pressing the button by the user, and light emitted by a light-emitting element in the PPG sensor 180H may be received by a photodiode after being reflected by a human body, so that a corresponding optical signal can be detected.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a mode of transmission between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to: code and decode an audio signal. In some embodiments, the audio module 170 may be disposed in the processor 110, or some functional modules in the audio module 170 are disposed in the processor 110.

The button 190 includes a power button, a volume button, and the like. The button 190 may be a mechanical button, or may be a touch button. The electronic device 100 may receive a key input, and generate a key signal input related to a user setting and function control of the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

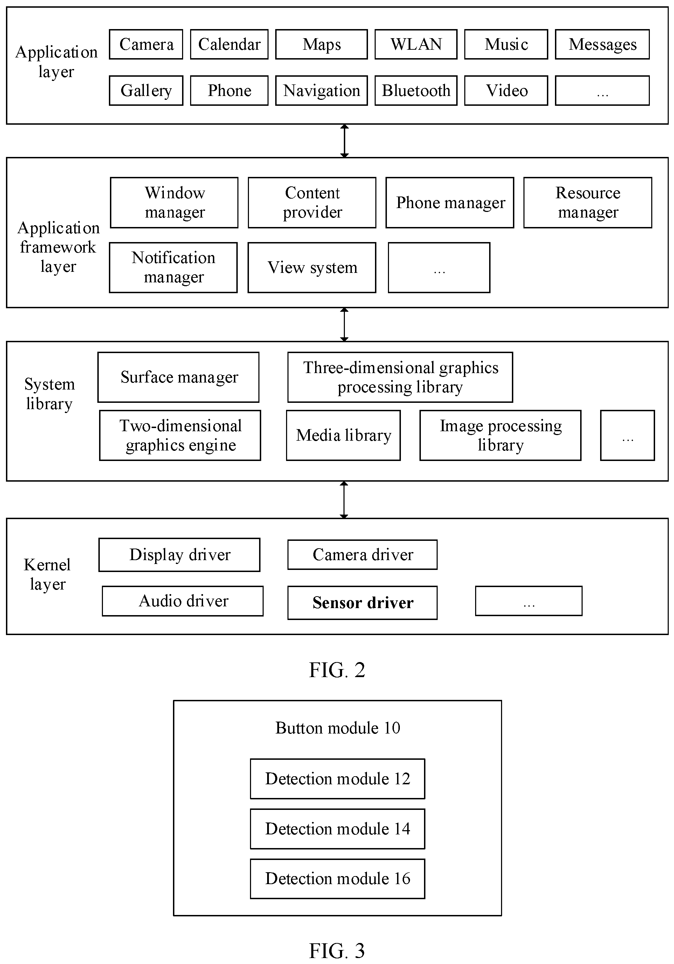

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of "Messages" may include a text display view and an image display view.

The phone manager is configured to provide a communication function for the electronic device 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a form of graph or scroll bar text in a status bar at the top of the system, for example, a notification of an application running in the background, or may be a notification that appears in a form of dialog window on a screen. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. The sensor driver may be configured to: obtain data collected by the sensor, and process the data. The sensor driver may further provide an application programming interface that can be invoked by the operating system and the application, so that the operating system and the application can read processed sensor data.

For example, a driver of the pressure sensor 180A may be configured to: read pressure data detected by the pressure sensor, and preliminarily filter the collected data to remove noise. The driver of the pressure sensor 180A may further provide an application programming interface for the operating system and the application, so that the operating system and the application can access and process the pressure data. The driver of the pressure sensor 180A may further trigger an event notification when the pressure data reaches a preset threshold, to notify the application to perform corresponding processing. The driver of the pressure sensor 180A may be further configured to control power consumption of the pressure sensor 180A. For example, when data does not need to be frequently read, the pressure sensor 180A is set to a low power consumption mode. When data needs to be read, the sensor is quickly woken up, to ensure real-time performance of the data.

For example, a driver of the ECG sensor 180C may be configured to: initialize the ECG sensor 180C when the electronic device 100 is started, and set a working mode, a sampling rate, and the like of the ECG sensor 180C. The sensor driver may be further configured to: read an electrocardiosignal of the user from an ECG electrode, and perform amplification and the like on the signal. The sensor driver may be further configured to filter the collected electrocardiosignal to improve signal quality. The sensor driver may be further configured to provide an application programming interface, so that the operating system and the application program access and obtain data of the electrocardiosignal. The sensor driver may be further configured to trigger an event notification, to notify the application to perform corresponding processing. The sensor driver may be further configured to manage power consumption, and the like on the ECG sensor 180C.

For example, a driver of the PPG sensor 180H may be configured to configure a working parameter (for example, light-emitting intensity of a light-emitting diode and sensitivity of a photodiode) of the PPG sensor 180H according to a requirement of an application scenario. The sensor driver may be further configured to read light intensity data detected by the photodiode. The sensor driver may be further configured to filter the light intensity data, to remove ambient light interference, and the like. The sensor driver may further provide an application programming interface, so that the operating system and the application can access and process data collected by the PPG sensor 180H. The sensor driver may be further configured to trigger an event notification, to notify the application to perform corresponding processing. The sensor driver may be further configured to perform power consumption management, and the like on the PPG sensor 180H.

For example, a sensor driver of the capacitive sensor may be configured to configure an operating parameter (for example, touch sensitivity or a scanning frequency) of the capacitive sensor according to a requirement of an application scenario. The sensor driver may further determine a touch position and identify a touch gesture (for example, swiping, scaling, or rotation) by detecting a capacitance change on the sensor. The sensor driver may further filter a collected capacitance signal, to remove noise and interference, and improve purity of the signal. The sensor driver may be further configured to trigger an event notification, to notify the application to perform corresponding processing. The sensor driver may be further configured to perform power consumption management, and the like on the capacitive sensor.

It should be understood that the technical solutions in embodiments of this application may be applied to systems such as Android, iOS, and HarmonyOS.

FIG. 3 is a block diagram of a button module 10 according to an embodiment of this application. The button module 10 may include a detection module 12 and a detection module 14. When a user operates (for example, presses or touches) the button module 10, the detection module 12 and the detection module 14 may detect a corresponding signal.

In some examples, the button module 10 may be a mechanical button or a touch button. The button module 10 may include a contact surface that is convenient for the user to press or touch. The user may operate the button module 10 by pressing or touching the contact surface, and the like.

For example, the button module 10 may be a mechanical button. The user may operate the button module 10 by pressing a contact surface of the mechanical button. When the press operation of the user is detected, the button module 10 may trigger a button event.

For example, the button module 10 may be a touch button. The user may operate the button module 10 by touching a contact surface of the touch button. When the touch operation of the user is detected, the button module 10 may trigger a button event.

In some scenarios, both the operation of touching the contact surface of the touch button and the operation of pressing the contact surface of the mechanical button may be understood as a trigger operation. For ease of description, unless otherwise specified, the touch operation and the press operation are not distinguished in the following examples, and are uniformly represented by the tap operation. In addition, the user may further control the button by swiping the contact surface of the touch button or the contact surface of the mechanical button. The following uses the trigger operation to uniformly represent operations (including a tap operation, a swipe operation, and the like) performed by the user on the button module 10.

The trigger operation is caused by the user, and the trigger operation is a representation of an intent of the user to operate the button module 10. The button event reflects a change of an internal status of an electronic device when the user operates the button module 10. In other words, the button event may be understood as a representation form of an operation performed by the user on the button module 10 at the electronic device level. The electronic device may identify a trigger operation by detecting a button event corresponding to the trigger operation, and make a corresponding response.

For example, the button event may be a tap event or a swipe event.

For example, the tap event may include: a subtle tap event, a light tap event, a heavy tap event, a short tap event, a touch and hold event, a single-tap event, a double-tap event, a triple-tap event, and the like. A trigger operation corresponding to the tap event may include: a subtle tap operation, a light tap operation, a heavy tap operation, a short tap operation, a touch and hold operation, a single-tap operation, a double-tap operation, a triple-tap operation, and the like.

For example, the swipe event may include a swipe-up event, a swipe-down event, a swipe-leftward event, a swipe-rightward event, a short swipe event, a long swipe event, and the like. A trigger operation corresponding to the swipe event may include a swipe-up operation, a swipe-down operation, a swipe-leftward operation, a swipe-rightward operation, a short swipe operation, a long swipe operation, and the like.

In some examples, the detection module 12 may be configured to detect a signal Sg1, and the signal Sg1 may be used to determine whether there is a real user operation. Herein, the real user operation is relative to a case in which the button module 10 is accidentally touched. The real user operation may correspond to an intent of the user to use the button module 10. For example, in a process of actually using the button module 10, the user presses or touches the contact surface, to generate a real button event.

For example, the signal Sg1 may include a biological signal, for example, an electrocardiosignal of a human body or a bioimpedance signal of a human body.

In an implementation, the button module 10 may include a plurality of electrodes. One electrode (electrode Na) may be located on the contact surface of the button module 10, and another electrode (electrode Nb) may be located at another position that is of the electronic device including the button module 10 and that is in contact with skin of the user. When the user uses the button module 10, the right hand of the user may be in contact with the electrode Na, the another electrode Nb may be in contact with another part (for example, the wrist of the left hand, and the face) of the user, and the two electrodes may be conducted through the human body. Therefore, the button module 10 may detect an electrocardiosignal, a bioimpedance signal, and/or the like of the human body through the two electrodes.

For example, the signal Sg1 may include a pressure signal and a capacitance signal.

In an implementation, the button module 10 may include a pressure sensor and a capacitive sensor. Whether there is a real user operation may be determined based on a pressure signal detected by a pressure sensor array and a capacitance signal detected by the capacitive sensor.

For example, the signal Sg1 may further include a biological signal and one or more of the following signals: a pressure signal, a capacitance signal, a temperature signal, an optical signal, and the like.

In some examples, the detection module 14 may be configured to detect a signal Sg2 and a signal Sg3, and the signal Sg2 and/or the signal Sg3 may be used to determine a type of a trigger operation.

For example, the signal Sg2 and the signal Sg3 may be any one of the following: a pressure signal, an optical signal, a capacitance signal, an elastic wave signal, an ultrasonic signal, a millimeter wave signal, electromagnetic wave signals (such as a Bluetooth signal, a SparkLink signal, an ultra-wideband signal, and a near field communication signal) in different frequency bands, and the like.

Herein, the pressure signal may include information such as a pressure value. The optical signal may include information such as light intensity. The elastic wave signal may include information such as an amplitude, a frequency, and a waveform of an elastic wave. The capacitance signal may include information such as a capacitance value. The ultrasonic signal may include information such as an amplitude, a frequency, and a waveform of an ultrasonic wave. The millimeter wave signal may include information such as an amplitude, a frequency, and a waveform of a millimeter wave. The electromagnetic wave signal may include information such as an amplitude, a frequency, and a waveform of an electromagnetic wave.

In a possible case, the trigger operation may be a tap operation.

In some examples, the button module 10 may determine, based on a signal detected at a same position on the contact surface, whether the trigger operation is a tap operation and a type of the tap operation. Specifically, the detection module 14 may identify a tap operation based on signals at a same position on the contact surface at different moments. In other words, the detection module 14 may identify a tap operation based on a change of signals at a same position on the contact surface.

For example, the signal Sg2 may be a pressure signal at a position Ps1 on the contact surface of the button module 10 at a moment t11, the signal Sg3 may be a pressure signal at the position Ps1 at a moment t12, and a time interval between the moment t11 and the moment t12 may be Δt1. In other words, the electronic device may detect pressure signals at a same position on the contact surface at different moments through the button module 10, to identify a tap operation of the user. In other words, the electronic device may identify a tap operation based on pressure signals at a same position on the button module 10 at different moments.

For example, when both a pressure value indicated by the signal Sg2 and a pressure value indicated by the signal Sg3 are less than or equal to a pressure threshold PrTh11, and Δt1 is less than a duration threshold TiTh11, the electronic device may determine that a light tap operation is detected. When both a pressure value indicated by the signal Sg2 and a pressure value indicated by the signal Sg3 are greater than or equal to a pressure threshold PrTh12, and Δt1 is less than or equal to a duration threshold TiTh12, the electronic device may determine that a heavy tap operation is detected. Herein, the pressure threshold PrTh11 may be less than the pressure threshold PrTh12.

For example, when both a pressure value indicated by the signal Sg2 and a pressure value indicated by the signal Sg3 are greater than or equal to a pressure threshold PrTh21 and less than a pressure threshold PrTh22, and Δt1 is less than or equal to a duration threshold TiTh21, the electronic device may determine that a short tap operation is detected. When both a pressure value indicated by the signal Sg2 and a pressure value indicated by the signal Sg3 are greater than or equal to a pressure threshold PrTh21, and Δt1 is greater than a duration threshold TiTh22, the electronic device may determine that a touch and hold operation is detected. Herein, the duration threshold TiTh21 may be less than the duration threshold TiTh22.

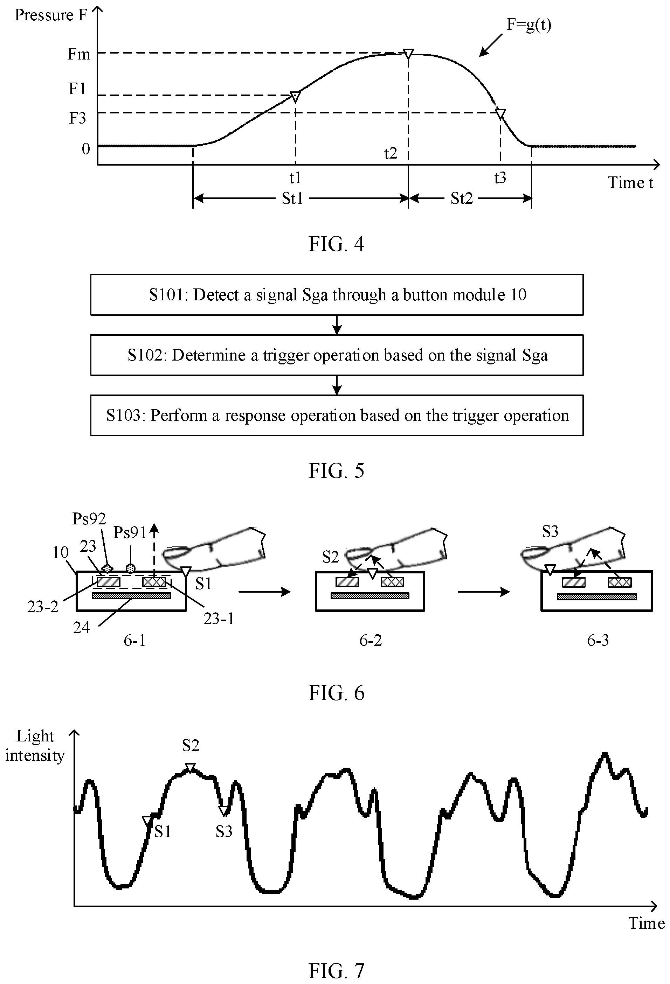

For example, FIG. 4 shows a time-varying relationship of pressure detected by the pressure sensor in one button event. For example, a relationship between pressure F detected by the pressure sensor and time t approximately satisfies: F=g (t). After the finger of the user touches the contact surface of the button module 10, the pressure F detected by the pressure sensor gradually increases, reaches a maximum value Fm, and then gradually decreases. A stage in which the pressure gradually increases from zero to the maximum value Fm may be referred to as a stage St1, and a stage in which the pressure gradually decreases from the maximum value Fm to zero may be referred to as a stage St2.

In some examples, the electronic device may determine a type of a tap operation based on a magnitude of pressure applied by the user to the contact surface of the button module 10 and/or holding time of the trigger operation.

Herein, the holding time of the trigger operation may be a time interval between two preset pressure thresholds in one trigger operation. With reference to FIG. 4, one of the foregoing two pressure thresholds may be a pressure value F1, and the other may be a pressure value F3. In other words, the holding time of the trigger operation may be understood as a time interval (Δt) between a moment (t1) at which the pressure value F detected by the pressure sensor increases to the pressure value F1 and a moment (t3) at which the pressure value F decreases to the pressure value F3. In a possible implementation, the pressure value F1 may be greater than the pressure value F3. For example, the pressure value F1 may be 120 gF, and the pressure value F3 may be 90 gF.

For example, the electronic device may determine a subtle tap action or a press action based on the magnitude of the pressure applied by the user to the contact surface of the button module 10.

For example, with reference to FIG. 4, when the pressure F detected by the pressure sensor is greater than 20 gF and less than or equal to 60 gF, the electronic device may determine that the trigger operation is a subtle tap action. When the pressure F is greater than 60 gF, the electronic device may determine that the trigger operation is a press action.

For example, the electronic device may determine a subtle tap action, a light tap action, or a heavy tap action based on the maximum value Fm of the pressure applied by the user to the contact surface of the button module 10.

For example, when the maximum value Fm is less than or equal to 60 gF, the electronic device may determine that the trigger operation is a subtle tap action. When the maximum value Fm is greater than 60 gF and less than or equal to 200 gF, the electronic device determines that the trigger operation is a light tap action. When the maximum value Fm is greater than 200 gF, the electronic device may determine that the trigger operation is a heavy tap action.

For example, the electronic device may determine a subtle tap action, a light tap action, or a heavy tap action based on the magnitude of the pressure applied by the user to the contact surface of the button module 10 and the holding time of the trigger operation.

For example, when the pressure F detected by the pressure sensor is greater than 20 gF and less than or equal to 60 gF, and the holding time of the trigger operation is greater than 1 second, the electronic device may determine that the trigger operation is a subtle tap action. When the pressure F is greater than 60 gF and less than or equal to 200 gF, and the holding time of the trigger operation is less than or equal to 1 second, the electronic device may determine that the trigger operation is a light tap action. When the pressure F is greater than 200 gF and the holding time of the trigger operation is less than or equal to 1 second, the electronic device may determine that the trigger operation is a heavy tap action.

For example, the electronic device may determine, based on the holding time of the trigger operation, a short press action or a touch and hold action.

For example, when the holding time of the trigger operation is less than or equal to 1 second, the electronic device may determine that the trigger operation is a short press action. When the holding time of the trigger operation is greater than 1 second, the electronic device may determine that the trigger operation is a touch and hold action.

For example, the electronic device may also determine, based on the holding time of the trigger operation, that the trigger operation is a tapping action or a tap action.

For example, when the holding time of the trigger operation is less than or equal to 0.2 second (or 0.5 second), the electronic device may determine that the trigger operation is a tapping action. When the holding time of the trigger operation is greater than 0.2 second (or 0.5 second), the electronic device may determine that the trigger operation is a tap action.

In some examples, the electronic device may determine a single-tap action, a double-tap action, or a multi-tap action based on whether there are consecutive tap actions. In other words, the electronic device may determine, based on a time interval between two button events, that the trigger operation is a single-tap action, a double-tap action, or a multi-tap action.

For example, the time interval between the two button events may be a time difference between moments at which the pressure sensor detects a maximum value Fm of pressure in the two button events.

For example, when the time interval between the two button events is less than or equal to 0.5 second, the electronic device may determine that the trigger operation is a double-tap action. When the time interval between the two button events is greater than 0.5 second, the electronic device may determine that the trigger operation is an operation of performing a single tap twice. When a time interval between two adjacent button events in three or more button events is less than or equal to 0.5 second, the electronic device may determine that the trigger operation is a multi-tap action.

For example, the signal Sg2 may be an optical signal at a position Ps2 on the contact surface of the button module 10 at a moment t21, and the signal Sg3 may be an optical signal at the position Ps2 at a moment t22. A time interval between the moment t21 and the moment t22 may be Δt2. In other words, the electronic device may detect optical signals at a same position on the contact surface at different moments through the button module 10, to identify a tap operation of the user. In other words, the electronic device may identify a tap operation based on optical signals at a same position on the button module 10 at different moments.

In an implementation, when both light intensity indicated by the signal Sg2 and light intensity indicated by the signal Sg3 are less than or equal to a light intensity threshold LtTh11, and Δt2 is less than a duration threshold TiTh31, the electronic device may determine that a light tap operation is detected. When both light intensity indicated by the signal Sg2 and light intensity indicated by the signal Sg3 are greater than or equal to a light intensity threshold LtTh12, and Δt2 is less than or equal to a duration threshold TiTh32, the electronic device may determine that a heavy tap operation is detected. Herein, the light intensity threshold LtTh11 is less than the light intensity threshold LtTh12.

In an implementation, when both light intensity indicated by the signal Sg2 and light intensity indicated by the signal Sg3 are greater than or equal to a light intensity threshold LtTh21 and less than a light intensity threshold LtTh22, and Δt2 is less than or equal to a duration threshold TiTh41, the electronic device may determine that a short tap operation is detected. When both light intensity indicated by the signal Sg2 and light intensity indicated by the signal Sg3 are greater than or equal to a light intensity threshold LtTh21, and Δt2 is greater than a duration threshold TiTh42, the electronic device may determine that a touch and hold operation is detected. Herein, the duration threshold TiTh42 is greater than the duration threshold TiTh41.

For example, the signal Sg2 may be an elastic wave signal at a position Ps3 on the contact surface of the button module 10 at a moment t31, and the signal Sg3 may be an elastic wave signal at the position Ps3 at a moment t32. In other words, the electronic device may detect an elastic wave signal at a same position on the contact surface through the button module 10, to identify a tap operation of the user. In other words, the electronic device may identify a tap operation based on elastic wave signals at a same position on the button module 10 at different moments.

For example, the signal Sg2 may be a capacitance signal at a position Ps4 on the contact surface of the button module 10 at a moment t41, and the signal Sg3 may be a capacitance signal at the position Ps4 at a moment t42. In other words, the electronic device may detect a capacitance signal at a same position on the contact surface through the button module 10, to identify a tap operation of the user. Alternatively, the electronic device may identify a tap operation based on capacitance signals at a same position on the button module 10 at different moments.

In some examples, to improve accuracy of identifying a tap operation, the button module may determine, based on signals detected at a plurality of positions on the contact surface, whether the trigger operation is a tap operation and a type of the tap operation.

For example, the signal Sg2 and the signal Sg3 may be signals detected at different positions at a same moment. For example, the signal Sg2 may be a signal detected by the detection module 14 at a position Ps51 on the contact surface at a moment t5, and the signal Sg3 may be a signal detected by the detection module 14 at a position Ps52 on the contact surface at the moment t5.

For example, when the signal Sg2 indicates that a trigger operation at the position Ps51 at the moment t5 is a tap operation, and the signal Sg3 indicates that a trigger operation at the position Ps52 at the moment t5 is also a tap operation, the button module 10 may determine that the trigger operation at the moment t5 is a tap operation.

Similarly, when the signal Sg2 and the signal Sg3 respectively indicate that the tap operation at the position Ps51 and the tap operation at the position Ps52 belong to a same type of tap operation, the button module 10 may determine that the tap operation at the moment t5 is the foregoing tap operation type.

In a possible case, the trigger operation may be a swipe operation.

In some examples, the button module 10 may identify, based on a signal change at a same position on the contact surface, a swipe operation and a type of the swipe operation. Specifically, the detection module 14 may detect a signal change at a same position on the contact surface within a period of time to identify a swipe operation.

For example, the detection module 14 may collect a signal a plurality of times within a time period Δt3. For example, the signal Sg2 may be a signal detected at a position Ps6 on the contact surface at a moment t61 within the time period Δt3, and the signal Sg3 may be a signal detected at the position Ps6 on the contact surface at the moment t62 within the time period Δt3. The button module 10 may identify, based on a strength change of the signal at the position Ps6 within the time period Δt3, the swipe operation as any one of the following: a swipe-up operation, a swipe-down operation, a swipe-leftward operation, a swipe-rightward operation, and the like.

For example, when the strength of the signal at the position Ps6 within the time period Δt3 changes in a change manner Cm1, the button module 10 may determine that the swipe operation is a swipe-up operation. When the strength of the signal at the position Ps6 within the time period Δt3 changes in a change manner Cm2, the button module 10 may determine that the swipe operation is a swipe-down operation. When the strength of the signal at the position Ps6 within the time period Δt3 changes in a change manner Cm3, the button module 10 may determine that the swipe operation is a swipe-leftward operation. When the strength of the signal at the position Ps6 within the time period Δt3 changes in a change manner Cm4, the button module 10 may determine that the swipe operation is a swipe-rightward operation.

The change manner Cm1, the change manner Cm2, the change manner Cm3, and the change manner Cm4 are different. The foregoing different change manners are described in detail below, and are not described herein.

In some examples, the button module 10 may identify, based on a signal change at a plurality of positions on the contact surface, a swipe operation and a type of the swipe operation. Specifically, the detection module 14 may detect a signal change at different positions in an area on the contact surface within a period of time to identify a swipe operation.

For example, the detection module 14 may collect signals at different positions in an area Ar1 on the contact surface a plurality of times within a time period Δt4. For example, the signal Sg2 may include a signal Sg21 and a signal Sg22, and the signal Sg3 may include a signal Sg31 and a signal Sg32, where the signal Sg21 may be a signal detected at a position Ps71 in the area Ar1 at a moment t71, and the signal Sg22 may be a signal detected at the position Ps71 in the area Ar1 at a moment t72; and the signal Sg31 may be a signal detected at a position Ps72 in the area Ar1 detected at the moment t71, and the signal Sg32 may be a signal detected at the position Ps72 in the area Ar1 at the moment t72. The button module 10 may identify, based on the signal Sg21, the signal Sg22, the signal Sg31, and the signal Sg32, the swipe operation as any one of the following: a swipe-up operation, a swipe-down operation, a swipe-leftward operation, a swipe-rightward operation, and the like.

In a possible implementation, the signal Sg2, the sub-signal Sg21, the sub-signal Sg22, the signal Sg3, the sub-signal Sg31, and the sub-signal Sg32 may be one or more of the following: a pressure signal, an optical signal, a capacitance signal, an elastic wave signal, an ultrasonic signal, a millimeter wave signal, and electromagnetic wave signals (such as a Bluetooth signal, a SparkLink signal, an ultra-wideband signal, and a near field communication signal) in different frequency bands.

In the foregoing solution of identifying a swipe operation, accuracy of identifying a swipe operation based on a change of a signal at a same position may be low. In the solution of identifying a swipe operation based on a change of signals at a plurality of positions in an area, a large amount of data needs to be collected and processed, and efficiency of identifying a swipe operation may be low. In addition, in the solution of detecting signals at a plurality of positions in an area, a sensor configured to collect the signals needs to include a large quantity of sensing elements, and these sensing elements need to be distributed on a same plane. A plane on which the plurality of sensing elements are located is approximately parallel to the contact surface of the button module 10. This limits miniaturization of the button module 10.

To improve efficiency of identifying a swipe operation without reducing accuracy of identifying the swipe operation, and to reduce a volume of the button module 10, in some examples, the signal Sg2 and the signal Sg3 that are used to identify the swipe operation may be signals of different types. In other words, the button module 10 may identify the swipe operation based on signals of a plurality of types.

In some examples, the button module 10 may further include a detection module 16. The detection module 16 may be configured to detect the signal Sg3, and the detection module 14 may be configured to detect the signal Sg2. The signal Sg2 and the signal Sg3 may be signals of different types. In an implementation, a mechanical part included in the detection module 14 may be stacked with a mechanical part included in the detection module 16. A stacking direction herein may be approximately in a normal direction of the contact surface of the button module 10.

For example, the signal Sg2 may be a signal of a type Kd1 detected by the detection module 14 at a position Ps81 on the contact surface, and the signal Sg3 may be a signal of a type Kd2 detected by the detection module 16 at a position Ps82 on the contact surface. The button module 10 may identify the swipe operation based on detection results of the signal of the type Kd1 at different moments and detection results of the signal of the type Kd2 at different moments.

Details about how the button module 10 identifies the swipe operation based on the signals of the plurality of types are described below, and are not described herein.

The button module 10 may determine the swipe operation based on signals detected by a plurality of sensors, thereby improving accuracy of identifying the swipe operation to a specific extent. In addition, the plurality of sensors may be stacked in a thickness direction of the button module 10, which helps reduce a volume of the button module 10 to a specific extent.

From a perspective of implementation, the detection module 12, the detection module 14, and the detection module 16 each may include a sensor, and these detection modules may detect a corresponding signal through the sensor.

For example, the detection module 12 may include an ECG sensor. The ECG sensor may be configured to detect an electrocardiosignal generated by a heart. For example, the ECG sensor may include a plurality of detection electrodes. These detection electrodes may be in contact with different parts of a human body. Potentials generated by the electrocardiosignal in different parts of the human body are different. The electrocardiosignal in different parts may be collected through the plurality of detection electrodes and analyzed, to determine an electrical activity of the heart of the user and output an electrocardiogram of the user.

Generally, the electrocardiosignal detected by the ECG sensor is obtained through analysis based on a difference between potentials generated by the electrocardiosignal in different parts of the human body. When an ECG sensor including two detection electrodes is configured to detect an electrocardiogram signal, a greater distance between human body parts wearing the two detection electrodes indicates a more obvious potential difference detected between the two detection electrodes. In this case, it is easier to analyze the electrocardiosignal to obtain a heart rate of the user. On the contrary, a shorter distance between the human body parts wearing the two detection electrodes indicates a smaller potential difference detected between the two detection electrodes. In this case, the electrocardiosignal reflects more noise, and cannot reflect the heart rate of the user.

For example, one electrode (electrode Na) of the ECG sensor may be in contact with skin (for example, area Ar2) of a left arm of the user (for example, a device including the button module 10 may be a watch, and in this case, the electrode Na may be located at a position at which a watch body is in contact with skin of a wrist of the user (for example, the electrode Na is located at a bottom of the watch)), and the other electrode (electrode Nb) of the ECG sensor may be disposed on the contact surface of the button module 10.

For example, the detection module 12 may include a bioimpedance sensor. The bioimpedance sensor may be configured to measure electrical characteristics of human tissues or cells. For example, the bioimpedance sensor may include a plurality of electrodes. These electrodes may be in contact with skin of the user, and are configured to apply an excitation current to a contact part. These electrodes may further detect a voltage signal of the contact part corresponding to the excitation current. A bioimpedance of a human body part in contact with the bioimpedance sensor may be determined based on the excitation current and the detected voltage signal.

Components such as a cell membrane, a cellular fluid, a blood vessel, and fat in the human body may present an impedance effect under electrical excitation. Impedance of different parts of the human body may be considered as coupling between capacitances and resistances of different sizes. Because water, fat, muscle, bone content, and the like of different parts of the human body are different, values of equivalent impedance presented by different parts under same electrical excitation are different. Accordingly, the bioimpedance sensor of the electronic device applies an excitation current to different parts of the human body and detects corresponding bioimpedance signals, to determine bioimpedance of different parts. If a distance between human body parts that are respectively in contact with two detection electrodes of the bioimpedance sensor is short, a small quantity of human body tissues are located between the two detection electrodes, and a small bioimpedance is detected. On the contrary, if a distance between human body parts that are respectively in contact with two detection electrodes of the bioimpedance sensor is long, a large quantity of human body tissues are located between the two detection electrodes, and a large bioimpedance is detected.

For example, one electrode (electrode Nc) of the bioimpedance sensor may be in contact with skin (for example, area Ar3) of the left arm of the user, and the other electrode (electrode Nd) may be disposed on the contact surface of the button module 10.

For example, the detection module 12 may include a pressure sensor and a capacitive sensor. When the user presses the contact surface of the button module 10, strength of a pressure signal detected by the pressure sensor changes, a distance between two plates of a capacitor included in the capacitive sensor changes, and a capacitance signal detected by the capacitive sensor also changes accordingly. The button module 10 may determine, based on the two types of signals, whether there is a real user operation.

For example, the detection module 12 may further include a temperature sensor, a PPG sensor, and the like. When the user presses the contact surface of the button module 10, a temperature detected by the temperature sensor changes due to impact of a body temperature of the user. Light emitted by a light-emitting element of the PPG sensor is reflected by a finger of the user, and more light can be received by a light detection element of the PPG sensor. Light intensity detected by the PPG sensor changes accordingly. The button module 10 may determine, based on a plurality of detection results of the electrocardiosignal, the bioimpedance signal, the pressure signal, the capacitance signal, the temperature, and the light intensity, whether there is a real user operation.

The detection module 14 and the detection module 16 each may include different types of sensors, and different types of sensors detect the signal Sg2 and/or the signal Sg3 in different manners. For ease of description, the following first briefly describes the sensors.

Sensors may be classified into active sensors and passive sensors based on different sources of detected signals.

For example, the active sensor may include a sending module and a receiving module. The sending module may be configured to transmit energy (for example, an electromagnetic wave or a sound wave) to a measured object, and the receiving module may be configured to detect energy reflected by the measured object. The energy sent by the sending module and the energy detected by the receiving module may be respectively represented in a form of transmit signal and receive signal. A difference between the transmit signal and the receive signal may be used to identify the measured object.

For example, the active sensor may include one or more of the following: a PPG sensor, an ultrasonic wave-based sensor, an elastic wave-based sensor, a millimeter wave-based sensor, and an electromagnetic wave-based sensor (such as Bluetooth, SparkLink, ultra-wideband, and near field communication).

For example, the passive sensor may detect a signal from the measured object. The signal may be a signal (for example, an electrocardiosignal or a bioimpedance signal) from the measured object, or may be a signal (for example, a signal generated by pressing a button) generated by the measured object. The signal may be used to identify the measured object.

For example, the passive sensor may include one or more of the following: a pressure sensor, a capacitive sensor, an ECG sensor, a bioimpedance sensor, an infrared sensor, a thermocouple, a piezoelectric sensor, and the like.

Sensors may be classified into array sensors and non-array sensors based on different arrangement manners of sensing elements included in the sensors.

For example, the array sensor may include a plurality of sensing elements, and these sensing elements may form two-dimensional or three-dimensional spatial distribution in an array form. Two adjacent sensing elements are spaced from each other. Each sensing element in the array sensor may collect a signal, so that the array sensor can collect a plurality of signals at the same time. For example, the plurality of signals may be signals at different positions in an area.

For example, the array sensor may include one or more of the following: a pressure sensor array, a capacitive sensor array, a PPG sensor array, an elastic wave sensor array, and the like.

For example, the non-array sensor may include a small quantity (for example, one or two) of sensing elements. Therefore, a quantity of signals that can be collected by the non-array sensor at a same moment is limited. For example, the non-array sensor can collect signals at one or two positions at a same moment.

Generally, most array sensors may be manufactured in a non-array form. In other words, the foregoing pressure sensor, capacitive sensor, PPG sensor, elastic wave sensor, and the like may all be non-array sensors.

For example, the detection module 14 may include an array sensor, for example, any one of a pressure sensor array, a capacitive sensor array, a PPG sensor array, an elastic wave sensor array, and a piezoelectric sensor array. In this case, the detection module 14 may detect a change of signal strength at different positions in an area on the contact surface of the button module 10.

For example, the detection module 16 may include an array sensor, for example, any one of a pressure sensor array, a capacitive sensor array, a PPG sensor array, an elastic wave sensor array, and a piezoelectric sensor array. In this case, the detection module 16 may detect a change of signal strength at different positions in an area on the contact surface of the button module 10.

For example, the detection module 14 may include a non-array sensor, for example, any one of a non-array pressure sensor, a non-array capacitive sensor, a non-array PPG sensor, a non-array elastic wave sensor, and a non-array piezoelectric sensor. In this case, the detection module 14 may detect signal strength at a same position on the contact surface of the button module 10 at different moments.

For example, the detection module 16 may include a non-array sensor, for example, any one of a non-array pressure sensor, a non-array capacitive sensor, a non-array PPG sensor, a non-array elastic wave sensor, and a non-array piezoelectric sensor. In this case, the detection module 16 may detect signal strength at a same position on the contact surface of the button module 10 at different moments.

When the detection module 14 or the detection module 16 includes an array sensor, the button module 10 may identify a swipe operation based on changes of signal strength that is detected by the array sensor at different positions in an area on the contact surface of the button module 10.

For example, the detection module 14 or the detection module 16 includes a pressure sensor array, and the button module 10 may identify a swipe operation based on changes of signal strength that corresponds to a plurality of positions and that is detected by the pressure sensor array.

When both the detection module 14 and the detection module 16 are non-array sensors, the detection module 14 and the detection module 16 may be configured to collect different types of signals, and the button module 10 may identify a swipe operation based on changes of signal strength of the two types of signals.

For example, the detection module 14 may include a non-array pressure sensor, and the detection module 16 may include a non-array PPG sensor. The button module 10 may identify a swipe operation based on a strength change of a pressure signal detected by the pressure sensor and a strength change of an optical signal detected by the PPG sensor.

When one of the detection module 14 and the detection module 16 is an array sensor, and the other is a non-array sensor, the two detection modules may be configured to collect different types of signals, and the button module 10 may identify a swipe operation based on a strength change of one type of signal at a plurality of positions in an area within specific duration and a strength change of another type of signal at a same position.

In a possible implementation, the button module 10 may further include a motor. When the button module 10 detects a tap operation, a swipe operation, or the like, the button module 10 may invoke the motor to vibrate, so that the user perceives a response of the electronic device 100 to the user operation.

In a possible implementation, the button module 10 may further include a speaker. When the button module 10 detects a tap operation, a swipe operation, or the like, the button module 10 may invoke the speaker to play an audio, so that the user perceives a response of the electronic device 100 to the user operation.

Based on the foregoing button module 10, FIG. 5 shows a button interaction method according to an embodiment of this application. An electronic device may detect a plurality of types of signals through the button module 10, and determine, based on detection results of the signals, whether a button event occurs. When determining that the button event is detected, the electronic device may make one or more types of responses such as a visual response, an auditory response, or a tactile response.

S101: The electronic device detects a signal Sga through the button module 10.

In some examples, the signal Sga may be one or more of the following: a pressure signal, an optical signal, a capacitance signal, an elastic wave signal, an ultrasonic signal, a millimeter wave signal, and electromagnetic wave signals (such as a Bluetooth signal, a SparkLink signal, an ultra-wideband signal, and a near field communication signal) in different frequency bands.

In some examples, the button module 10 may include a sensor Ss1, and the signal Sga may be detected through the sensor Ss1.

For example, the sensor Ss1 may be any one of the following: a pressure sensor, a capacitive sensor, an ECG sensor, a bioimpedance sensor, an infrared sensor, a thermocouple, a piezoelectric sensor, a PPG sensor, an ultrasonic wave-based sensor, an elastic wave-based sensor, a millimeter wave-based sensor, an electromagnetic wave-based sensor, and the like.

Based on the description of the button module 10 shown in FIG. 3, it may be understood that the signal Sga herein may be an example of the signal Sg2 or the signal Sg3 described above.

In some examples, before detecting the signal Sga, the electronic device may detect a signal Sgb through the button module 10, and the signal Sgb may be used to determine whether there is a real user operation. In other words, the signal Sgb may be used to determine whether the button module 10 is accidentally touched.

In a possible case, the signal Sgb may include an electrocardiosignal.

In an implementation, the button module 10 may include an ECG sensor, and the button module 10 may detect an electrocardiosignal of a user through the ECG sensor. The electrocardiosignal may be used to determine whether there is a real user operation, in other words, the electrocardiosignal may be used to determine whether the button module 10 is accidentally touched.

For example, when the electrocardiosignal is detected, the electronic device may determine that a real user operation is detected, in other words, the electronic device may determine that the button module 10 is not accidentally touched. On the contrary, when the electrocardiosignal cannot be detected, the electronic device may determine that no real user operation is detected, in other words, the electronic device may determine that the button module 10 is accidentally touched.

For example, when the electrocardiosignal can be used to determine a heart rate of the user, the electronic device may determine that a real user operation is detected, in other words, the electronic device may determine that the button module 10 is not accidentally touched. On the contrary, when the electrocardiosignal cannot be used to determine a heart rate of the user, the electronic device may determine that no real user operation is detected, in other words, the electronic device may determine that the button module 10 is accidentally touched.

For example, one electrode (electrode Na) of the ECG sensor may be in contact with skin (for example, area Ar2) of a left arm of the user, and the other electrode (electrode Nb) of the ECG sensor may be disposed on a contact surface of the button module 10.

In a possible scenario, the contact surface of the button module 10 is squeezed by an object. In this case, the two electrodes of the ECG sensor are not conducted, and the signal detected by the ECG sensor cannot be used to determine the heart rate of the user. Therefore, it may be determined that there is no real user operation, in other words, it may be determined that the button module 10 is accidentally touched.

In a possible scenario, skin (area Ar4) on the back of a left hand of the user is in contact with the electrode Nb. This case may be an accidental touch event, and the user may not have an intent to operate the electronic device. The electrode Na and the electrode Nb are conducted through a human body located between the left arm and the back of the left hand, and a distance between the area Ar2 and the area Ar4 is short. The electronic device cannot detect the electrocardiosignal of the user, or the electronic device cannot determine the heart rate of the user based on the electrocardiosignal detected by the ECG sensor. Therefore, it may be determined that there is no real user operation, in other words, it may be determined that the button module 10 is accidentally touched.

In a possible scenario, skin (area Ar5) of a right hand finger of the user is in contact with the electrode Nb. This case may be an operation of actually pressing and touching the contact surface by the user, and the user has an intent of operating the electronic device. The electrode Na and the electrode Nb are conducted through a human body located between the left arm and the right hand finger, and a distance between the area Ar2 and the area Ar5 is long. The electronic device can detect the electrocardiosignal of the user, or the electronic device can determine the heart rate of the user based on the electrocardiosignal detected by the ECG sensor. Therefore, it may be determined that there is a real user operation, in other words, it may be determined that the button module 10 is not accidentally touched.

In a possible case, the signal Sgb may include a bioimpedance signal.

In an implementation, the button module 10 may include a bioimpedance sensor, and the button module 10 may detect a bioimpedance signal of a human body through the bioimpedance sensor. The bioimpedance signal may be used to determine whether there is a real user operation, in other words, the bioimpedance signal may be used to determine whether the button module 10 is accidentally touched.

For example, when a magnitude of bioimpedance determined based on the bioimpedance signal falls within a range Rg0, the electronic device may determine that a real user operation is detected, in other words, the electronic device may determine that the button module 10 is not accidentally touched. On the contrary, when a magnitude of bioimpedance determined based on the bioimpedance signal does not fall within the range Rg1, the electronic device may determine that no real user operation is detected, in other words, the electronic device may determine that the button module 10 is accidentally touched.

For example, one electrode (electrode Nc) of the bioimpedance sensor may be in contact with skin (for example, area Ar3) of the left arm of the user, and the other electrode (electrode Nd) may be disposed on the contact surface of the button module 10.

In a possible scenario, the contact surface of the button module 10 is squeezed by an object. In this case, the two electrodes of the bioimpedance sensor are not conducted, and an impedance value indicated by the signal detected by the bioimpedance sensor tends to be infinite. Therefore, it may be determined that there is no real user operation, in other words, it may be determined that the button module 10 is accidentally touched.

In a possible scenario, skin (area Ar6) on the back of a left hand of the user is in contact with the electrode Nd. This case may be an accidental touch event, and the user may not have an intent to operate the electronic device. The electrode Nc and the electrode Nd are conducted through a human tissue located between a left arm and the back of the left hand. Bioimpedance of the human tissue between the two parts is small (for example, less than a bioimpedance threshold BiTh1). Therefore, it may be determined that there is no real user operation, in other words, it may be determined that the button module 10 is accidentally touched.

In a possible scenario, skin (area Ar7) of a right hand finger of the user is in contact with the electrode Nd. This case may be an operation of actually pressing and touching the contact surface by the user, and the user has an intent of operating the electronic device. The electrode Nc and the electrode Nd are conducted through a human tissue located between the left arm and the right hand finger. Bioimpedance of the human tissue between the two parts is large (for example, greater than or equal to the bioimpedance threshold BiTh1). The electronic device may determine that there is a real user operation, in other words, the electronic device may determine that the button module 10 is not accidentally touched.

Based on the description of the button module 10 shown in FIG. 3, it may be understood that the signal Sgb herein may be an example of the signal Sg1 described above.

S102: The electronic device determines a trigger operation based on the signal Sga.

In a possible case, the trigger operation may be a tap operation, for example, a subtle tap operation, a light tap operation, a heavy tap operation, a short tap operation, a touch and hold operation, a single-tap operation, and a double-tap operation. A button event corresponding to the tap operation may be referred to as a tap event, for example, a subtle tap event, a light tap event, a heavy tap event, a short tap event, a touch and hold event, a single-tap event, or a double-tap event.

In some examples, the electronic device may determine, based on the signal Sga, that the trigger operation is a tap operation, in other words, the electronic device may determine, based on the signal Sga, that the button event is a tap event.

For details about how the electronic device determines, based on the signal Sga, that the trigger operation is a tap operation, refer to the foregoing descriptions related to FIG. 3 and FIG. 4. Details are not described herein again.

In a possible case, the trigger operation may be a swipe operation, for example, a swipe-up operation, a swipe-down operation, a short swipe operation, or a long swipe operation. A button event corresponding to the swipe operation may be referred to as a swipe event, for example, a swipe-up event, a swipe-down event, a short swipe event, or a long swipe event.

The electronic device may determine, based on the signal Sga, that the trigger operation is a swipe operation, in other words, the electronic device may determine, based on the signal Sga, that the button event is a swipe event.

In some examples, the electronic device may determine, based on reference strength of the signal Sga, measured strength of the signal Sga, and a change in the measured strength of the signal Sga, that the trigger operation is a swipe operation, where the reference strength of the signal Sga is strength of the signal Sga when the user does not operate the button module.

For example, the sensor Ss1 configured to detect the signal Sga may be an active sensor. In this case, the reference strength of the signal Sga may be strength of a signal (for example, an electromagnetic wave or a sound wave) transmitted by the sensor Ss1. Alternatively, the sensor Ss1 may be a passive sensor. In this case, the reference strength of the signal Sga may be strength of the signal when no signal from the measured object is received.

In an implementation, the reference strength of the signal Sga may be a measured value of the signal Sga when the user does not operate the button module, or the reference strength of the signal Sga may be a default value, where the default value may be included in hardware information of the device when the electronic device is delivered from a factory.

For example, the sensor Ss1 configured to detect the signal Sga may be an array sensor, and the signal Sga may be signals (for example, a pressure signal, an optical signal, an elastic wave signal, or a capacitance signal) at a plurality of positions in an area on the contact surface of the button module 10. In this case, the electronic device may identify a swipe operation based on distribution of signal strength in an area on the contact surface of the button module 10 and a change of the signal strength distribution with time. In other words, the electronic device may identify a swipe event based on distribution of signal strength in a same area on the contact surface of the button module 10 at different moments.

In an implementation, the electronic device may determine a start position of a user operation based on distribution of the signal Sga in an area Ar8 on the contact surface of the button module 10 at a moment t81, and determine an end position of the user operation based on distribution of the signal Sga in the area Ar8 on the contact surface of the button module 10 at a moment t82. A distance of the user operation may be determined based on the start position and the end position, and a speed of the user operation may be determined based on a time interval between the moment t81 and the moment t82. When the distance of the user operation is greater than or equal to a distance threshold DtTh1 and the speed of the user operation is greater than or equal to a speed threshold VcTh1, the electronic device may determine that a swipe operation is detected, in other words, the electronic device may determine that a swipe event is triggered.

On the basis that the swipe operation is detected, the electronic device may determine an operation direction of the user based on the start position and the end position, so as to determine whether the swipe operation is a swipe-up operation or a swipe-down operation.

On the basis that the swipe operation is detected, the electronic device may determine, based on a relationship between the distance of the user operation and a reference distance, whether the swipe operation is a short swipe operation or a long swipe operation.

For example, when the distance of the user operation is less than or equal to the reference distance, the electronic device may determine that the swipe operation is a short swipe operation. When the distance of the user operation is greater than the reference distance, the electronic device may determine that the swipe operation is a long swipe operation.

For example, the sensor Ss1 configured to detect the signal Sga may be a non-array sensor, and the signal Sga may be a signal (for example, a pressure signal, an optical signal, an elastic wave signal, or a capacitance signal) at a position on the contact surface of the button module 10.

In an implementation, the electronic device may determine, based on the reference strength, the measured strength, and the change in the measured strength of the signal Sga, a change rate of the measured strength of the signal Sga with time (hereinafter referred to as a change rate of the measured strength). Therefore, the electronic device may determine, based on the change rate of the measured strength of the signal Sga, that the trigger operation is a swipe operation and a type of the swipe operation.

Similar to the tap operation, in the swipe operation, the measured strength of the signal Sga rises from the reference strength to peak strength, and then falls from the peak strength to the reference strength. A growth rate k1 of the measured strength of the signal Sga in the rising process may be determined by obtaining a change in the measured strength of the signal Sga in the process. An attenuation rate k2 of the measured strength of the signal Sga in the falling process may be determined by obtaining a change in the measured strength of the signal Sga in the process. The electronic device may determine, based on the growth rate k1 and/or the attenuation rate k2 of the measured strength of the signal Sga, that the trigger operation is a swipe operation and a direction of the swipe operation.

For example, when the growth rate k1 of the measured strength of the signal Sga is within the range Rg1, and/or the attenuation rate k2 of the measured strength of the signal Sga is within a range Rg2, it is determined that the trigger operation is a swipe operation.

For example, when the growth rate k1 of the measured strength of the signal Sga is within a range Rg11, and/or the attenuation rate k2 of the measured strength of the signal Sga is within a range Rg21, it is determined that the trigger operation is a swipe operation in a direction Da. When the growth rate k1 of the measured strength of the signal Sga is within a range Rg12, and/or the attenuation rate k2 of the measured strength of the signal Sga is within a range Rg22, it is determined that the trigger operation is a swipe operation in a direction Db, where the direction Da and the direction Db are two opposite directions.

It may be understood that both the range Rg11 and the range Rg12 are within the range Rg1, and both the range Rg21 and the range Rg22 are within the range Rg2.

For example, the contact surface of the button module 10 may be approximately rectangular, and the direction Da or the direction Db may be a direction along a longer side of the rectangle.

For example, the electronic device may determine, based on a change in the measured strength of the signal Sga, measured strength of the signal Sga corresponding to a start position of a user operation and measured strength of the signal Sga corresponding to an end position of the user operation, and then determine the start position and the end position of the user operation based on the reference strength of the signal Sga, so that a distance of the swipe operation of the user can be roughly determined. Therefore, the electronic device may determine that the swipe operation of the user is a short swipe operation or a long swipe operation.

For example, the sensor Ss1 configured to detect the signal Sga may be a non-array sensor and is an active sensor. In this case, the sensor Ss1 may include a sending module and a receiving module. The sending module and the receiving module may be disposed separately. For example, the sending module may be close to one end of the contact surface of the button module 10, and the receiving module may be close to the other end of the contact surface of the button module 10. The sending module is configured to send a reference signal, and the receiving module is configured to receive the signal Sga corresponding to the reference signal.

For example, the contact surface of the button module 10 may be approximately rectangular or elliptical, a size of the contact surface in one direction (for example, referred to as a feature direction) is long, and a size in another direction (for example, referred to as a non-feature direction) is short. The sending module and the receiving module may be disposed in the feature direction of the contact surface, and the sending module and the receiving module may be far away from each other and close to an edge of the contact surface.

For example, the contact surface of the button module 10 may be approximately circular or square. In this case, the sending module and the receiving module may be disposed in a diameter direction of the circular contact surface and are far away from each other, or the sending module and the receiving module may be disposed in a direction of a symmetric axis of the square contact surface and are far away from each other.

In an implementation, the sensor Ss1 may be a PPG sensor, the sending module may be a light-emitting element (for example, a light-emitting diode or a vertical-cavity surface-emitting laser) of the PPG sensor, and the receiving module may be a photodiode of the PPG sensor.

In the foregoing examples, the electronic device may determine, based on a position of the sending module, a position of the receiving module, the reference strength of the signal Sga, the measured strength of the signal Sga, and the change in the measured strength of the signal Sga, that the trigger operation is a swipe operation and a type of the swipe operation.

Similar to the tap operation, in the swipe operation, the measured strength of the signal Sga rises from the reference strength to peak strength, and then falls from the peak strength to the reference strength. A growth rate k3 of the measured strength of the signal Sga in the rising process may be determined by obtaining a change in the measured strength of the signal Sga in the process. An attenuation rate k4 of the measured strength of the signal Sga in the falling process may be determined by obtaining a change in the measured strength of the signal Sga in the process. The electronic device may determine, based on the growth rate k3 and/or the attenuation rate k4 of the measured strength of the signal Sga, that the trigger operation is a swipe operation and a direction of the swipe operation.

For example, when the growth rate k3 of the measured strength of the signal Sga is within the range Rg3, and/or the attenuation rate k4 of the measured strength of the signal Sga is within a range Rg4, it is determined that the trigger operation is a swipe operation.

For example, when the growth rate k3 of the measured strength of the signal Sga is within a range Rg31, and/or the attenuation rate k4 of the measured strength of the signal Sga is within a range Rg41, it is determined that the trigger operation is a swipe operation in a direction Dc. When the growth rate k3 of the measured strength of the signal Sga is within a range Rg32, and/or the attenuation rate k4 of the measured strength of the signal Sga is within a range Rg42, it is determined that the trigger operation is a swipe operation in a direction Dd. The direction Dc may be a direction from the sending module to the receiving module, and the direction Dd may be a direction from the receiving module to the sending module.

It may be understood that both the range Rg31 and the range Rg32 are within the range Rg3, and both the range Rg41 and the range Rg42 are within the range Rg4.

For example, the contact surface of the button module 10 may be approximately rectangular, and the direction Dc or the direction Dd may be a direction along a longer side of the rectangle.

For example, the electronic device may determine, based on a change in the measured strength of the signal Sga, measured strength of the signal Sga corresponding to a start position of a user operation and measured strength of the signal Sga corresponding to an end position of the user operation, and then determine the start position and the end position of the user operation based on the reference strength of the signal Sga, so that a distance of the swipe operation of the user can be roughly determined. Therefore, the electronic device may determine that the swipe operation of the user is a short swipe operation or a long swipe operation.

In an implementation, in a process in which the user uses the button module 10, the electronic device may record a relationship between the user operation and the measured strength of the signal Sga, and by accumulating a large amount of data and utilizing methods such as machine learning, establish the following mapping relationship R1 between the swipe operation of the user and the signal Sga:
X1 → Y1

X1 may include one or more of information about the reference strength of the signal Sga, information about the measured strength of the signal Sga, information about a change relationship of the signal Sga with time, and the like. Y1 may include one or more of information such as whether a swipe operation is detected and a type of the swipe operation.

Based on the mapping relationship R1, the electronic device can more effectively and accurately identify the swipe operation of the user.

In some examples, the button module 10 may include a sensor Ss1 and a sensor Ss2, where the sensor Ss1 may be configured to detect the signal Sga, the sensor Ss2 may be configured to detect a signal Sgc, and the signal Sga and the signal Sgc may be signals of different types.

For example, at least one of the sensor Ss1 and the sensor Ss2 may be an array sensor. In this case, the electronic device may determine, based on a signal detected by the array sensor, that the trigger operation is a swipe operation. For details, refer to the foregoing descriptions. Details are not described herein again.

With reference to the foregoing descriptions of the button module 10 shown in FIG. 3, it may be understood that the signal Sga herein may be an example of the foregoing signal Sg2, and the signal Sgc may be an example of the foregoing signal Sg3; or the signal Sga may be an example of the foregoing signal Sg3, and the signal Sgc may be an example of the foregoing signal Sg2.

For example, both the sensor Ss1 and the sensor Ss2 may be non-array sensors.

For example, the signal Sga may be one of the following signals: a pressure signal, an optical signal, an elastic wave signal, an electromagnetic wave signal, a capacitance signal, an ultrasonic signal, and the like; and the signal Sgc may be another signal of these signals that is different from the signal Sga. The sensor Ss1 and the sensor Ss2 may be sensors configured to detect a signal of a corresponding type.

In some examples, the electronic device may determine, based on the signal Sga and the signal Sgc, that the trigger operation is a swipe operation.

For example, the electronic device may determine, based on the reference strength of the signal Sga, the measured strength of the signal Sga, the change in the measured strength of the signal Sga, reference strength of the signal Sgc, measured strength of the signal Sgc, and a change in the measured strength of the signal Sgc, that the trigger operation is a swipe operation.

For example, within duration Δt5, the measured strength of the signal Sga first increases and then decreases, and the measured strength of the signal Sgc first increases and then decreases. In this case, the electronic device may determine that the trigger operation is a swipe operation.

For example, when a growth rate k5 of the measured strength of the signal Sga is within a range Rg5 and a growth rate k6 of the measured strength of the signal Sgc is within a range Rg6, the electronic device may determine that the trigger operation is a swipe operation.

For example, when an attenuation rate k7 of the measured strength of the signal Sga is within a range Rg7 and an attenuation rate k8 of the measured strength of the signal Sgc is within a range Rg8, the electronic device may determine that the trigger operation is a swipe operation.

For example, when a growth rate k5 of the measured strength of the signal Sga is within a range Rg5 and an attenuation rate k8 of the measured strength of the signal Sgc is within a range Rg8, the electronic device may determine that the trigger operation is a swipe operation.

For example, when an attenuation rate k7 of the measured strength of the signal Sga is within a range Rg7 and a growth rate k6 of the measured strength of the signal Sgc is within a range Rg6, the electronic device may determine that the trigger operation is a swipe operation.

For example, in the following cases, it may be determined that the swipe operation is a swipe operation in a direction De:

The growth rate k5 of the measured strength of the signal Sga is within a range Rg51, and the growth rate k6 of the measured strength of the signal Sgc is within a range Rg61; or the attenuation rate k7 of the measured strength of the signal Sga is within a range Rg71, and the attenuation rate k8 of the measured strength of the signal Sgc is within a range Rg81; or the growth rate k5 of the measured strength of the signal Sga is within a range Rg51, and the attenuation rate k8 of the measured strength of the signal Sgc is within a range Rg81; or the growth rate k6 of the measured strength of the signal Sgc is within a range Rg61, and the attenuation rate k7 of the measured strength of the signal Sga is within a range Rg71.

For example, in the following cases, it may be determined that the swipe operation is a swipe operation in a direction Df:

The growth rate k5 of the measured strength of the signal Sga is within a range Rg52, and the growth rate k6 of the measured strength of the signal Sgc is within a range Rg62; or the attenuation rate k7 of the measured strength of the signal Sga is within a range Rg72, and the attenuation rate k8 of the measured strength of the signal Sgc is within a range Rg82; or the growth rate k5 of the measured strength of the signal Sga is within a range Rg52, and the attenuation rate k8 of the measured strength of the signal Sgc is within a range Rg82; or the growth rate k6 of the measured strength of the signal Sgc is within a range Rg62, and the attenuation rate k8 of the measured strength of the signal Sgc is within a range Rg82.

In the foregoing examples, the range Rg51 and the range Rg52 may be different, the range Rg61 and the range Rg62 may be different, the range Rg71 and the range Rg72 may be different, and the range Rg81 and the range Rg82 may be different.

It may be understood that both the range Rg51 and the range Rg52 are within the range Rg5, and both the range Rg61 and the range Rg62 are within the range Rg6. Both the range Rg71 and the range Rg72 are within the range Rg7, and both the range Rg81 and the range Rg82 are within the range Rg8.

For example, the electronic device may determine, based on a change in the measured strength of the signal Sga, measured strength of the signal Sga corresponding to a start position of a user operation and measured strength of the signal Sga corresponding to an end position of the user operation, and then determine the start position and the end position of the user operation based on the reference strength of the signal Sga, so that a distance of the swipe operation of the user can be roughly determined. Therefore, the electronic device may determine that the swipe operation of the user is a short swipe operation or a long swipe operation. In addition/alternatively,
the electronic device may determine, based on a change in the measured strength of the signal Sgc, measured strength of the signal Sgc corresponding to a start position of a user operation and measured strength of the signal Sgc corresponding to an end position of the user operation, and then determine the start position and the end position of the user operation based on the reference strength of the signal Sgc, so that a distance of the swipe operation of the user can be roughly determined. Therefore, the electronic device may determine that the swipe operation of the user is a short swipe operation or a long swipe operation.

In an implementation, in a process in which the user uses the button module 10, the electronic device may record a relationship between the user operation, the measured strength of the signal Sga, and the measured strength of the signal Sgc, and by accumulating a large amount of data and utilizing methods such as machine learning, establish the following mapping relationship R2 between the swipe operation of the user, the signal Sga, and the signal Sgc:
X2 → Y2

X2 may include one or more of information about the reference strength of the signal Sga, information about the measured strength of the signal Sga, information about a change relationship of the signal Sga with time, information about the reference strength of the Sgc, information about the measured strength of the signal Sgc, information about a change relationship of the signal Sgc with time, and the like. Y2 may include one or more of information such as whether a swipe operation is detected and a type of the swipe operation.

Based on the mapping relationship R2, the electronic device can more effectively and accurately identify the swipe operation of the user.

For example, the signal Sga may include a pressure signal at a position Ps91 on the contact surface of the button module 10, and the signal Sgc may include an optical signal at a position Ps92 on the contact surface of the button module 10.

Refer to FIG. 6. The button module 10 may include a pressure sensor 24 and a PPG sensor 23 that are stacked, and the PPG sensor 23 may be located on a side that is of the pressure sensor 24 and that is close to a finger of the user. The pressure sensor 24 may be configured to detect a pressure signal at the position Ps91, and the PPG sensor 23 may be configured to detect an optical signal at the position Ps92.

The PPG sensor 23 includes a light-emitting diode 23-1 and a photodiode 23-2. The PPG sensor 23 may be configured to detect light intensity detected by the photodiode 23-2, in other words, light intensity detected by the PPG sensor 23 corresponds to a position of the photodiode 23-2. In other words, the PPG sensor 23 may be considered as a non-array PPG sensor. In some scenarios, the photodiode 23-2 may be considered as a sensing element.

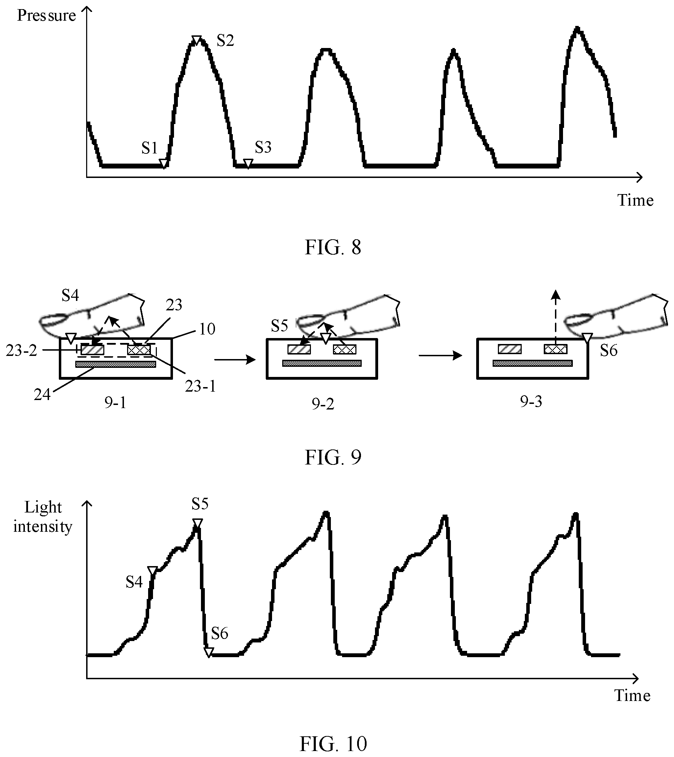

For example, the position Ps91 may be located in a middle area of the contact surface of the button module 10. For example, the position Ps91 may be approximately at a position of a point S2 in FIG. 6 or a position of a point S5 in FIG. 9 below. In some scenarios, the pressure sensor 24 may be considered as a non-array pressure sensor.

In a process of swiping from right to left on the contact surface of the button module 10, the finger of the user swipes from a side that is of the PPG sensor 23 and that is close to the light-emitting diode 23-1 to a side that is close to the photodiode 23-2. In a diagram 6-1 in FIG. 6, a contact position between the finger of the user and the contact surface of the button module 10 is a point S1, and the point S1 is approximately located on a right side of the light-emitting diode 23-1. In a diagram 6-2 in FIG. 6, a contact position between the finger of the user and the contact surface of the button module 10 is a point S2, and the point S2 is approximately located between the light-emitting diode 23-1 and the photodiode 23-2. In a diagram 6-3 in FIG. 6, a contact position between the finger of the user and the contact surface of the button module 10 is a point S3, and the point S3 is approximately located on a left side of the photodiode 23-2.

At the point S1, light emitted by the light-emitting diode 23-1 can hardly be reflected to the photodiode 23-2 by the finger of the user, and light intensity detected by the photodiode 23-2 is the weakest. At the point S2, most of the light emitted by the light-emitting diode 23-1 can be reflected to the photodiode 23-2 by the finger of the user, and light intensity detected by the photodiode 23-2 is the strongest. At the point S3, a small part of the light emitted by the light-emitting diode 23-1 can be reflected to the photodiode 23-2 by the finger of the user, and light intensity detected by the photodiode 23-2 is between the light intensity corresponding to the point S1 and the light intensity corresponding to the point S2.

FIG. 7 is a diagram of a relationship between light intensity detected by the PPG sensor 23 and time in a swipe operation process corresponding to FIG. 6. As shown in FIG. 7, in a process in which the finger of the user moves from the point S1 to the point S2 to the point S3, the light intensity detected by the PPG sensor 23 is first enhanced and then weakened in a change process.

For the pressure sensor 24, at the point S1, the finger of the user is just in contact with the contact surface, the point S1 is far away from the position Ps91, and pressure detected by the pressure sensor 24 is small. At the point S2, the finger of the user is approximately located above the pressure sensor 24, the point S2 is close to the position Ps91, and the pressure detected by the pressure sensor 24 is the largest. At the point S3, the finger of the user is about to leave the contact surface, the point S3 is far away from the position Ps91, and the pressure detected by the pressure sensor 24 decreases.

FIG. 8 is a diagram of a relationship between pressure detected by the pressure sensor 24 and time in a swipe operation process corresponding to FIG. 6. As shown in FIG. 8, in a process in which the finger of the user moves from the point S1 to the point S2 to the point S3, a pressure value detected by the pressure sensor 24 first increases and then decreases in a change process.

As shown in FIG. 9, in a process of swiping from left to right on the contact surface of the button module 10, the finger of the user swipes from a side that is of the PPG sensor 23 and that is close to the photodiode 23-2 to a side that is close to the light-emitting diode 23-1. In a diagram 9-1 in FIG. 9, a contact position between the finger of the user and the contact surface of the button module 10 is a point S4, and the point S4 is approximately located on a left side of the photodiode 23-2. In a diagram 9-2 in FIG. 9, a contact position between the finger of the user and the contact surface of the button module 10 is a point S5, and the point S5 is approximately located between the light-emitting diode 23-1 and the photodiode 23-2. In a diagram 9-3 in FIG. 9, a contact position between the finger of the user and the contact surface of the button module 10 is a point S6, and the point S6 is approximately located on a right side of the light-emitting diode 23-1.

At the point S4, a small part of light emitted by the light-emitting diode 23-1 can be reflected to the photodiode 23-2 by the finger of the user. At the point S5, most of the light emitted by the light-emitting diode 23-1 can be reflected to the photodiode 23-2 by the finger of the user, and light intensity detected by the photodiode 23-2 is the strongest. At the point S6, the light emitted by the light-emitting diode 23-1 can hardly be reflected to the photodiode 23-2 by the finger of the user, and light intensity detected by the photodiode 23-2 is the weakest.

FIG. 10 is a diagram of a relationship between light intensity detected by the PPG sensor 23 and time in a swipe operation process corresponding to FIG. 9. As shown in FIG. 10, in a process of moving from the point S4 to the point S5 to the point S6, the light intensity detected by the PPG sensor 23 is first enhanced and then weakened in a change process.

For the pressure sensor 24, at the point S4, the finger of the user is just in contact with the contact surface, the point S4 is far away from the position Ps91, and pressure of the user detected by the pressure sensor 24 is small. At the point S5, the finger of the user is approximately located above the pressure sensor 24, the point S5 is close to the position Ps91, and the pressure of the user detected by the pressure sensor 24 is the largest. At the point S6, the finger of the user is about to leave the contact surface, the point S6 is far away from the position Ps91, and the pressure of the user detected by the pressure sensor 24 decreases.

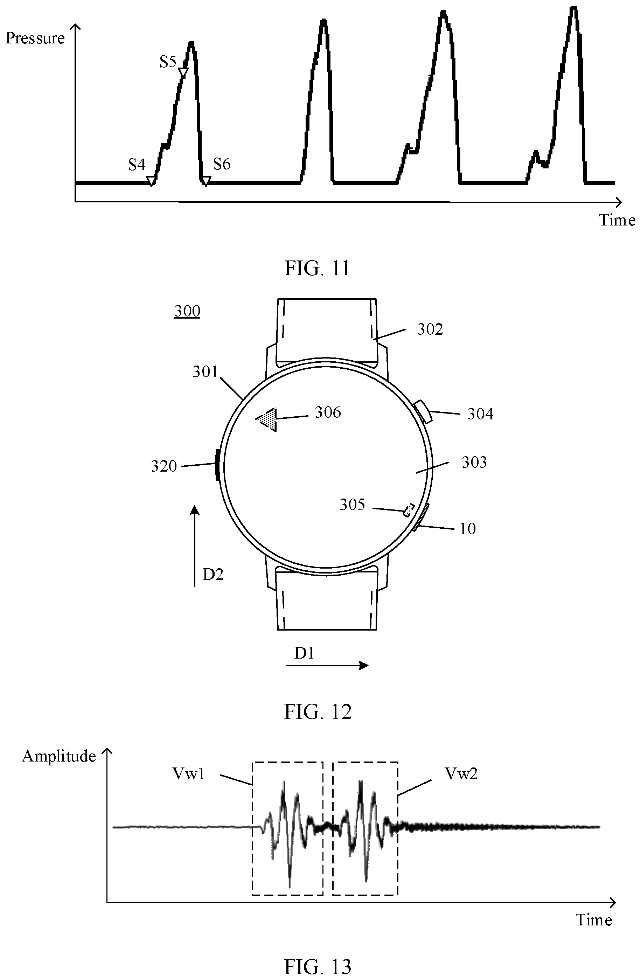

FIG. 11 is a diagram of a relationship between pressure detected by the pressure sensor 24 and time in a swipe operation process corresponding to FIG. 9. As shown in FIG. 11, in a process in which the finger of the user moves from the point S4 to the point S5 to the point S6 on the contact surface of the button module 10, a pressure value detected by the pressure sensor 24 first increases and then decreases in a change process.

With reference to FIG. 6 to FIG. 11, in a possible case, during the swipe operation, a pressure value indicated by a pressure signal detected by the pressure sensor 24 gradually increases, and light intensity indicated by an optical signal detected by the PPG sensor 23 gradually increases. In a possible case, during the swipe operation, a pressure value indicated by a pressure signal detected by the pressure sensor 24 first increases and then decreases, and light intensity indicated by an optical signal detected by the PPG sensor 23 first increases and then decreases. In a possible case, during the swipe operation, a pressure value indicated by a pressure signal detected by the pressure sensor 24 gradually decreases, and light intensity indicated by an optical signal detected by the PPG sensor 23 gradually decreases. In the foregoing case, the electronic device may determine that the swipe operation is detected.

On the basis that the swipe operation is detected, a start position and an end position of a user operation may be determined based on a mounting position of the pressure sensor 24 on the button module 10, a mounting position of the PPG sensor 23 on the button module 10, the pressure signal detected by the pressure sensor 24, and the optical signal detected by the PPG sensor 23. Therefore, it may be determined that the detected swipe operation is specifically a left-to-right swipe operation or a right-to-left swipe operation.

For example, the signal Sga may include a pressure signal at a position Ps101 on the contact surface of the button module 10, and the signal Sgc may include an elastic wave signal (or a capacitance signal) at a position Ps102. In other words, the electronic device may determine the swipe operation based on a change of a pressure signal at a position on the contact surface of the button module 10 and a change of an elastic wave signal (or a change of a capacitance signal) at a position within a period of time.

For example, the signal Sga may include an optical signal at a position Ps111 on the contact surface of the button module 10, and the signal Sgc may include an elastic wave signal (or a capacitance signal) at a position Ps112. In other words, the electronic device may determine the swipe operation based on a change of an optical signal at a position on the contact surface of the button module 10 and a change of an elastic wave signal (or a capacitance signal) at a position within a period of time.

S103: The electronic device performs a response operation based on the trigger operation.

Herein, the response operation may correspond to the trigger operation or the button event, in other words, the electronic device performs the response operation in response to the trigger operation or the button event.

In some examples, the response operation may include one or more of displaying an interface, playing an audio, vibrating a motor, and the like. In other words, when receiving the trigger operation, the electronic device may provide one or more of visual, auditory, and tactile feedback to the user. The following separately describes the three types of feedback. It may be understood that the electronic device may provide only one type of feedback, or may provide a plurality of types of feedback. This is not limited in this application.

In a possible implementation, the electronic device may be the watch 300 shown in FIG. 12. The following mainly describes the response operation by using the watch 300.

In some examples, as shown in FIG. 12, the watch 300 may include a watch body 301 and a watch strap 302. The watch strap 302 may be fastened relative to the watch body 301, and is configured to wear the watch 300 on a wrist of the user. The watch body 301 may include the button module 10. For example, a side wall of the watch body 301 may include a hole, and a part or all of the button module 10 may extend out of the watch body 301 through the hole.

For example, the watch 300 may include a display 303. The display 303 may be fastened to the watch body 301, and the display 303 may be configured to display a graphical user interface of the watch 300. When it is detected that the user operates the button module 10, the watch 300 may change content displayed on the display 303, to provide visual feedback.

For example, the watch 300 may further include a motor 305, and the motor 305 may be located inside the watch body 301. In an implementation, the motor 305 may be disposed close to the button module 10. In another implementation, the motor 305 may be integrated inside the button module 10. When it is detected that the user operates the button module 10, the watch 300 may trigger the motor 305 to vibrate, to provide tactile feedback.

For example, the watch 300 may further include one or more speakers 306, and the speaker 306 may be located inside the watch body 301. In another implementation, the speaker 306 may be integrated inside the button module 10. When it is detected that the user operates the button module 10, the watch 300 may trigger the speaker 306 to play an audio, to provide auditory feedback.

For example, the watch 300 may further include a crown 304, and the crown 304 may also be located on a side wall of the watch body 301. The crown 304 and the button module 10 may be located on a same side of the watch body 301, or the crown 304 and the button module 10 may be respectively located on two opposite sides of the watch body 301.

For example, the crown 304 may include a knob, and a function such as adjustment and selection of the watch 300 may be implemented by rotating the knob.

In a possible case, a detection element may be disposed on a surface of the crown 304, and the detection element may be configured to detect an operation of touching the crown 304 by the user. For example, the detection element may be located on an end face of an end that is of the crown 304 that extends out of the watch body 301.

In a possible case, the crown 304 may include an elastic structure. When the user presses an end part of an end of the crown 304, the elastic structure may deform. Correspondingly, the crown 304 may move in a direction close to the watch body 301. When the user removes pressure applied to the end part of the crown 304, the elastic structure is restored from the deformation, and the crown 304 may move in a direction far away from the watch body 301 under an action of the elastic structure, and restore to a position before the user presses the crown 304.

When the watch 300 includes both the crown 304 and the button module 10, in a possible case, functions of the crown 304 and functions of the button module 10 may be complementary to each other. In other words, functions of the crown 304 and functions of the button module 10 do not overlap. In other words, the crown 304 and the button module 10 do not include a same function.

For example, rotating the crown 304 can implement an adjustment function in a direction D1 in FIG. 12, and swiping the contact surface of the button module 10 can implement an adjustment function in a direction D2 in FIG. 12. The direction D1 and the direction D2 may be perpendicular to each other. The adjustment function that can be implemented by rotating the crown 304 and the adjustment function that can be implemented by swiping the contact surface of the button module 10 are described in detail below, and details are not described herein.

When the watch 300 includes both the crown 304 and the button module 10, in a possible case, functions of the crown 304 and functions of the button module 10 may be partially or completely replaced with each other. In other words, there is an intersection between functions of the crown 304 and functions of the button module 10. In other words, the crown 304 and the button module 10 may include a same function.

For example, a function that can be implemented by pressing the end part of the crown 304 may be the same as a function that can be implemented by tapping the contact surface of the button module 10.

For example, a function that can be implemented by rotating the crown 304 may be the same as a function that can be implemented by swiping the button module 10.

For example, the watch 300 may further include a button (for example, referred to as a button 320) different from the button module 10. The button 320 may be a mechanical button or a touch button.

In a possible case, the button 320 can implement a detection function the same as that of the button module 10. In other words, the button 320 can support a detection tap operation and a swipe operation.

For example, the button 320 may have a same structure as the button module 10. In other words, in this case, the watch 300 may include two button modules 10.

For example, the button 320 and the button module 10 may have different structures. For example, the button 320 may include one or more array sensors, and the button module 10 includes one or more non-array sensors.

When the button 320 can identify a tap operation and/or a swipe operation, in a possible case, the user may implement different functions by operating the button 320 and the button module 10. In other words, when the button 320 and the button module 10 detect a trigger operation of a same type, the watch 300 may perform different response operations.

For example, a function that can be implemented by pressing the button 320 may be different from a function that can be implemented by tapping the contact surface of the button module 10.

For example, a function that can be implemented by swiping the button 320 may be different from a function that can be implemented by swiping the button module 10.

When the button 320 can identify a tap operation and/or a swipe operation, in a possible case, the user may implement a same function by operating the button 320 and the button module 10. In other words, when the button 320 and the button module 10 detect a trigger operation of a same type, the watch 300 may perform a same response operation.

For example, a function that can be implemented by pressing the button 320 may be the same as a function that can be implemented by tapping the contact surface of the button module 10.

For example, a function that can be implemented by swiping the button 320 may be the same as a function that can be implemented by swiping the button module 10.

For related descriptions of functions of the button module 10 and the button 320, refer to the foregoing descriptions of functions of the button module 10 and the crown 304.

In some examples, the response operation includes one or more of playing an audio, displaying an interface, vibrating a motor, and the like.

In an implementation, when a trigger operation is detected, the electronic device may vibrate the motor in a preset manner PsM1. The preset manner PsM1 may include one or more of a vibration waveform, vibration intensity, vibration duration, a vibration interval, or the like.

In a possible implementation, the preset manner PsM1 may correspond to an action included in the trigger operation.

For example, the trigger operation may include a press action and a release action, the preset manner may include a manner M1 and a manner M2, the manner M1 corresponds to the press action of the user, and the manner M2 may correspond to the release action of the user. Herein, the trigger operation may include a swipe operation and a tap operation. In other words, the swipe operation and the tap operation each include a press action and a release action.

For example, the manner M1 may include one or more of a vibration waveform Vw1, vibration intensity Vs1, vibration duration Vt1, or a vibration interval Vi1; and the manner M2 may include one or more of a vibration waveform Vw2, vibration intensity Vs2, vibration duration Vt2, or a vibration interval Vi2.

For example, FIG. 13 illustrates two motor vibration waveforms. A waveform on the left may be used as an example of the vibration waveform Vw1, and a waveform on the right may be used as an example of the vibration waveform Vw2. For example, the vibration duration Vt1 may be 16.8 milliseconds, and the vibration duration Vt2 may be 12.6 milliseconds. The vibration interval Vi1 may be 2 milliseconds, and the vibration interval Vi2 may be 1.5 milliseconds. The vibration intensity Vs1 may be 0.6 gF, and the vibration intensity Vs2 may be 0.4 gF.

For example, when the trigger operation is a swipe operation, the trigger operation may further include an action G1 (for example, a holding action or a moving action), and the action G1 is after the press action and before the release action. The preset manner may further include a manner M3. The manner M3 may be different from the manner M1 or the manner M2.

For example, the manner M3 may include one or more of a vibration waveform Vw3, a vibration intensity Vs3, a vibration duration Vt3, a vibration interval Vi3, or the like. For example, the vibration duration Vt3 may be 30.0 milliseconds, the vibration interval Vi3 may be 0.5 millisecond, and the vibration intensity Vs3 may be 0.5 gF.

For different actions included in a same operation, the watch 300 may provide different types of vibration feedback. The user can more clearly perceive responses in different phases in a process of operating the button module 10, and more clearly learn a currently detected action, so that user experience of using the button module 10 is better.

In an implementation, when the trigger operation is detected, the electronic device may play an audio in a preset manner PsM2. The preset manner PsM2 may include one or more of a waveform, loudness, duration, a quantity of times, or the like.

In a possible implementation, the preset manner PsM2 may correspond to the trigger operation. For example, loudness of the audio may correspond to a force of the trigger operation, duration of the audio may correspond to duration of the trigger operation, and a quantity of times of playing the audio may correspond to a quantity of trigger operations.

In an implementation, the loudness of the audio may be positively correlated with the force of the trigger operation, the duration of the audio may be positively correlated with the duration of the trigger operation, and the quantity of times of playing the audio may be positively correlated with the quantity of trigger operations.

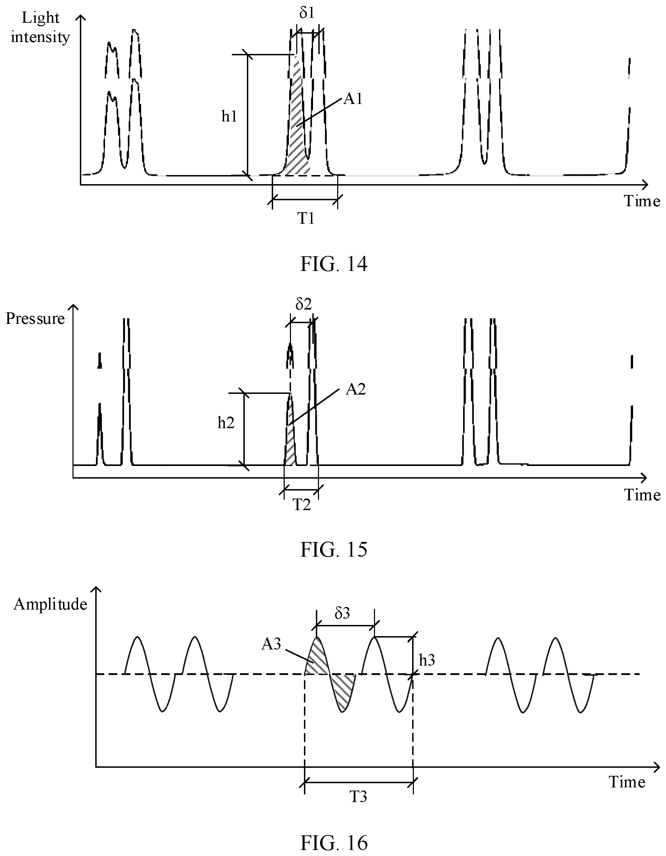

For example, the trigger operation is a double-tap operation (or an operation of consecutively tapping twice). FIG. 14 illustrates a relationship between light intensity detected by the PPG sensor and time when the button module 10 is double-tapped.

In a double-tap operation, duration of the double-tap operation is duration T1, a time interval between two tap operations is a time interval δ1, a maximum value of light intensity corresponding to a tap operation is h1, and an area enclosed by a change curve of the light intensity detected by the PPG sensor in the tap operation and a time axis is A1.

Similarly, FIG. 15 illustrates a relationship between a pressure value detected by the pressure sensor and time when the button module 10 is double-taped.

In a double-tap operation, duration of the double-tap operation is duration T2, a time interval between two tap operations is a time interval δ2, a maximum value of pressure corresponding to a tap operation is h2, and an area enclosed by a change curve of the pressure value detected by the pressure sensor in the tap operation and a time axis is A2.

For example, FIG. 16 illustrates a relationship between a waveform of an audio played by the electronic device and time in a double-tap operation. A complete sine curve in the figure may correspond to one time of audio playing. Duration of two times of audio playing may be duration T3, a time interval between the two times of audio playing is a time interval δ3, an amplitude of one time of audio playing is h3, and an area enclosed by a waveform of one time of audio playing and a time axis is A3.

In an example in which the manner of playing an audio corresponds to the action of the user, the duration T3 may be positively correlated with the duration T1 and/or the duration T2, the time interval δ3 may be positively correlated with the time interval δ1 and/or the time interval δ2, the amplitude h3 may be positively correlated with the maximum value of the light intensity h1 and/or the maximum value of pressure h2, and the area A3 may be positively correlated with the area A1 and/or the area A2.

For example, when the user presses the button module 10 with a large press force, light intensity detected by the PPG sensor is large, a pressure value detected by the pressure sensor is large, and an amplitude of the audio corresponding to the trigger operation may be large. On the contrary, when the user presses the button module 10 with a small press force, the light intensity detected by the PPG sensor is small, the pressure value detected by the pressure sensor is small, and the amplitude of the audio corresponding to the trigger operation may be small.

For example, when the user presses the button module 10 for long duration, duration of light that is detected by the PPG sensor and that is greater than or equal to a light intensity threshold may be long, duration of pressure that is detected by the pressure sensor and that is greater than or equal to a pressure threshold may be long, and play duration of the audio corresponding to the trigger operation may be long. On the contrary, when the duration of pressing the button module 10 by the user is short, the duration of light that is detected by the PPG sensor and that is greater than or equal to the light intensity threshold may be short, the duration of pressure that is detected by the pressure sensor and that is greater than or equal to the pressure threshold may be short, and the play duration of the audio corresponding to the trigger operation may be short.

For example, when a time interval between two consecutive operations on the button module 10 is short, a time interval between two adjacent detections of a maximum value of light intensity detected by the PPG sensor is short, a time interval between two adjacent detections of a maximum value of pressure detected by the pressure sensor is short, and a time interval between two times of playing the audio corresponding to the trigger operation is short, in other words, the electronic device plays the audio twice at a high frequency. On the contrary, when the time interval between two consecutive operations on the button module 10 is long, the time interval between two adjacent maximum values of light intensity detected by the PPG sensor is long, the time interval between two adjacent detections of a maximum value of pressure detected by the pressure sensor is long, and the time interval between two times of playing the audio corresponding to two trigger operations is long, in other words, the electronic device plays the audio twice at a low frequency.

For example, T3 may be 0.1×T1, 0.05×T2, 0.15×(T1+T2), or the like, δ3 may be δ1, δ2, 0.5×(δ1+δ2), or the like, and h3 may be e1×h1, e2×h2, e3×h1+e4×h2, or the like, where e1, e2, e3, and e4 are all greater than zero. A3 may be f1×A1, f2×A2, f3×A1+f4×A2, or the like, where f1, f2, f3, and f4 are all greater than zero.

In some examples, the response operation of displaying an interface by the electronic device may be related to an application scenario of the electronic device. The following describes in detail, in combination with different application scenarios, a method for displaying, by the electronic device, different interfaces based on different button events.

When the button event is a tap event, the user may start a target application by pressing the button module 10. In other words, when the tap event is detected, the watch 300 may start the target application indicated by the tap event. Alternatively, the tap event may be associated with the target application.

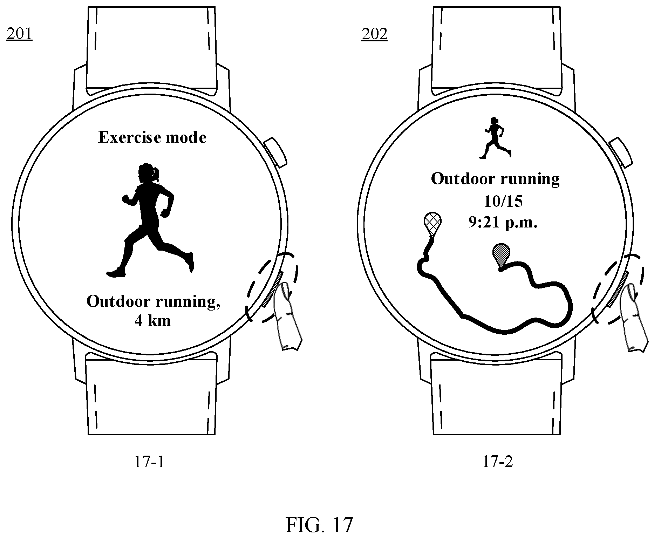

For example, in response to an operation of single-tapping the button module 10 by the user, the watch 300 may display an interface 201 shown in FIG. 17. The interface 201 may be used to enable a function related to exercise, and the like, for example, an outdoor running exercise recording function, a swimming exercise recording function, or a golf exercise recording function. For example, when the exercise is completed, in response to an operation of single-tapping the button module 10 by the user, the watch 300 may display an interface 202 shown in FIG. 17. The interface 202 may be used to display exercise records of the user, for example, running duration, a swimming distance, or a golf stroke score.

In an implementation, when it is detected that the user taps the button module 10, in response to a press action in a tap process of the user, the watch 300 may control, in the foregoing manner M1, the motor 305 to vibrate; and in response to a release action in the tap process of the user, the watch 300 may control, in the foregoing manner M2, the motor 305 to vibrate.

For example, in a scenario in which the watch 300 receives an incoming call, the user may answer the call by tapping the button module 10.

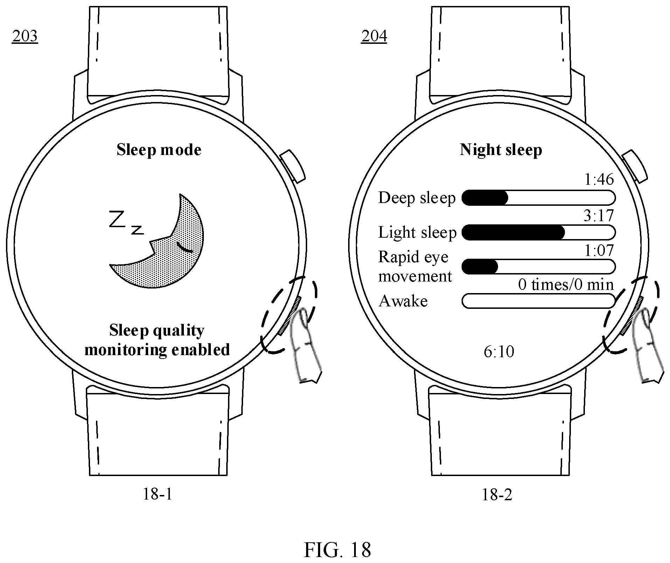

For example, in response to an operation of single-tapping the button module 10 by the user, the watch 300 may display an interface 203 shown in FIG. 18. The interface 203 may be used to enable a function related to sleep, and the like, for example, a sleep quality monitoring function or a sleep intervention function. For example, when sleep quality monitoring is completed, in response to an operation of single-tapping the button module 10 by the user, the watch 300 may display an interface 204 shown in FIG. 18. The interface 204 may be used to display a sleep quality monitoring result. For example, the interface 204 may include one or more of duration of different sleep stages during sleep of the user, total sleep duration of the user, a score of sleep quality of the user, a possible sleep problem of the user, and the like.

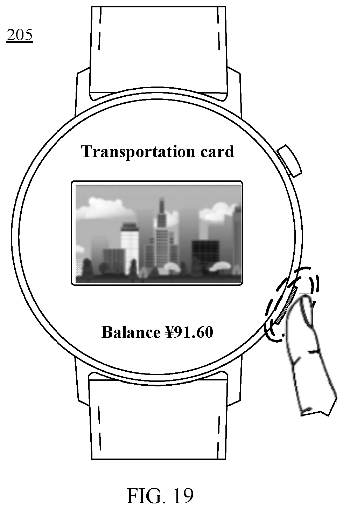

For example, in response to an operation of double-tapping (or heavily tapping) the button module 10 by the user, the watch 300 may display an interface 205 shown in FIG. 19. The interface 205 may be used to enable a function related to online payment, for example, a transportation card function or a payment two-dimensional code function.

In an example, in a scenario in which the watch 300 receives an incoming call, the user may hang up the call by tapping the button module 10.

In an implementation, when it is detected that the user double-taps (or heavily taps) the button module 10, in response to a press action in the user operation process, the watch 300 may control, in the foregoing manner M1, the motor 305 to vibrate; and in response to a release action in the user operation process, the watch 300 may control, in the foregoing manner M2, the motor 305 to vibrate.

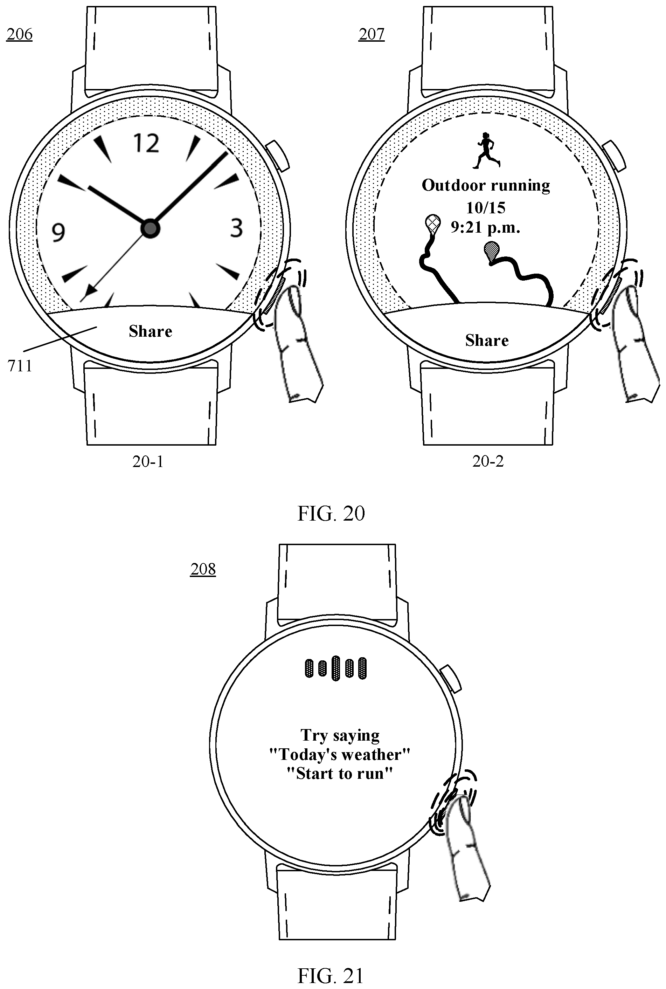

For example, in response to an operation of double-tapping the button module 10 by the user, the watch 300 may display an interface 206 or an interface 207 shown in FIG. 20. Both the interface 206 and the interface 207 may include a screenshot of an interface currently displayed by the watch 300. The interface 206 may include a screenshot of a home screen of the watch 300, and the interface 207 may include a screenshot of a display interface of an exercise application of the watch 300. In other words, in response to an operation of double-tapping the button module 10 by the user, the watch 300 may take a screenshot of the currently displayed interface.

In an implementation, the interface 206 and the interface 207 each may include a "Share" control 711, and the user may complete sharing of the screenshot by selecting the "Share" control 711.

In an implementation, the interface 206 and the interface 207 may not include the "Share" control 711. In this case, in response to an operation of double-tapping the button module 10 by the user, the watch 300 may obtain a screenshot of the currently displayed interface and directly share the screenshot based on a specified path. Herein, the specified path may be a path set by the user, or the specified path may be a default path. For example, the specified path may be social media, email, near field communication, Bluetooth, or SparkLink.

For example, after the user completes the exercise, in response to an operation of double-tapping the button module 10 by the user, the watch 300 may display an interface of the exercise application, and take a screenshot of the interface. The interface or the screenshot of the interface may include heart rate information, stride length information, pace information, and the like in an exercise process of the user.

For example, when the watch 300 displays an interface (for example, an interface of a map application) including geographical position-related information, in response to an operation of double-tapping the button module 10 by the user, the watch 300 may directly share a screenshot including the geographical position-related information to social media.

For example, when the watch 300 includes a camera, in response to an operation of double-tapping the button module 10 by the user, the watch 300 may take a photo through the camera.

For example, in response to an operation of touching and holding the button module 10 by the user, the watch 300 may display an interface 208 shown in FIG. 21. The interface 208 may be an interface of a voice assistant application of the watch 300. In other words, in response to the operation of touching and holding the button module 10 by the user, the watch 300 may invoke and display the voice assistant application.

In an implementation, when it is detected that the user touches and holds the button module 10, in response to a press action in the user operation process, the watch 300 may control, in the foregoing manner M1, the motor 305 to vibrate; and in response to a release action in the user operation process, the watch 300 may control, in the foregoing manner M2, the motor 305 to vibrate.

For example, in response to two consecutive operations of tapping the button module 10 by the user, the watch 300 may display an interface related to an artificial intelligence model. For example, when the watch 300 displays a picture, in response to two consecutive operations of tapping the button module 10 by the user, the watch 300 may display function controls such as image recognition and picture editing. These function controls may be implemented based on the foregoing artificial intelligence model. For example, when the watch 300 displays a document, if the user consecutively taps the button module 10 twice, the watch 300 may display function controls such as document organization and document expansion. These function controls may also be implemented based on the foregoing artificial intelligence model.

In an implementation, when it is detected that the user consecutively taps the button module 10 twice, the speaker 306 of the watch 300 may emit audio tones similar to "Ding" or "Dong", to prompt the user that the artificial intelligence model processing function is invoked.

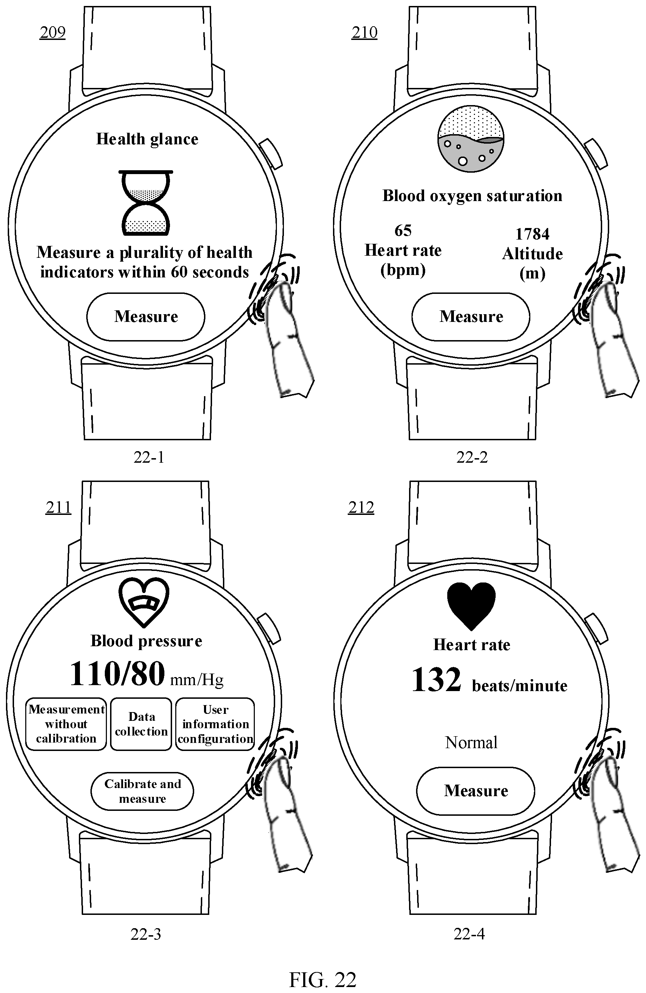

For example, in response to an operation of continuously subtly tapping the button module 10 by the user within a duration range, the watch 300 may display an interface 209 shown in FIG. 22. The interface 209 may be used to monitor physiological data of the user, for example, blood pressure, a heart rate, heart rate variability, a blood oxygen content, a respiratory rate, uric acid, emotional pressure, and a body temperature. For example, the interface 209 may be referred to as a "Health glance" interface. When the physiological data monitoring is completed, in response to the operation of continuously subtly tapping the button module 10 by the user within the duration range, the watch 300 may display a display interface of a physiological data monitoring result. For example, the watch 300 may display an interface 210 in FIG. 22. The interface 210 may be used to display a monitoring result of blood oxygen saturation of the user. In an implementation, the user may select a "Measure" control on the interface 210 to perform blood oxygen saturation measurement again, or the user may select a control such as "Calibrate and measure" on the interface 210 to perform blood oxygen saturation measurement again.

In a possible case, the button module 10 may include a pressure sensor, and the pressure sensor may be configured to monitor blood pressure of the user. In this case, in a process of monitoring the physiological data of the user, the watch 300 may also monitor the blood pressure of the user through the button module 10. When the physiological data monitoring is completed, in response to the operation of continuously subtly tapping the button module 10 by the user within the duration range, the watch 300 may display an interface 211 shown in FIG. 22. The interface 211 may be used to display a blood pressure monitoring result of the user. In an implementation, the user may also perform blood pressure measurement again by selecting a control such as "Calibrate and measure" on the interface 211.

For example, in a process in which the button module 10 monitors the blood pressure of the user through the pressure sensor, the finger of the user may continuously press the button module 10. In this case, the button module 10 may temporarily stop detecting a button event through the pressure sensor. When the blood pressure monitoring is completed, the button module 10 may resume detecting a button event through the pressure sensor.

In a possible case, the watch 300 may include a PPG sensor, and the PPG sensor may be configured to measure a heart rate of the user. In this case, in a process of monitoring the physiological data of the user, the watch 300 may also monitor a heart rate of the user. When the physiological data monitoring is completed, in response to the operation of continuously subtly tapping the button module 10 by the user within the duration range, the watch 300 may display an interface 212 shown in FIG. 22. The interface 212 may be used to display a heart rate monitoring result of the user. In an implementation, the user performs heart rate measurement again by selecting a control such as "Measure" on the interface 212.

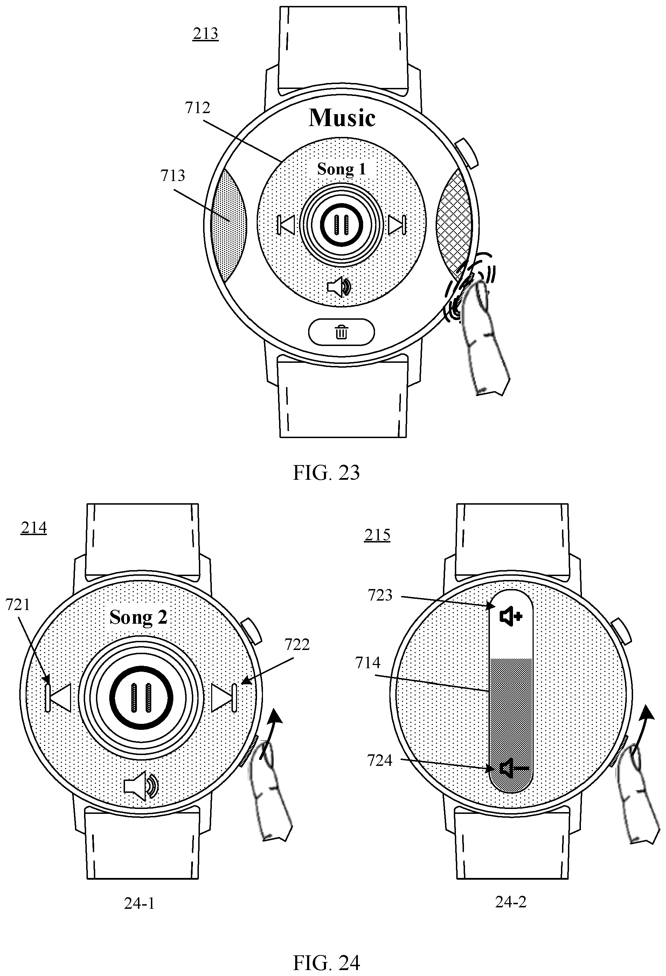

For example, in response to an operation of heavily pressing the button module 10 by the user, the watch 300 may display an interface 213 shown in FIG. 23. The interface 213 may be a multi-task switching interface of the watch 300, and the interface 213 may include a control 712 and a control 713. The control 712 may indicate an application currently displayed in the foreground of the watch 300, and the control 713 may indicate an application currently running in the background of the watch 300. For example, the user may switch, through the interface 213, a background task to the foreground for execution. In other words, the user may control, through the interface 213, the watch 300 to display a task currently running in the background.

In an implementation, the watch 300 may provide different types of feedback based on duration of an operation performed by the user on the button module 10.

For example, when the subtle tap operation of the user is detected, if duration of the subtle tap operation is greater than 1 second and less than or equal to 2 seconds, the watch 300 may indicate that the subtle tap operation is detected (for example, the motor 305 vibrates at a small amplitude). If duration of the subtle tap operation is greater than 2 seconds and less than or equal to 3 seconds, the watch 300 may display an operation guide interface related to physiological data monitoring (for example, display a relatively static state that needs to be maintained in a process of measuring an electrocardiogram). If duration of the subtle tap operation is greater than 3 seconds, the watch 300 may start to measure the physiological data of the user.

For example, when it is detected that the user touches the contact surface of the button module 10, the motor of the watch 300 may vibrate at a small vibration amplitude. When it is detected that the user touches the contact surface of the button module 10 for 0.5 second, the watch 300 may display the interface 209 shown in FIG. 22. When it is detected that the user touches the contact surface of the button module 10 for 1 second, the watch 300 may display a monitoring item related to the health glance, and prompt the user to perform physiological data monitoring in a specified manner. For example, the watch 300 may prompt the user to keep the finger still. The user may keep the finger in contact with the contact surface of the button module 10 and keep still to perform physiological data monitoring. When the user completes measurement of a plurality of pieces of physiological data based on the prompt of the watch 300, the watch 300 may display a measurement result of the physiological data, for example, display a health glance report.

In an implementation, before the subtle tap operation of the user is detected and the physiological data measurement is performed, the motor 305 of the watch 300 may continuously vibrate in a vibration manner Vm1, to notify the user that the physiological data measurement is about to start. When the physiological data measurement is performed, the motor 305 may stop vibrating, to notify the user that the physiological data measurement is being performed.

When the button event is a swipe event, the user may adjust a function of the watch 300 by swiping the button module 10.

For example, the user may select one option from a plurality of options by swiping the button module 10, or the user may adjust content of one option by swiping the button module 10.

For example, the user may implement an adjustment function (for example, an up/down page flip function) in a direction Dg by swiping the button module 10, or the user may implement an adjustment function (for example, a left/right page flip function) in a direction Dh by swiping the button module 10. The direction Dg and the direction Dh may be two directions perpendicular to each other. For example, the adjustment function in the direction Dg may be used to control switching between different interfaces on the watch 300 or adjustment of a function control on an interface. The adjustment function in the direction Dh may be used to control adjustment of a function control on an interface on the watch 300 or switching between different interfaces.

For example, an interface 214 shown in FIG. 24 may be considered as a play interface of a "Music" application of the watch 300. In response to an operation of upward swiping the button module 10 by the user, the watch 300 may play a previous track of a current track. In response to an operation of downward swiping the button module 10 by the user, the watch 300 may play a next track of the current track. In other words, upward swiping the button module 10 may implement a function of tapping a "Previous" button 721 on the interface 214, and downward swiping the button module 10 may implement a function of tapping a "Next" button 722 on the interface 214.

For example, in response to an operation of swiping the button module 10 by the user, the watch 300 may display an interface 215 shown in FIG. 24. The interface 215 may be used to adjust volume of the watch 300. For example, in response to the operation of upward swiping the button module 10 by the user, the watch 300 may turn up volume of a current device. In response to the operation of downward swiping the button module 10 by the user, the watch 300 may turn down the volume of the current device. In other words, upward swiping the button module 10 may implement a function of tapping a "Volume+" button 723 on the interface 215, and downward swiping the button module 10 may implement a function of tapping a "Volume-" button 724 on the interface 215. Alternatively, upward swiping the button module 10 may implement a function of upward swiping a "Volume adjustment" control 714, and downward swiping the button module 10 may implement a function of downward swiping the "Volume adjustment" control 714.

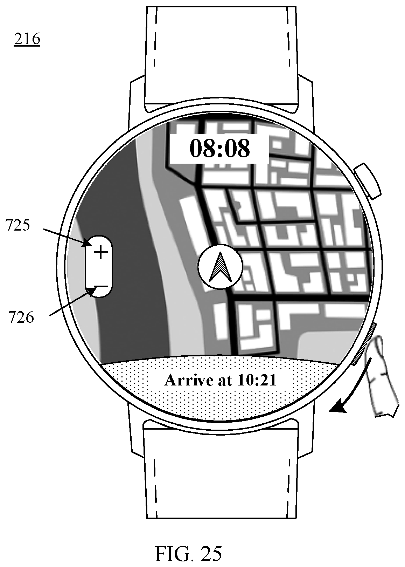

For example, an interface 216 shown in FIG. 25 may be considered as an interface of a "Maps" application of the watch 300. In response to the operation of swiping the button module 10 by the user, the watch 300 may zoom in or zoom out the interface 216. In other words, upward swiping the button module 10 may implement a function of tapping a "Zoom in" button 725 on the interface 216, and downward swiping the button module 10 may implement a function of tapping a "Zoom out" button 726 on the interface 216.

Alternatively, in response to the operation of swiping the button module 10 by the user, the watch 300 may adjust a map location displayed on the interface 216. For example, in response to the operation of upward swiping the button module 10 by the user, the watch 300 may display a map at a location that is one distance unit above a location displayed on the interface 216. In response to the operation of downward swiping the button module 10 by the user, the watch 300 may display a map at a location that is one distance unit below the location displayed on the interface 216. In other words, the operation of upward swiping the button module 10 may implement a function of downward dragging the interface 216, and the operation of downward swiping the button module 10 may implement a function of upward dragging the interface 216.

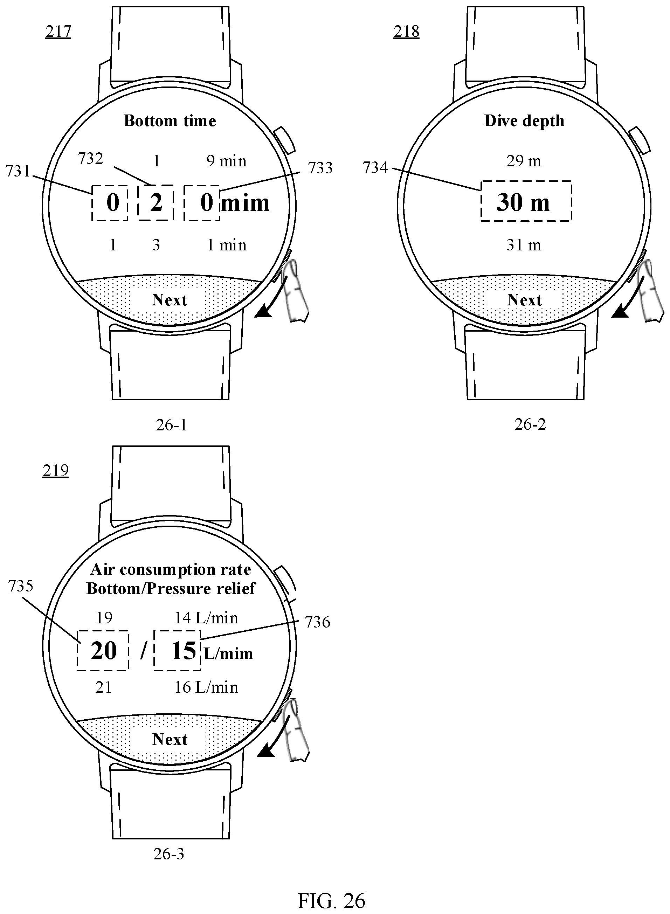

For example, an interface 217 shown in FIG. 26 may be considered as an interface 217 of a "Dive" application of the watch 300, and the interface 217 may be used to set bottom stay duration. The interface 217 may include an adjustment button 731, an adjustment button 732, and an adjustment button 733. Values in the three adjustment buttons may be separately set, and the bottom stay duration may be determined based on the values in the three adjustment buttons.

For example, in response to the operation of swiping the button module 10 by the user, the watch 300 may switch a button currently adjusted by the user on the interface 217. For example, in response to the operation of downward swiping the button module 10 by the user, the watch 300 may switch a currently selected adjustment button from the adjustment button 731 to the adjustment button 732. In response to the operation of upward swiping the button module 10 by the user, the watch 300 may switch a currently selected adjustment button from the adjustment button 733 to the adjustment button 732.

Alternatively, in response to the operation of swiping the button module 10 by the user, the watch 300 may adjust a value in a currently selected adjustment button. For example, when the currently selected adjustment button is the adjustment button 732, in response to the operation of upward swiping the button module 10 by the user, the watch 300 may increase a value in the adjustment button 732 (for example, from "2" to "3"). In response to the operation of downward swiping the button module 10 by the user, the watch 300 may decrease a value in the adjustment button 732 (for example, from "2" to "1").

Similarly, the interface 218 shown in FIG. 26 may be considered as another interface of the "Dive" application of the watch 300, and the interface 218 may be used to set a dive depth. For example, in response to an operation of swiping the button module 10 by the user, the watch 300 may adjust a value in a dive depth adjustment button 734. For example, in response to the operation of upward swiping the button module 10 by the user, the watch 300 may increase a value in the adjustment button 734. In response to the operation of downward swiping the button module 10 by the user, the watch 300 may decrease a value in the adjustment button 734.

Similarly, an interface 219 shown in FIG. 26 may be considered as another interface of the "Dive" application of the watch 300, and the interface 219 may be used to set an air consumption rate. For example, in response to the operation of upward swiping the button module 10 or downward swiping the button module 10 by the user, the watch 300 may switch a currently selected adjustment button from the adjustment button 735 to the adjustment button 736, or switch a currently selected adjustment button from the adjustment button 736 to the adjustment button 735. For example, in response to the operation of swiping the button module 10 by the user, the watch 300 may switch a value in a currently selected adjustment button on the interface 219.

For example, the watch 300 may have a waterproof function. Therefore, the user may operate the button module 10 underwater to select and adjust a function of the watch 300.

The button module 10 may identify an operation of the user by detecting different types of signals. A manner of detecting the signals, a manner of processing the signals, and the like of the button module 10 affect power consumption of the button module 10.

In some examples, one or more sensors included in the button module 10 may detect, at a low frequency, a signal indicating a user operation. In this case, power consumption of collecting the signal by the sensor is low, power consumption of processing the signal by the button module 10 is low, and overall power consumption of the button module 10 is low. In some scenarios, this low power consumption operation mode of the button module 10 may be referred to as a low power consumption mode, a power saving mode, or the like.

In some examples, one or more sensors included in the button module 10 may detect, at a high frequency, a signal indicating a user operation. In this case, the sensor can collect the foregoing signal in time, and the button module 10 and the electronic device including the button module 10 can respond to the user operation in time. In some scenarios, this mode of collecting a signal at a high frequency by the button module 10 may be referred to as a polling mode, a high-performance mode, or the like.

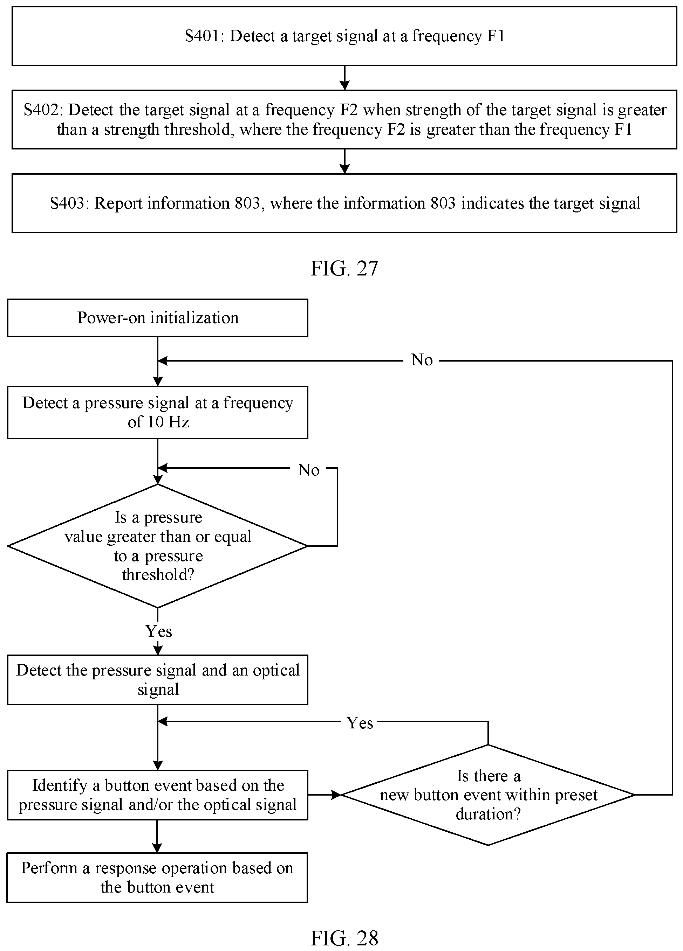

FIG. 27 shows another button interaction method according to an embodiment of this application. The button module 10 may adjust, based on status information of a device, an application scenario of the device, a usage habit of a user, and the like, a frequency of detecting a target signal and a manner of reporting information related to the target signal, thereby improving applicability of the button module 10 in different application scenarios, and enhancing user experience of the button module 10 in different application scenarios.

S401: A sensor Sa detects a target signal at a frequency F1.

Herein, the sensor Sa is a sensor included in the button module 10, for example, any one of the foregoing pressure sensor, capacitive sensor, ECG sensor, bioimpedance sensor, infrared sensor, thermocouple, piezoelectric sensor, PPG sensor, ultrasonic wave-based sensor, elastic wave-based sensor, millimeter wave-based sensor, and electromagnetic wave-based sensor.

Herein, the target signal is a signal detected by the foregoing sensor, in other words, the target signal corresponds to the foregoing sensor. For example, the target signal may be any one of the foregoing pressure signal, capacitance signal, elastic wave signal, ultrasonic signal, and bioimpedance signal.

For example, a value of the frequency F1 may be small, for example, 10 Hz, 20 Hz, or 25 Hz. When the sensor Sa detects the target signal at the frequency F1, power consumption of the sensor Sa is low, and the sensor Sa is insensitive to an operation performed by the user on the button module 10.

In a possible case, the frequency F1 may be a default value of a frequency at which the sensor Sa detects the target signal. In other words, in a more general case, the sensor Sa may detect the target signal at a low frequency. This can reduce, to a specific extent, power consumption generated by the button module 10 due to detection of the target signal, and can improve energy utilization efficiency of an electronic device.

In a possible case, the sensor Sa may alternatively detect the target signal at a higher frequency. In this case, the electronic device has higher efficiency of identifying an operation of a user, and can respond to an operation performed on a button in a timelier manner.

In some examples, the sensor Sa may determine, based on whether an interrupt event is triggered, whether to detect the target signal at the frequency F1. Specifically, if no interrupt event is triggered, the sensor Sa detects the target signal at the frequency F1; otherwise, the sensor Sa detects the target signal at a frequency F2, where the frequency F2 is greater than the frequency F1.

For example, the interrupt event may be determined based on a relationship between strength of the target signal and a strength threshold. For example, when the strength of the target signal is less than the strength threshold, the interrupt event is not triggered. When the strength of the target signal is greater than or equal to the strength threshold, the interrupt event is triggered.

For example, the interrupt event may be determined based on a signal detected by another sensor. For example, the button module 10 may further include a sensor Sb, and the interrupt event may be determined based on a signal detected by the sensor Sb.

In some examples, the sensor Sa may determine, based on status information of the electronic device including the button module 10, whether to detect the target signal at the frequency F1. Alternatively, the electronic device may control, based on the status information, the sensor Sa to detect the target signal at the frequency F1.

For example, the status information of the electronic device may include one or more of the following: a state of charge, a running status of a processor, a device usage mode, a currently running application, and the like.

For example, when the state of charge of the electronic device is less than or equal to a state of charge threshold (for example, 20%), the sensor Sa may detect the target signal at the frequency F1.

For example, when the processor of the electronic device is in an idle state or a sleep state, or when a running frequency of a core of the processor of the electronic device is less than a frequency threshold (for example, 25% of a maximum running frequency), the sensor Sa may detect the target signal at the frequency F1.

For example, when the electronic device is in a "Do not disturb mode", a "Sleep mode", an "Exercise mode", a "Power Saving mode", or the like, the sensor Sa may detect the target signal at the frequency F1.

For example, when the currently running application does not support or does not require control of the button module 10, the sensor Sa may detect the target signal at the frequency F1.

In some examples, the sensor Sa may determine, based on a usage habit of the user, whether to detect the target signal at the frequency F1. Alternatively, the electronic device may control, based on a usage habit of the user, the sensor Sa to detect the target signal at the frequency F1.

For example, the usage habit of the user may be related to time, a place, and the like. In an implementation, the place may be determined based on a global positioning system sensor of the electronic device, or the like.

For example, between 9:00 p.m. and 08:00 a.m., the user uses the electronic device at a low frequency. In this period of time, the sensor Sa may detect the target signal at the frequency F1.

For example, when the user is in an office, the user uses the electronic device at a low frequency. In this case, the sensor Sa may detect the target signal at the frequency F1.

In some examples, the sensor Sa may determine, based on an activity status of the user, whether to detect the target signal at the frequency F1. Alternatively, the electronic device may control, based on the activity status of the user, the sensor Sa to detect the target signal at the frequency F1.

For example, the activity status of the user may include a motion state, a sleep state, a rest state, and the like. In an implementation, the activity status of the user may be determined based on an accelerometer, a magnetometer, a gyroscope, a PPG sensor, and the like of the electronic device.

For example, when the user is in a motion state (for example, running or swimming), the user uses the electronic device at a low frequency. In this case, the sensor Sa may detect the target signal at the frequency F1.

For example, when the user is in a sleep state, the user uses the electronic device at a low frequency. In this case, the sensor Sa may detect the target signal at the frequency F1.

S402: The sensor Sa detects the target signal at the frequency F2 when measured strength of the target signal is greater than or equal to the strength threshold.

In some examples, that the strength of the target signal is greater than or equal to the strength threshold may be considered as an interrupt event. Therefore, the foregoing solution may also be understood as follows: When an interrupt event is detected, the sensor Sa detects the target signal at the frequency F2.

The strength of the target signal may have different meanings based on different types of the target signal.

For example, the target signal may be a pressure signal. In this case, the strength of the target signal may be understood as a magnitude of pressure that is detected by the pressure sensor and that is applied to the contact surface of the button module 10.

For example, the target signal may be an optical signal. In this case, the strength of the target signal may be understood as intensity of light detected by a photodiode of the PPG sensor.

For example, the target signal may be a capacitance signal. In this case, the strength of the target signal may be understood as a magnitude of a capacitance value detected by the capacitive sensor.

In some examples, the sensor Sa may report information 801 to the processor of the electronic device. The information 801 may indicate that the strength of the target signal is greater than or equal to the strength threshold, or the signal 801 may indicate the interrupt event. When receiving the information 801, the processor may send information 802 to the sensor Sa. The information 802 may indicate to detect the target signal at the frequency F2.

In an example, the processor may be located in the button module 10.

For example, the processor may be one or more of the following: a central processing unit (central processing unit, CPU), a micro controller unit (micro controller unit, MCU), a field-programmable gate array (field-programmable gate array, FPGA), and the like.

When the strength of the target signal is greater than or equal to the strength threshold, in other words, when the interrupt event is triggered, the user may be operating the button module 10, for example, pressing the contact surface of the button module 10 or swiping on the contact surface of the button module 10. In this case, the target signal is detected at a higher frequency, so that an operation of the user can be detected in time, and the electronic device can respond to the operation of the user in time.

S403: The sensor Sa reports information 803, where the information 803 indicates the target signal.

For example, the sensor Sa may report the information 803 to the processor (for example, a central processing unit, a micro controller unit, or a field-programmable gate array) of the electronic device.

In some examples, the information 803 may indicate one or more of the following: whether the measured strength of the target signal is greater than or equal to the strength threshold; duration in which the measured strength of the target signal is greater than or equal to the strength threshold; and a quantity of times that the measured strength of the target signal is greater than or equal to the strength threshold. In other words, the information 803 may indicate one or more of the following: whether an interrupt event occurs, duration of the interrupt event, and a quantity of occurrences of the interrupt event.

By reporting information related to the interrupt event, the sensor Sa performs a reporting operation at a lower frequency, and power consumption caused by the reporting operation is lower.

In some examples, the information 803 may include the measured strength of the target signal.

By reporting the measured strength of the target signal, the electronic device can obtain a detection result of the sensor Sa in a timelier manner, and the electronic device can identify an operation of the user in time and make a response.

In some examples, the processor of the electronic device may determine, based on the information 803, a button event detected by the button module 10, and identify an operation of the user, to make a response.

For how the electronic device determines a button event or how the electronic device identifies a trigger operation, refer to the foregoing content. Details are not described herein again. For how the electronic device responds to the operation of the user, refer to the foregoing content.

In some examples, the electronic device may continuously obtain, within preset duration, a signal detected by the button module 10, and determine whether to trigger a button event. When no button event is triggered within the preset duration, the electronic device may control the sensor Sa to detect the target signal at the frequency F1.

The electronic device may control the sensor Sa to resume detecting the target signal at a low frequency in time, thereby helping control power consumption of the button module 10 and improving energy utilization efficiency of the electronic device.

For example, as shown in FIG. 28, when the button module 10 includes a pressure sensor and/or a PPG sensor, the electronic device may control the pressure sensor to detect a pressure signal at a low frequency of 10 Hz.

When a pressure value indicated by the pressure signal is greater than or equal to a pressure threshold, the electronic device may control the PPG sensor to detect an optical signal, and control the pressure sensor to detect the pressure signal at a high frequency of 50 Hz. When a pressure value indicated by the pressure signal is less than a pressure threshold, the electronic device may control the pressure sensor to still detect the pressure signal at a low frequency of 10 Hz, and control the PPG sensor not to detect an optical signal.

The electronic device may identify the button event based on the pressure signal and/or the optical signal according to the method described above, and perform a corresponding response operation. If no new button event is detected within the preset duration, the electronic device may control the pressure sensor to detect a pressure signal at a frequency of 10 Hz. If a new button event is detected within the preset duration, the electronic device may identify the new button event and continue to perform a corresponding response operation.

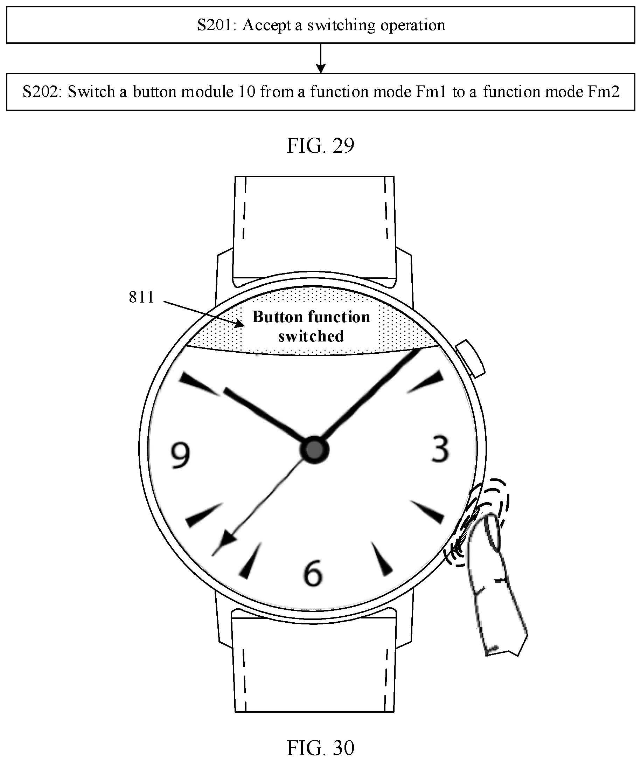

The foregoing examples describe a plurality of interaction manners that can be implemented by the button module 10. To simplify a button operation, or to better implement cooperation between an interaction manner of the button module 10 and another interaction manner (for example, a crown) included in the electronic device, an embodiment of this application provides a button interaction method shown in FIG. 29. According to the method, a user can switch an interaction manner or a button function mode of a button, a plurality of interaction manners of the electronic device can cooperate with each other, the electronic device can more efficiently obtain an input of the user, and user experience is better.

S201: The electronic device accepts a switching operation of the user.

In some examples, the button module 10 may include a function mode Fm1 and a function mode Fm2, and the switching operation of the user may be used to implement switching between the function mode Fm1 and the function mode Fm2.

For example, the function mode Fm1 may be used to detect a swipe event (for example, a swipe-up event or a swipe-down event), and the function mode Fm2 may be used to detect a tap event.

In some scenarios, the function mode Fm1 may be referred to as a "Crown mode", and the function mode Fm2 may be referred to as a "Single-button mode". In other words, in the function mode Fm1, the button module 10 may implement a function similar to that of the crown. In the function mode Fm2, the button module 10 may implement a function similar to that of the button.

For example, the function mode Fm1 may be used to detect a first-type tap event, and the function mode Fm2 may be used to detect a second-type tap event.

For example, the first-type tap event may include one or more of a light tap event, a heavy tap event, a short tap event, a touch and hold event, a subtle tap event, a single-tap event, a double-tap event, and the like. For example, the second-type tap event may include one or more of a light tap event, a heavy tap event, a short tap event, a touch and hold event, a subtle tap event, a single-tap event, a double-tap event, and the like. The first-type tap event is different from the second-type tap event.

For example, the first-type tap event may include a light short tap event, a light touch and hold event, and the like, and the second-type tap event may include a heavy short tap event, a heavy touch and hold event, and the like. In other words, in the function mode Fm1, the button module 10 may be configured to respond to a light tap operation of the user, and in the function mode Fm2, the button module 10 may be configured to respond to a heavy tap operation of the user. Alternatively, the first-type tap event may include a heavy short tap event, a heavy touch and hold event, and the like, and the second-type tap event may include a light short tap event, a light touch and hold event, and the like. In other words, in the function mode Fm1, the button module 10 may be configured to respond to a heavy tap operation of the user, and in the function mode Fm2, the button module 10 may be configured to respond to a light tap operation of the user.

For example, the first-type tap event may include a light short tap event, a heavy short tap event, and the like, and the second-type tap event may include a light touch and hold event, a heavy touch and hold event, and the like. In other words, in the function mode Fm1, the button module 10 may be configured to respond to a short tap operation of the user, and in the function mode Fm2, the button module 10 may be configured to respond to a touch and hold operation of the user. Alternatively, the first-type tap event may include a light touch and hold event, a heavy touch and hold event, and the like, and the second-type tap event may include a light short tap event, a heavy short tap event, and the like. In other words, in the function mode Fm1, the button module 10 may be configured to respond to a touch and hold operation of the user, and in the function mode Fm2, the button module 10 may be configured to respond to a short tap operation of the user.

For example, in the function mode Fm1, in response to an operation of swiping the button module 10 by the user, the electronic device may perform adjustment in a direction Dg (for example, up/down page flip). In the function mode Fm2, in response to an operation of swiping the button module 10 by the user, the electronic device may perform adjustment in a direction Dh (for example, left/right page flip). In other words, the user may switch the button module 10 from an adjustment function mode in the direction Dg to an adjustment function mode in the direction Dh, or switch the button module 10 from an adjustment function mode in the direction Dh to an adjustment function mode in the direction Dg. In a possible case, the direction Dg and the direction Dh may be two directions perpendicular to each other.

It may be understood that, in different application scenarios or in different applications, the adjustment in the direction Dg or the adjustment in the direction Dh may implement different functions. For related content, refer to related content in FIG. 24 to FIG. 26. Details are not described herein again.

In some examples, the switching operation may be an operation performed on the button module 10. For example, the button module 10 is heavily and shortly pressed, the button module 10 is heavily touched and held, the button module 10 is double-tapped, or the button module 10 is triple-tapped.

In some examples, the switching operation may be an operation performed on a crown 304. For example, the crown 304 is touched and held, or the crown is double-tapped.

In some examples, the switching operation may be a combined operation performed on the button module 10 and the crown 304. For example, the crown 304 and the button module 10 are shortly pressed at the same time, and the crown 304 and the button module 10 are touched and held at the same time.

In some examples, the switching operation may be a gesture operation. As an example, the switching operation may include a gesture operation Gs1 and a gesture operation Gs2. The gesture operation Gs1 may be used to switch the button module 10 from the function mode Fm1 to the function mode Fm2. The gesture operation Gs2 may be used to switch the button module 10 from the function mode Fm2 to the function mode Fm1.

For example, the gesture operation Gs1 may be a first clenching operation, and the gesture operation Gs2 may be an operation of opening a palm. Alternatively, the gesture operation Gs1 may be a palm upward operation, and the gesture operation Gs2 may be a palm downward operation. Alternatively, the gesture operation Gs1 may be a flip operation with a palm facing upward, and the gesture operation Gs2 may be a flip operation with a palm facing downward. Alternatively, the gesture operation Gs1 may be a finger spread operation, and the gesture operation Gs2 may be a finger close operation. Alternatively, both the gesture operation Gs1 and the gesture operation Gs2 may be operations of shaking a watch 300.

In an implementation, the watch 300 may detect the foregoing gesture operation through an accelerometer, a magnetometer, a gyroscope, a camera, a PPG sensor included in the button module 10, or the like of the watch 300, and complete switching of a function mode of the button module 10.

In some examples, the electronic device may include a selection interface used to select the function mode Fm1 and the function mode Fm2, and the foregoing switching operation may be an operation performed on the selection interface. For related content of the selection interface, refer to the following descriptions.

S202: The electronic device switches the button module 10 from the function mode Fm1 to the function mode Fm2.

For example, as shown in FIG. 30, in response to an operation of double-tapping the button module 10 by the user, the electronic device may display information 811. The information 811 may indicate that the function mode of the button module 10 has been switched. For example, the information 811 may indicate that the button module 10 is switched from the function mode Fm1 to the function mode Fm2, or the information 811 may indicate that the button module 10 is switched from the function mode Fm2 to the function mode Fm1.

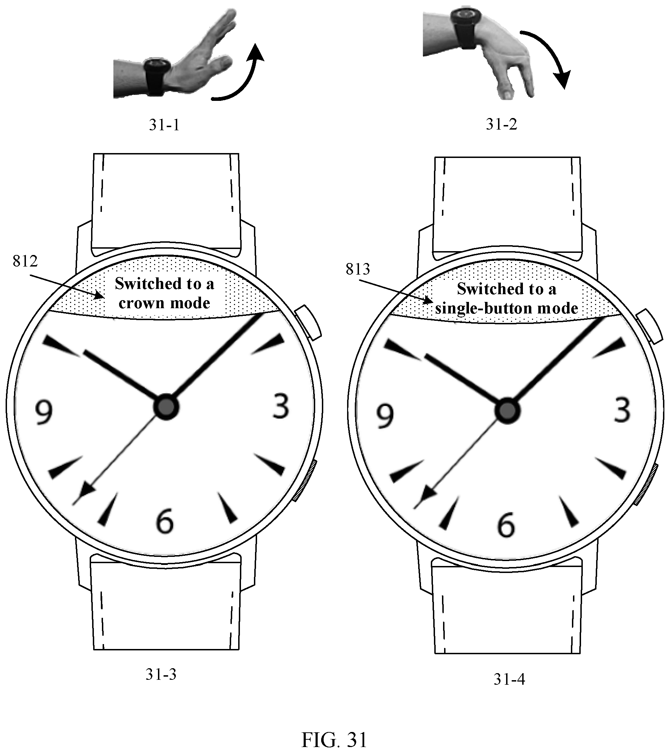

For example, as shown in FIG. 31, in response to a palm upward operation of the user, the electronic device may display information 812. The information 812 may indicate that the function mode of the button module 10 has been switched to the function mode Fm1. In response to a palm downward operation of the user, the electronic device may display information 813. The information 813 may indicate that the function mode of the button module 10 has been switched to the function mode Fm2.

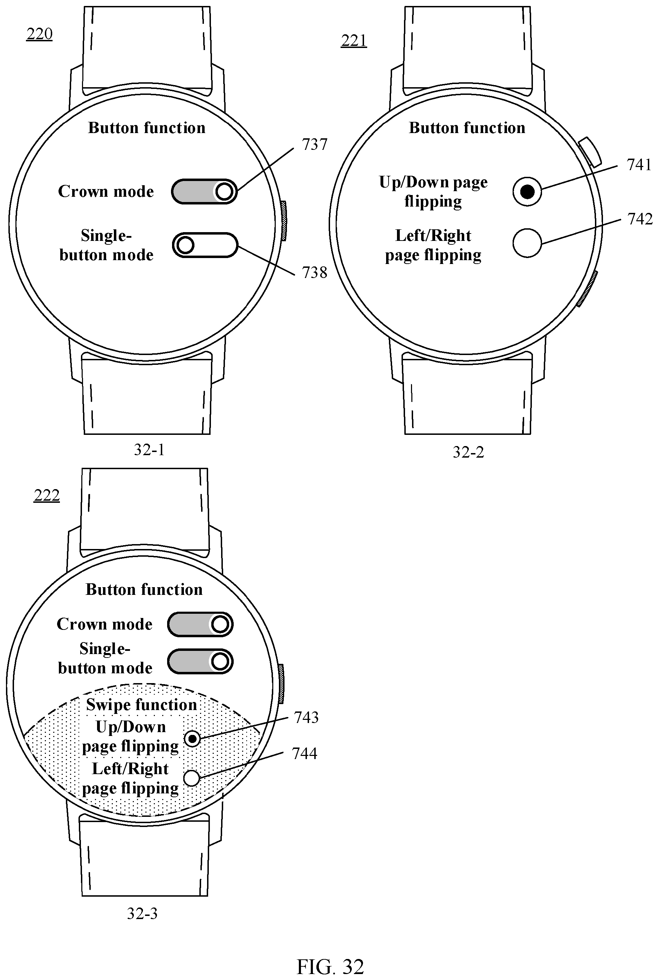

For example, as shown in FIG. 32, the electronic device may display an interface 220 and an interface 221, and the interface 220 and the interface 221 may be used to switch the function mode of the button module 10.

For example, the interface 220 may be used to enable a function of detecting the first-type tap event and the swipe event by the button module 10. The interface 220 may alternatively be used to enable a function of detecting the second-type tap event by the button module 10. The interface 220 may alternatively be used to enable both the foregoing two functions. In an implementation, the interface 220 may include a function switch 737 and a function switch 738. When the function switch 737 is enabled, the button module 10 may be configured to detect the first-type tap event and the swipe event. When the function switch 738 is enabled, the button module 10 may be configured to detect the second-type tap event. When both the function switch 737 and the function switch 738 are enabled, the button module 10 may be configured to detect the first-type tap event, the second-type tap event, and the swipe event.

For example, the interface 221 may be used to select a swipe function of the button module 10, for example, swiping the button module 10 to implement up/down page flipping, or swiping the button module 10 to implement left/right page flipping. In an implementation, the interface 221 may include a function option 741 and a function option 742. When the function option 741 is selected, the button module 10 may be configured to flip pages up and down. When the function option 742 is selected, the button module 10 may be configured to flip pages left and right.

In a possible case, when the function switch 737 is enabled, the electronic device may display an interface 222 shown in FIG. 32. The interface 222 may be used to select a swipe function of the button module 10.

For example, similar to the interface 221, the interface 222 may include a function option 743 and a function option 744. When the function option 743 is selected, the button module 10 may be configured to flip pages up and down. When the function option 744 is selected, the button module 10 may be configured to flip pages left and right.

In a possible case, the electronic device may include the crown 304 and the button module 10 described above. The user may implement a function of flipping pages up and down or flipping pages left and right by rotating the crown 304, or may implement a function of flipping pages up and down or flipping pages left and right through the button module 10.

In a possible case, the electronic device may include the button module 10 and another button (for example, the button 320 described above) that supports a swipe function. The button module 10 implements a function of flipping pages up and down or flipping pages left and right, or may implement a function of flipping pages up and down or flipping pages left and right through the button 320.

In an implementation, the button 320 may detect a swipe operation of the user through a sensor array, to support a swipe function.

In a possible case, the electronic device may include two button modules 10, for example, referred to as a button module 10a and a button module 10b. Functions of the two button modules are similar. For example, both the button module 10a and the button module 10b may be configured to implement a function of flipping pages up and down or flipping pages left and right.

In the foregoing two cases, a function of rotating the crown 304 and a function of swiping the button module 10 may be duplicate, a function of swiping the button module 10a and a function of swiping the button module 10b may be duplicate, and a function of swiping the button module 10 and a function of swiping the button 320 may be duplicate.

To improve efficiency of obtaining user input information by the electronic device, and enhance user experience, in a feasible implementation, when the swipe function of the button module 10 is set, the electronic device may correspondingly set the function of rotating the crown 304. When the function of rotating the crown 304 is set, the electronic device may correspondingly set the swipe function of the button module 10. When the swipe function of the button module 10a is set, the electronic device may correspondingly set the swipe function of the button module 10b. When the swipe function of the button module 10 is set, the electronic device may correspondingly set the swipe function of the button 320.

For example, when the swipe function of the button module 10 is set to up/down page flipping, the electronic device may correspondingly set the function of rotating the crown 304 to left/right page flipping. Alternatively, when the swipe function of the button module 10 is set to left/right page flipping, the electronic device may correspondingly set the function of rotating the crown 304 to up/down page flipping.

Similarly, when the function of rotating the crown 304 is set to up/down page flipping, the electronic device may correspondingly set the swipe function of the button module 10 to left/right page flipping. Alternatively, when the function of rotating the crown 304 is set to left/right page flipping, the electronic device may correspondingly set the swipe function of the button module 10 to up/down page flipping.

For example, when the swipe function of the button module 10a is set to up/down page flipping, the electronic device may correspondingly set the swipe function of the button module 10b to left/right page flipping. Alternatively, when the swipe function of the button module 10a is set to left/right page flipping, the electronic device may correspondingly set the swipe function of the button module 10b to up/down page flipping.

For example, when the swipe function of the button module 10 is set to up/down page flipping, the electronic device may correspondingly set the swipe function of the button 320 to left/right page flipping. Alternatively, when the swipe function of the button module 10 is set to left/right page flipping, the electronic device may correspondingly set the swipe function of the button 320 to up/down page flipping.

Similarly, when the user sets the swipe function of the button 320 to up/down page flipping, the electronic device may correspondingly set the swipe function of the button module 10 to left/right page flipping. Alternatively, when the user sets the swipe function of the button 320 to left/right page flipping, the electronic device may correspondingly set the swipe function of the button module 10 to up/down page flipping.

In combination with the interface 214 shown in FIG. 24, the user may select a previous track or a next track by swiping the button module 10, and increase or decrease volume by rotating the crown 304. Alternatively, the user may increase or decrease volume by swiping the button module 10, and select a previous track or a next track by rotating the crown 304.

In combination with the interface 216 shown in FIG. 25, the user may swipe the button module 10a to zoom in or zoom out the map, and swipe the button module 10b to adjust the map location. Alternatively, the user may adjust the map location by swiping the button module 10a, and zoom in or zoom out the map by swiping the button module 10b.

In combination with the interface 217 shown in FIG. 26, the user may select the adjustment button 731, the adjustment button 732, and the adjustment button 733 by swiping the button module 10, and adjust a value in the adjustment button by swiping the button 320. Alternatively, the user may select the adjustment button 731, the adjustment button 732, and the adjustment button 733 by swiping the button 320, and adjust a value in the adjustment button by swiping the button module 10.

The electronic device may switch the function mode of the button module 10 in response to a switching operation of the user, to help improve applicability of the button module 10 in different application scenarios. When the electronic device includes another interaction manner, a function of the button module 10 may cooperate with the another interaction manner, to enhance interaction experience of the user in using the electronic device.

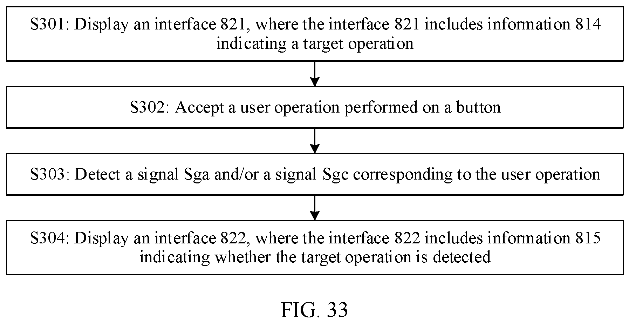

To enable the user to quickly get familiar with a usage method of the button module 10 and a function of the button module 10 at an initial stage of using the electronic device, FIG. 33 shows another interaction method according to an embodiment of this application. In the interaction method, the electronic device may provide feedback information based on a status of operating the button module 10 by the user, so that the user can more intuitively perceive a deviation between a current operation and a target operation, and more quickly get familiar with the usage method of the button module 10.

For example, the application that assists the user in getting familiar with the usage method of the button module 10 may be a bouncing game application, a shooting game application, a throwing game application, a ball game application, or the like. In these applications, the button module 10 may implement a specific function, in other words, when the user uses these applications, the button module 10 may implement the foregoing specific function. In other words, these applications may be adapted to the button module 10. The button module 10 may also be adapted to different applications, so that the button module 10 has different control functions in different applications.

In an implementation, strength of a signal detected by the button module 10 may be positively correlated with a bouncing height of a control object of the bouncing game, or a swipe distance of a user swipe operation detected by the button module 10 may be positively correlated with a bouncing height of a control object of the bouncing game.

In an implementation, strength of a signal detected by the button module 10 may be positively correlated with an initial speed of a control object of the shooting game, the throwing game, the ball game, or the like, or a swipe distance of a user swipe operation detected by the button module 10 may be positively correlated with an initial speed of a control object of the shooting game, the throwing game, the ball game, or the like, a movement distance of the control object, or the like.

S301: The electronic device displays an interface 821. The interface 821 includes information 814 indicating a target operation.

The target operation may be understood as a preset tap operation or a preset swipe operation. In a possible case, the target operation may be a tap operation or a swipe operation that can be identified by the button module 10.

In some examples, the target operation may include one or more of the following: a light tap operation, a heavy tap operation, a short tap operation, a touch and hold operation, a swipe operation, a double-tap operation, and the like.

In some examples, the interface 821 may be understood as an interface of the application used to assist the user in getting familiar with the usage method of the button module 10. For example, the interface 821 may be used to assist the user in getting familiar with an action force of pressing the button module 10. For example, the interface 821 may be used to assist the user in getting familiar with a time interval between two consecutive taps on the button module 10 in an operation process of continuously tapping (for example, double-tapping) the button module 10. For example, the interface 821 may be used to assist the user in getting familiar with a swipe distance on the button module 10 in a swipe operation process.

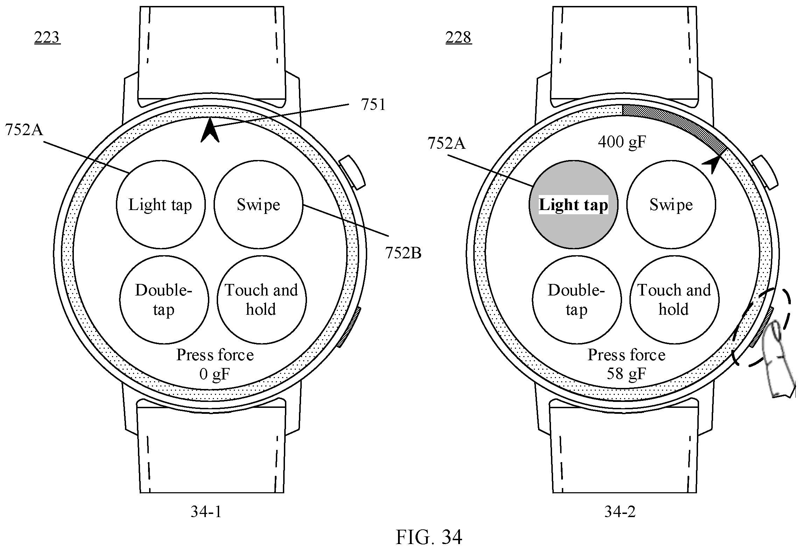

For example, FIG. 34 may show an interface 223 of an app1. The interface 223 may include a control 751. The control 751 may indicate a value of pressure that is applied by the user to the button module 10 and that is detected by the electronic device, or the control 751 may indicate a swipe distance that is of the user on a contact surface of the button module 10 and that is detected by the electronic device. The interface 223 may further include a plurality of controls indicating a to-be-detected target operation, for example, a control 752A and a control 752B. For example, the control 752A and the control 752B may be in a shape of a circle, and the circle may include text information indicating the target operation, such as "Light tap", "Swipe", "Double-tap", "Touch and hold", and "Swipe". In some examples, the user may perform usage training on the button module 10, for example, press the button module 10 or swipe the button module 10. When the target operation displayed on the interface 223 is detected, the interface 223 may prompt the corresponding target operation.

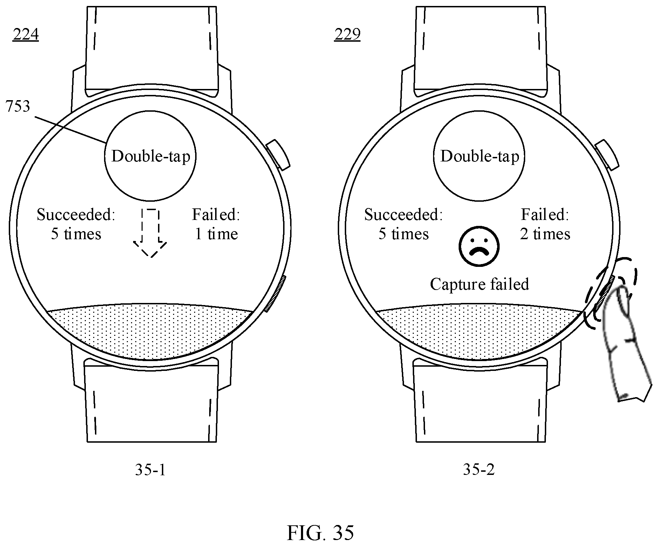

For example, FIG. 35 may show an interface 224 of an app2. The interface 224 may include a control 753, and the control 753 may indicate a to-be-detected target operation. For example, the control 753 may be in a shape of a circle, and the circle may include text information indicating a target operation, such as " Light tap", "Swipe", "Double-tap", and "Touch and hold". The control 753 may gradually move from a top to a bottom of the interface 224, and the user needs to complete the target operation before the control 753 is in contact with the bottom of the interface 224. In some examples, the user may perform usage training on the button module 10, and some target operations may randomly appear on the interface 224. When the user performs a corresponding action within specified time, a prompt "Capture succeeded" is displayed. When an action performed by the user is incorrect, or when action execution by the user times out, a prompt "Capture failed" is displayed.

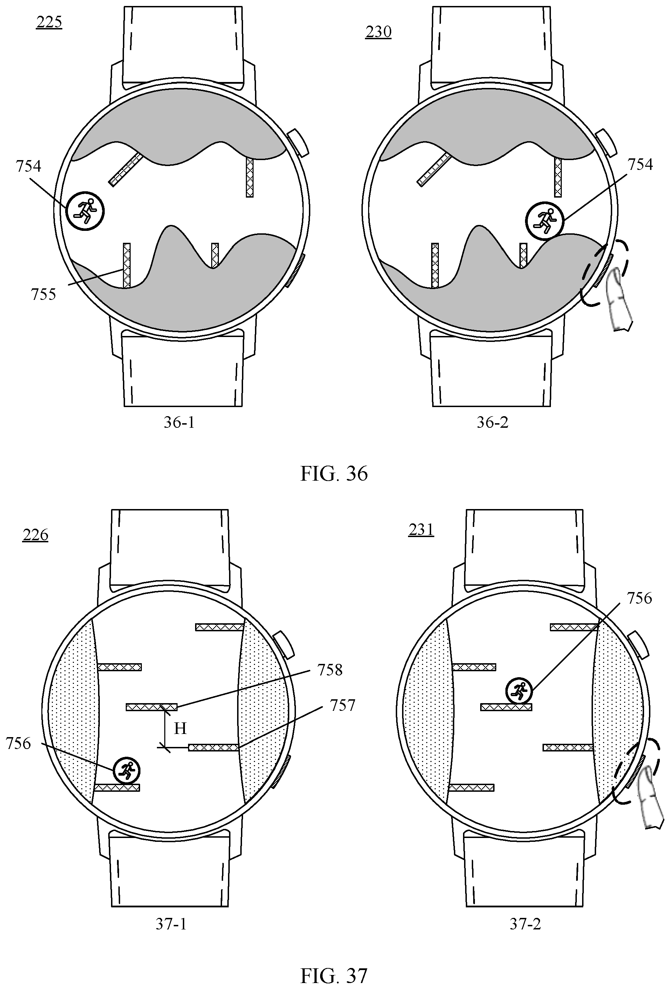

For example, FIG. 36 may show an interface 225 of an app3. The app3 may be understood as a game application that is based on detection of a pressure signal (or an optical signal, a capacitance signal, an elastic wave signal, or the like) on the button module 10. The app3 may be used as an example of the foregoing bouncing game application.

For example, the interface 225 may include an active control 754, and the electronic device may convert strength of the pressure signal, or the like detected by the button module 10 into a movement height of the active control 754. Alternatively, the electronic device may convert the swipe distance of the swipe operation detected by the button module 10 into a movement height of the active control 754. The interface 225 may further include an obstacle control 755, and the obstacle control 755 may have a specific height. In a possible case, the height of the obstacle control 755 may correspond to a to-be-detected target operation. For example, an obstacle with a height of h111 corresponds to a light tap operation, and an obstacle with a height of h112 corresponds to a heavy tap operation, where h111 is less than h112. For another example, an obstacle with a height of h113 corresponds to a short swipe operation, and an obstacle with a height of h114 corresponds to a long swipe operation, where h113 is less than h114.

In some examples, the user may perform usage training on button module 10, for example, control the movement height of the control 754 by controlling a magnitude of the action force of pressing the button module 10 or controlling the swipe distance on the button module 10, so as to avoid different obstacles.

For example, FIG. 37 may show an interface 226 of an app4. The app4 may be understood as a game application that is based on detection of an optical signal (for example, a pressure signal, a capacitance signal, and an elastic wave signal) on the button module 10. The app3 may be used as another example of the foregoing bouncing game application.

For example, the interface 226 may include an active control 756, and the electronic device may convert strength of the optical signal, or the like detected by the button module 10 into a movement height of the active control 756. Alternatively, the electronic device may convert the swipe distance of the swipe operation detected by the button module 10 into a movement height of the active control 756. The interface 226 may further include a control 757 (or a step 757) and a control 758 (or a step 758), and there is a specific height difference H between the control 757 and the control 758. In a possible case, the height difference H may correspond to a to-be-detected target operation. For example, when a value of the height difference H is h13, the height difference H may correspond to a light tap operation. When a value of the height difference H is h14, the height difference H may correspond to a heavy tap operation, and h13 is less than h14. For another example, when a value of the height difference H is h15, the height difference H may correspond to a short swipe operation. When a value of the height difference H is h16, the height difference H may correspond to a long swipe operation, and h15 is less than h16.

In some examples, the user may perform usage training on the button module 10, for example, control the movement height of the control 756 by controlling a magnitude of the action force of pressing the button module 10 or controlling the swipe distance on the button module 10, so as to jump between different steps (for example, the step 757 and the step 758).

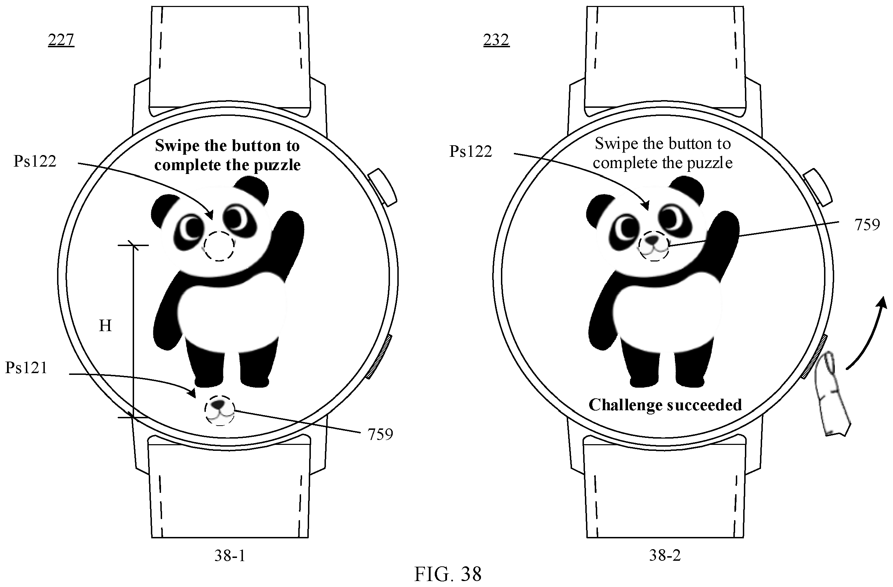

For example, FIG. 38 may show an interface 227 of an app5. The app5 may be understood as a game application that is based on detection of a movement distance of an operation of swiping the button module 10.

For example, the interface 227 may include an active control 759, and the electronic device may convert a movement distance that is of a swipe operation on a contact surface and that is detected by the button module 10 into a movement distance of the active control 759. Before the user operation, the active control 759 may be located at an initial position Ps121, and the user may move the active control 759 from the initial position Ps121 to a target position Ps122 by swiping the button module 10. In a possible case, a distance H between the initial position Ps121 and the target position Ps122 may correspond to a to-be-detected target operation. For example, the distance H may correspond to a shortest movement distance of a swipe operation that can be identified by the electronic device.

S302: The electronic device accepts a user operation performed on the button module 10.

In some examples, the user operation may be understood as an operation performed by the user based on the information on the interface 821. For example, the user operation may be a light tap operation performed in combination with the interface 223 in FIG. 34. For example, the user operation may be a heavy tap operation performed in combination with the interface 225 in FIG. 36. For example, the user operation may be an operation of upward swiping the button module 10 performed in combination with the interface 227 in FIG. 38.

It may be understood that there may be a deviation between the user operation herein and the target operation, in other words, the user operation herein may not be identified by the electronic device as the target operation. For example, pressure applied to the button module 10 when the user performs a light tap operation is excessively high, duration applied to the button module 10 when the user performs a heavy tap operation is excessively short, and a swipe distance when the user swipes the button module 10 upward is excessively short.

S303: The electronic device detects a signal Sga and/or a signal Sgc corresponding to the user operation.

Herein, the signal Sga and/or the signal Sgc may be used to identify a button event, and the button event is generated by the user operation in S302. In other words, the signal Sga and/or the signal Sgc herein may be used to identify the user operation in S302.

In some examples, the signal Sga and the signal Sgc may be any one of the following signals: a pressure signal, an optical signal, an elastic wave signal, a capacitance signal, and the like. For detailed descriptions of identifying the button event based on the signal Sga and the signal Sgc, refer to the foregoing content. Details are not described herein again.

S304: The electronic device displays information 815, where the information 815 indicates whether a target operation is detected.

In a possible case, the electronic device identifies, based on the signal Sga and/or the signal Sgc, that the user operation in S302 is the target operation. In this case, the electronic device may display the information 815 indicating that the target operation is detected.

In a possible case, the electronic device identifies, based on the signal Sga and/or the signal Sgc, that the user operation in S302 is not the target operation. In this case, the electronic device may display the information 815 indicating that no target operation is detected.

For example, in combination with the interface 223 and an interface 228 in FIG. 34, when the user presses the button module 10 with pressure F, if a magnitude of the pressure F is within a value range of pressure corresponding to the light tap operation, the electronic device may highlight the control 752A indicating the light tap operation, to indicate that the light tap operation is detected. If the magnitude of the pressure F does is not within the value range of pressure corresponding to the light tap operation (for example, less than a lower limit of the value range of the pressure corresponding to the light tap operation), the electronic device may not highlight the control 752A indicating the light tap operation, to indicate that no light tap operation is detected. Similarly, when the swipe distance of the user swipe operation is within a distance range, the electronic device may highlight the control 752B indicating the swipe operation, to indicate that the swipe operation is detected. When the swipe distance of the user swipe operation is not within the distance range, the electronic device may not highlight the control 752B indicating the swipe operation, to indicate that no swipe operation is detected.

For example, in combination with the interface 224 and an interface 229 in FIG. 35, when the time interval between two taps of the user on the button module 10 is within a range of a time interval between two taps of the user on the button module 10 in the double-tap operation, the electronic device may display a "Smile expression", to indicate that the double-tap operation is detected. When the time interval between two taps of the user on the button module 10 is not within the range of the time interval, the electronic device may display a "Cry expression", to indicate that no double-tap operation is detected. Similarly, when the swipe distance of the user swipe operation is within a distance range, the electronic device may display a "Smile expression", to indicate that the swipe operation is detected. When the swipe distance of the user swipe operation is not within the distance range, the electronic device may display a "Cry expression", to indicate that no swipe operation is detected.

For example, in combination with the interface 225 and an interface 230 in FIG. 36, when the user presses the button module 10 with pressure F, if a magnitude of the pressure F is within a value range of pressure corresponding to the heavy tap operation, the electronic device may not display a text similar to "Challenge failed", to indicate that the heavy tap operation is detected. When the magnitude of the pressure F is not within the value range of pressure corresponding to the heavy tap operation (for example, less than a lower limit of the value range of pressure corresponding to the heavy tap operation), the electronic device may display a text similar to "Challenge failed", to indicate that no heavy tap operation is detected. Similarly, when the swipe distance of the user swipe operation is within a distance range, the electronic device may not display a text similar to "Challenge failed", to indicate that the swipe operation is detected. When the swipe distance of the user swipe operation is within the distance range, the electronic device may display a text similar to "Challenge failed", to indicate that no swipe operation is detected.

For example, in combination with the interface 226 and an interface 231 in FIG. 37, when the user presses the button module 10 with the pressure F, if the magnitude of the pressure F is within a value range of a pressure corresponding to the light tap operation, the electronic device may not display a text similar to "Challenge failed", to indicate that the light tap operation is detected. When the magnitude of the pressure F is not within the value range of the pressure corresponding to the light tap operation (for example, less than a lower limit of the value range of the pressure corresponding to the light tap operation), the electronic device may display a text similar to "Challenge failed", to indicate that no light tap operation is detected. Similarly, when the swipe distance of the user swipe operation is within a distance range, the electronic device may not display a text similar to "Challenge failed", to indicate that the swipe operation is detected. When the swipe distance of the user swipe operation is within the distance range, the electronic device may display a text similar to "Challenge failed", to indicate that no swipe operation is detected.

For example, in combination with the interface 227 and an interface 232 in FIG. 38, when the user moves the active control 759 to the target position Ps122 by swiping the button module 10, the electronic device may display a text similar to "Challenge succeeded", to indicate that a swipe-up operation is detected. When the user moves the active control 759 to another position other than the target position Ps122 by swiping the button module 10, the electronic device may display a text similar to "Challenge failed", to indicate that no swipe-up operation is detected.

The electronic device may provide a plurality of interaction manners that can be used to assist the user in getting familiar with a function of the button module 10. While implementing the function of the button module 10, the electronic device further enhances fun of a process in which the user gets familiar with the function, and enhances user experience.

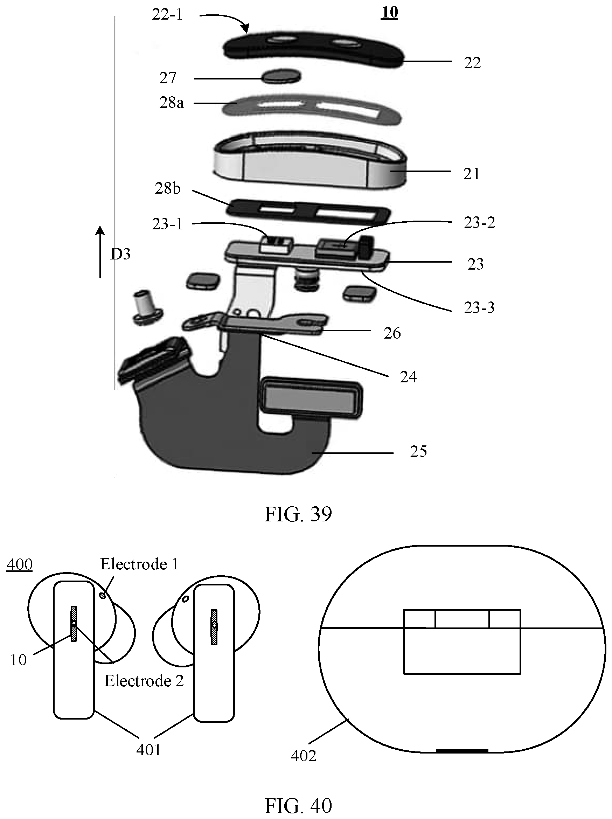

FIG. 39 is a diagram of a structure of the button module 10 according to an embodiment of this application. In some examples, the button module 10 may include a bracket 21, a glass cover 22, a PPG sensor 23, a pressure sensor 24, and a circuit board 25.

For example, the bracket 21 may be configured to fasten a plurality of mechanical parts included in the button module 10, for example, the glass cover 22, the PPG sensor 23, the pressure sensor 24, and the circuit board 25. For example, the bracket 21 may be made of a polymer material with a small density, which can reduce an overall weight of the button module 10 to a specific extent.

For example, the glass cover 22, the PPG sensor 23, the pressure sensor 24, and the circuit board 25 may be sequentially stacked in a thickness direction D3 of the button module 10. In other words, the glass cover 22 may be on an outermost side of the button module 10, and is configured to be in contact with a finger of a user, and the like. The PPG sensor 23 may be disposed close to the glass cover 22, the pressure sensor 24 may be located on a side that is of the PPG sensor 23 and that is far away from the glass cover 22, and the circuit board 25 may be located on a side that is of the pressure sensor 24 and that is far away from the PPG sensor 23.

In some examples, a conductive coating 22-1 may be disposed on a surface that is of the glass cover 22 and that is far away from the PPG sensor 23. The conductive coating 22-1 may be used as a part of the detection module 12 described above, in other words, the conductive coating 22-1 may be used as an electrode of an ECG sensor or a bioimpedance sensor. For example, to reduce adverse impact of the conductive coating 22-1 on light emitted by the PPG sensor 23, the conductive coating 22-1 may be made of a conductive material whose light transmittance is greater than or equal to a transmittance threshold (for example, 95%), for example, indium tin oxide.

In some examples, the PPG sensor 23 may include a light-emitting diode 23-1, a photodiode 23-2, and a circuit board 23-3. The light-emitting diode 23-1 may be configured to emit light used to monitor physiological data of the user, the photodiode 23-2 may be configured to receive the foregoing light reflected by a human body, and the circuit board 23-3 may be electrically connected to the foregoing light-emitting diode 23-1 and the foregoing photodiode 23-2, and is configured to control the two electronic components.

In some examples, the button module 10 may further include a strain steel sheet 26. The strain steel sheet 26 may be located below the circuit board 23-3. When the user operates the button module 10, the strain steel sheet 26 may play a support role. When the user presses the button module 10 or the like, the strain steel sheet 26 may deform. For example, the pressure sensor 24 may be attached to a surface that is of the strain steel sheet 26 and that is far away from the circuit board 23-3, and the pressure sensor 24 may detect a deformation amount of the strain steel sheet 26, to determine a value of pressure applied by the user to the button module 10.

In some examples, one end of the circuit board 25 may be electrically connected to an electronic component (for example, the circuit board 23-3) in the button module 10, and the other end of the circuit board 25 may include one or more interfaces. The interface may be electrically connected to a mainboard, or the like of the electronic device.

In some examples, the button module 10 may further include a Fresnel film 27. The Fresnel film 27 may be located on a side that is of the light-emitting diode 23-1 and that faces the glass cover 22, and the Fresnel film 27 may be configured to adjust a propagation path of the light emitted by the light-emitting diode 23-1.

In some examples, the button module 10 may further include one or more bonding layers. These bonding layers may be used to fasten a plurality of mechanical parts in the button module 10. For example, the button module 10 may include a bonding layer 28a and a bonding layer 28b. The bonding layer 28a may be located on a side that is of the glass cover 22 and that faces the PPG sensor 23, and the bonding layer 28a may be used to fasten the glass cover 22 to the bracket 21. The bonding layer 28b may be located on a side that is of the PPG sensor 23 and that faces the glass cover 22, and the bonding layer 28b may be used to fasten the PPG sensor 23 to the bracket 21.

When the button module 10 is a mechanical button, the button module 10 may further include an elastic mechanical part, for example, a button bowl or a spring. When the user presses the button module 10, the elastic mechanical part may deform after being subject to a force. When the button module 10 is a touch button, the button module 10 may further include a motor. When the user touches the button module 10, the motor may vibrate in a preset manner to feed back a touch operation of the user.

As shown in FIG. 40, an embodiment of this application further provides a wireless headset 400. The wireless headset 400 may include a headset body 401 and a headset box 402. The headset box 402 may be configured to: accommodate the headset body 401 and charge the headset body 401. At least one of two headset bodies 401 may include the foregoing button module 10. The user may adjust volume of the headset 400, change a track currently played by the headset 400, answer or hang up a call, and the like through the button module 10.

In an implementation, the button module 10 may include the detection module 12 described above. One of two electrodes of the detection module 12 may be located on a contact surface of the button module 10, and the other electrode of the detection module 12 may be located at another position on a surface of the headset 400. In a possible case, the headset 400 can detect an electrocardiosignal of the user through the detection module 12, and the headset 400 can also identify whether the button module 10 is accidentally touched.

In some examples, the headset 400 may further include one or more of electronic components such as a speaker, a microphone, a battery, a circuit board, and an antenna. This is not limited in this application.

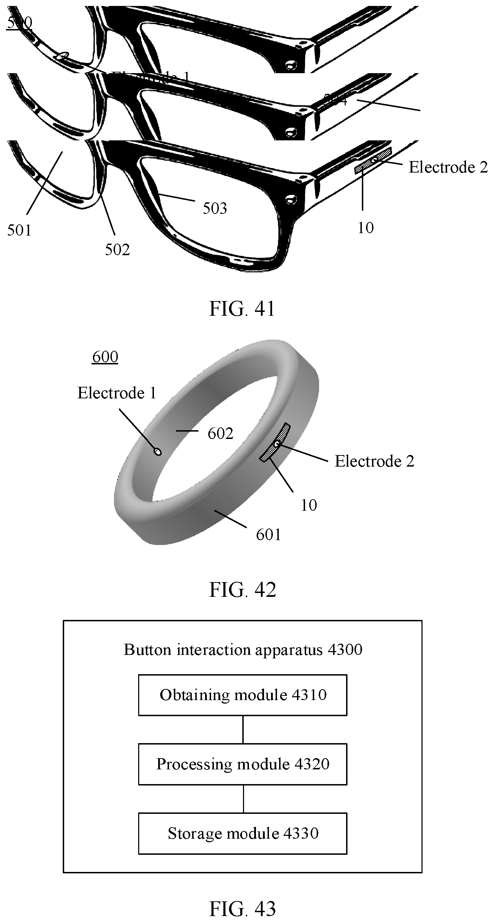

As shown in FIG. 41, an embodiment of this application further provides glasses 500. The glasses 500 may include components such as a lens 501, a lens frame 502, a nose pad 503, and a frame temple 504. The glasses 500 may further include the button module 10 described above. The button module 10 may be located at a position that is in the lens frame 502 or the frame temple 504 of the glasses 500 and that is convenient for a user to press or touch. For example, the glasses 500 may be configured to play an audio and make a call. In this case, the user may adjust audio playing volume through the button module 10, change a track currently played by the glasses 500, answer or hang up a call, and the like.

In an implementation, the button module 10 may include the detection module 12 described above. One of the two electrodes of the detection module 12 may be located on a contact surface of the button module 10, and the other electrode of the detection module 12 may be located at a position that is inside the frame temple 504 and that is in contact with head skin of the user, or the other electrode may be located on a side that is of the nose pad 503 and that faces the nose of the user. In a possible case, the glasses 500 can detect an electrocardiosignal of the user through the detection module 12, and the glasses 500 can also identify whether the button module 10 is accidentally touched.

In some examples, the glasses 500 may further include one or more of electronic components such as a camera, a speaker, a microphone, a battery, a circuit board, and an antenna. This is not limited in this application.

As shown in FIG. 42, an embodiment of this application further provides a ring 600. The ring 600 may include the button module 10 described above. For example, the button module 10 may be located at a position that is on an outer side of the ring 600 and that is convenient for a user to press or touch, for example, on an outer wall 601 of the ring 600.

In an implementation, the button module 10 may include the detection module 12 described above. One of the two electrodes of the detection module 12 may be located on a contact surface of the button module 10, and the other electrode of the detection module 12 may be located on an inner wall 602 of the ring 600. When the user wears the ring 600, the electrode located on the inner wall 602 may be in contact with skin of a finger of the user. In a possible case, the ring 600 can detect an electrocardiosignal of the user through the detection module 12, and the ring 600 can also identify whether the button module 10 is accidentally touched.

In some examples, the ring 600 may further include one or more of electronic components such as an accelerometer, a magnetometer, a battery, a circuit board, and an antenna. This is not limited in this application.

Based on a same inventive concept, as shown in FIG. 43, an embodiment of this application further provides a button interaction apparatus 4300. The apparatus 4300 may have a function of the electronic device in the foregoing method embodiments, and may be configured to perform steps performed by the electronic device in the foregoing method embodiments. The function may be implemented by hardware, or may be implemented by software or hardware executing corresponding software. The hardware or the software includes one or more modules corresponding to the function.

In a possible implementation, the button interaction apparatus 4300 may include an obtaining module 4310 and a processing module 4320. The obtaining module 4310 and the processing module 4320 are coupled to each other.

In some examples, the obtaining module 4310 may be configured to support operations such as detecting a signal Sga, a signal Sgc, and the like by the electronic device in the foregoing embodiments.

The processing module 4320 is configured to support the electronic device in performing a processing action in the foregoing method embodiments, for example, identifying an operation type based on a detected signal.

Optionally, the button interaction apparatus 4300 may further include a storage unit 4330, configured to store program code and data of the button interaction apparatus 4300.

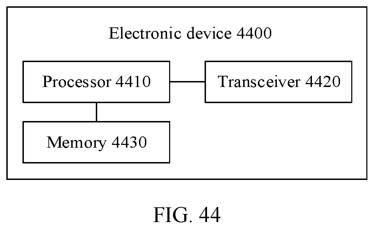

FIG. 44 shows an electronic device 4400 according to an embodiment of this application. As shown in the figure, the electronic device 4400 includes at least one processor 4410 and a transceiver 4420. The processor 4410 is coupled to a memory, and is configured to execute instructions stored in the memory, to control the transceiver 4420 to send a signal and/or receive a signal.

Optionally, the electronic device 4400 further includes a memory 4430, configured to store instructions.

In some embodiments, the processor 4410 and the memory 4430 may be integrated into one processing apparatus, and the processor 4410 is configured to execute program code stored in the memory 4430 to implement the foregoing functions. During specific implementation, the memory 4430 may alternatively be integrated into the processor 4410, or may be independent of the processor 4410.

In some embodiments, the transceiver 4420 may include a receiver (or referred to as a receiving machine) and a transmitter (or referred to as a transmitting machine).

The transceiver 4420 may further include an antenna, and there may be one or more antennas. The transceiver 4420 may be a communication interface or an interface circuit.

When the electronic device 4400 is a chip, the chip includes a transceiver module and a processing module. The transceiver module may be an input/output circuit or a communication interface. The processing module may be a processor, a microprocessor, or an integrated circuit integrated on the chip.

This embodiment further provides a computer-readable storage medium. The computer-readable storage medium stores computer instructions. When the computer instructions are run on an electronic device, the electronic device is enabled to perform the foregoing related method steps to implement the button interaction method in the foregoing embodiments.

An embodiment further provides a computer program product. When the computer program product runs on a computer, the computer is enabled to perform the foregoing related steps, to implement the button interaction method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the button interaction method in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the detection unit is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A button interaction method, applied to an electronic device, wherein the electronic device comprises a button module, the button module comprises a first sensor comprising one first sensing element, and the method comprises:
receiving a first operation performed on the button module;
detecting a first signal through the first sensing element;
determining, based on the first signal, that the first operation is a swipe operation; and
performing a response operation, wherein the response operation corresponds to the swipe operation.

2. The method according to claim 1, wherein determining, based on the first signal, that the first operation is the swipe operation comprises:
determining, based on reference strength of the first signal, measured strength of the first signal, and a change in the measured strength of the first signal, that the first operation is the swipe operation, wherein the reference strength is strength of the first signal when a user does not operate the button module.

3. The method according to claim 1 or 2, wherein the first sensing element comprises a sending module and a receiving module, the sending module and the receiving module are disposed separately, the sending module is configured to send a reference signal, the receiving module is configured to receive the first signal, and the reference signal corresponds to the first signal.

4. The method according to claim 3, wherein determining, based on the first signal, that the first operation is the swipe operation comprises:
determining, based on a position of the sending module, a position of the receiving module, and the first signal, that the first operation is the swipe operation.

5. The method according to any one of claims 1 to 4, wherein the button module further comprises a second sensor; and
determining, based on the first signal, that the first operation is the swipe operation comprises:
determining, based on the second signal and the first signal, that the first operation is the swipe operation, wherein the second signal is detected through the second sensor, and the second signal and the first signal are signals of different types.

6. The method according to claim 5, wherein determining, based on the second signal and the first signal, that the first operation is the swipe operation comprises:
when the measured strength of the first signal first increases and then decreases and measured strength of the second signal first increases and then decreases within first duration, determining that the first operation is the swipe operation.

7. The method according to any one of claims 1 to 6, wherein the button module further comprises a third sensor, the third sensor comprises a plurality of electrodes, one electrode of the third sensor is located on a contact surface of the button module, and the method further comprises:
detecting an electrocardiosignal and/or a bioimpedance signal through the third sensor; and
when the electrocardiosignal meets a first preset requirement and/or the bioimpedance signal meets a second preset requirement, determining that the first operation is detected.

8. The method according to any one of claims 1 to 7, wherein the button module comprises a first function mode and a second function mode, the first function mode is used to detect the swipe operation, the second function mode is used to detect a user operation different from the swipe operation, and the method further comprises:
accepting a first switching operation; and
switching the button module from the first function mode to the second function mode; and/or accepting a second switching operation; and
switching the button module from the second function mode to the first function mode.

9. The method according to claim 8, wherein the first function mode is further used to detect a first-type tap operation, the second function mode is used to detect a second-type tap operation, and the first-type tap operation is different from the second-type tap operation.

10. The method according to any one of claims 1 to 9, wherein the electronic device further comprises a knob and/or a first button, the first button is different from the button module, and the method further comprises:
when the button module is swiped to implement a first function, setting rotation of the knob to implement a second function; and/or
when the button module is swiped to implement the first function, setting swiping of the first button to implement the second function, wherein
the first function is different from the second function.

11. The method according to any one of claims 1 to 10, wherein the method further comprises:
accepting a second operation performed on the button module, wherein the second operation comprises the swipe operation; and
performing one or more of the following: displaying a target interface; playing a target audio; and vibrating a motor.

12. The method according to claim 11, wherein the second operation comprises a press action and a release action, and vibrating the motor comprises:
vibrating the motor in a first manner in response to the press action; and/or
vibrating the motor in a second manner in response to the release action.

13. The method according to claim 12, wherein the second operation further comprises a first action, the first action is after the press action and before the release action, the first action is different from the press action or the release action, and vibrating the motor further comprises:
vibrating the motor in a third manner in response to the first action.

14. The method according to claim 12 or 13, wherein the first manner comprises at least one of the following: a first vibration waveform, first vibration duration, first vibration intensity, and a first vibration interval, and the second manner comprises at least one of the following: a second vibration waveform, second vibration duration, second vibration intensity, and a second vibration interval.

15. The method according to any one of claims 11 to 14, wherein playing the target audio comprises:
playing the target audio in a fourth manner, wherein the fourth manner is determined based on at least one of an operation force, operation time, and an operation quantity of the second operation.

16. The method according to claim 15, wherein the fourth manner comprises at least one of the following: first loudness, first play duration, and a first waveform, wherein
the first loudness corresponds to the operation force, the first play duration corresponds to the operation time, and the first waveform corresponds to the operation quantity.

17. The method according to any one of claims 1 to 16, wherein detecting the first signal through the first sensing element comprises:
detecting the first signal at a first frequency through the first sensing element; and
when strength of the first signal is greater than or equal to a strength threshold, detecting the first signal at a second frequency through the first sensing element, wherein
the second frequency is higher than the first frequency.

18. The method according to any one of claims 1 to 17, wherein the method further comprises:
accepting a third operation performed on the button module;
monitoring physiological data of the user, wherein the physiological data comprises one or more of the following: blood pressure, blood glucose, blood oxygen, a heart rate, uric acid, emotional pressure, a body temperature, a respiratory rate, and a blood oxygen content; and
displaying a first interface, wherein the first interface comprises a monitoring result of the physiological data.

19. The method according to any one of claims 1 to 18, wherein the method further comprises:
accepting a fourth operation performed on the button module; and
displaying a second interface, wherein the second interface comprises a screenshot of the electronic device.

20. An electronic device, comprising a processor and a memory, wherein the memory stores program instructions, and the processor is configured to execute the program instructions, so that the electronic device implements the method according to any one of claims 1 to 19.

21. The electronic device according to claim 20, wherein the electronic device is any one of the following: a headset, glasses, a ring, a watch, and a band.

22. An apparatus, comprising a button module configured to implement the method according to any one of claims 1 to 19.

23. A computer-readable storage medium, wherein the computer-readable storage medium stores a computer program, and when the computer program is executed by a computer, the method according to any one of claims 1 to 19 is implemented.

24. A computer program product, comprising computer program code, wherein when the computer program code is run on a computer, the method according to any one of claims 1 to 19 is performed.

25. A chip, comprising a processor and a memory, wherein the memory stores program instructions, and the processor is configured to execute the program instructions, so that the electronic device implements the method according to any one of claims 1 to 19.
